# EUROPÄISCHE PATENTSCHRIFT

(11) **EP 2 053 113 B1**
(45) Veröffentlichungstag und Bekanntmachung des Hinweises auf die Patenterteilung: **13.04.2011**
(21) Anmeldenummer: 08017403.0
(22) Anmeldetag: 02.10.2008
(51) Int. Cl.: C09K 19/42, C09K 19/44, C09K 19/12, C09K 19/32

(54) **Flüssigkristallines Medium**
Liquid crystalline medium
Milieu liquide cristallin

(30) Priorität: 22.10.2007 DE 102007050262
(43) Veröffentlichungstag der Anmeldung: 29.04.2009
(73) Patentinhaber: Merck Patent GmbH, 64293 Darmstadt (DE)
(72) Erfinder: Bernatz, Georg, Dr., 64289 Darmstadt (DE); Taugerbeck, Andreas, Dr,, 64285 Darmstadt (DE); Bremer, Matthias, Dr., 64295 Darmstadt (DE); Goetz, Achim, 64665 Alsbach-Hähnlein (DE)

(56) Entgegenhaltungen:
- EP-A- 1 378 557
- EP-A- 1 498 468
- EP-A- 1 559 745
- EP-A- 1 626 079
- EP-A- 1 627 905
- DE-A1- 10 229 828
- DE-A1-102005 024 400
- DE-A1-102005 027 763
- GB-A- 2 379 931
- JP-A- 10 036 847
- US-A1- 2004 191 428
- US-B1- 6 177 972

## Beschreibung

Die vorliegende Erfindung betrifft Flüssigkristall (FK)-Medien enthaltend polymerisierbare Verbindungen, insbesondere zur Verwendung in FK-Anzeigen des PS- (polymer stabilized) oder PSA- (polymer sustained alignment) Typs, sowie PS(A)-Anzeigen enthaltend solche FK-Medien.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf.

Daneben sind sogenannte VA-Anzeigen (vertical alignment) bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt.

Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten.

Weiterhin sind IPS-Anzeigen (In-Plane-Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert. In den sogenannten MVA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Ein Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt. Beim sogenannten PVA (Patterned VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS-Anzeigen (polymer stabilized) dar, die auch unter dem Begriff "PSA" (polymer sustained alignment) bekannt sind. Darin wird dem FK-Medium eine geringe Menge (zum Beispiel 0.3 Gew.%, typischerweise <1 Gew.%) einer polymerisierbaren Verbindung zugesetzt, welche nach Einfüllen in die FK-Zelle bei angelegter elektrischer Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen.

Mittlerweile wird das PS- bzw. PSA-Prizip in diversen klassischen FK-Anzeigen angenwendet. So sind beispielsweise PSA-VA-, PSA-OCB-, PS-IPS- und PS-TN-Anzeigen bekannt. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne Offset-Spannung auskommt oder diese reduzieren kann. Im Falle von PSA-VA-Anzeigen wirkt sich dieser Pretilt positiv auf die Schaltzeiten aus. Für PSA-VA-Anzeigen kann ein Standard-MVA- bzw -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier scheint das PS(A)-Verfahren entscheidende Vorteile zu bringen. Insbesondere beim PSA-VA kann man ohne nennenswerte Einbußen sonstiger Parameter eine Verkürzung der Schaltzeiten erreichen, die mit einem in Testzellen messbaren Pretilt korrelieren.

Es eignet sich jedoch bei weitem nicht jedes beliebige lösliche RM zur Verwendung in PS(A)-Anzeigen, und es ist oft schwierig, geeignetere Auswahlkriterien als eben das direkte PSA-Experiment mit pretilt-Messung zu finden. Darüber hinaus sollte das gewählte "Materialsystem" FK-Mischung (nachfolgend auch als "FK-Hostmischung" bezeichnet) + polymerisierbare Komponente eine möglichst geringe Rotationsviskosität sowie möglichst gute elektrische Eigenschaften aufweisen - hierbei ist die sog. "Voltage Holding Ratio" (HR oder VHR) hervorzuheben. Im Zusammenhang mit PSA-VA ist insbesondere eine hohe HR nach Bestrahlung mit (UV-) Licht von zentraler Bedeutung, da dies ein unverzichtbarer Teil des Prozesses ist - aber natürlich auch als "normale" Belastung im fertigen Display auftritt.

Es ergibt sich jedoch das Problem, dass bei weitem nicht alle Kombinationen FK-Mischung + polymerisierbare Komponente "funktionieren", weil sich z.B. kein oder kein ausreichender Tilt einstellt, oder weil z.B. die HR für TFT-Display-Anwendungen unzureichend ist. Insbesondere die Verwendung von niedermolekularen Verbindungen mit Alkenylgruppen als Komponenten der FK-Hostmischung kann zu solchen Problemen führen. Andererseits sind aber Alkenylverbindungen generell in FK-Medien, und auch in PS(A)-Anzeigen als Komponenten der (unpolymerisierten) FK-Hostmischung, erwünscht, weil sie niedrige Rotationsviskositäten und damit schnelle Schaltzeiten ermöglichen.

Noch kleiner wird die Auswahl, wenn eine Polymerisation mittels UV-Licht ohne den Zusatz von Photoinitiatoren gewünscht ist, was für bestimmte Anwendungen von Vorteil sein kann.

Es besteht somit immer noch ein großer Bedarf nach PS(A)-Anzeigen, insbesondere vom VA- und OCB-Typ, sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Insbesondere besteht ein großer Bedarf nach PS(A)-Anzeigen bzw. -Materialien mit einem hohen spezifischen Widerstand bei gleichzeitig großem Arbeitstemperaturbereich, kurzen Schaltzeiten auch bei tiefen Temperaturen und niedriger Schwellenspannung, die eine Vielzahl von Graustufen, einen hohen Kontrast und einen weiten Blickwinkel ermöglichen, sowie hohe Werte der "voltage holding ratio" (HR) nach UV-Belastung aufweisen.

Der Erfindung lag die Aufgabe zugrunde, PS(A)-Anzeigen bereitzustellen, welche die oben angegebenen Nachteile nicht oder nur in geringerem Maße aufweisen, die Einstellung eines Pretilt-Winkels ermöglichen und vorzugsweise gleichzeitig sehr hohe spezifische Widerstände, niedrige Schwellenspannungen und niedrige Schaltzeiten besitzen.

Überraschend wurde nun gefunden, dass diese Aufgabe gelöst werden kann, indem man erfindungsgemäße PS(A)-Anzeigen verwendet, in denen die polymerisierbare Komponente des FK-Mediums (RM) aus Verbindungen mit Methacrylatgruppen besteht, und die niedermolekulare Komponente ("FK-Hostmischung") eine oder mehrere Alkenylverbindungen enthält. Es wurde gefunden, dass sich für FK-Medien, die Alkenylverbindungen enthalten, bei Verwendung von polymerisierbaren Komponenten mit Methacrylatgruppen zum einen sehr gute Werte in der HR, insbesondere nach UV-Belastung, ergeben und zum anderen sehr gute Tilt-Werte erreicht werden können. Durch die Verwendung von Alkenylverbindungen in der FK-Hostmischung kann man außerdem geringere Rotationsviskositäten und dadurch sehr kurze Schaltzeiten der FK-Mischung erreichen. Diese Materialkombination ist deshalb besonders gut für eine Verwendung in TFT-PSA-VA-Anzeigen geeignet. Insbesondere zeigen FK-Hostmischungen mit verschiedenen Alkenylverbindungen bei Zusatz von Methacrylat-RMs sehr ähnliche, gute Tilts für eine große Bandbreite verschiedener spezifischer Alkenylverbindungen. Im Gegensatz dazu zeigen dieselben FK-Hostmischungen bei Zusatz beispielsweise von Acrylat-RMs deutlich schlechtere HR(UV)-Werte und darüber hinaus eine reduzierte, oder teilweise sogar vollständig unterdrückte Tilt-Generation.

EP 1 626 079 A1 A und GB 2 379 931 A offenbaren reaktive mesogene Cylohexylverbindungen zur Verwendung in polymerisierbaren FK-Mischungen und FK-Polymerfilmen. EP 1 627 905 A1 offenbart reaktive mesogene Di(meth)acrylate zur Verwendung in polymerisierbaren FK-Mischungen und FK-Polymerfilmen. EP 1 559 745 A1 offenbart polymerisierbare Mischungen enthaltend reaktive FK-Verbindungen und Cellulosederivate zur Verwendung in Retardationsfilmen. DE 10 2005 027 763 A1 offenbart ein FK-Medium mit positiver dielektrischer Anisotropie. DE 10 2005 024 400 A1 offenbart ein nematisches FK-Polymer. DE 102 29 828 A1 offenbart ein FK-Medium mit negativer dielektrischer Anisotropie. Die in der vorliegenden Anmeldung beanspruchten FK-Medien oder deren Verwendung in PSA-Anzeigen werden durch diese Dokumente jedoch nicht offenbart oder nahegelegt.

Gegenstand der Erfindung ist ein Flüssigkristall- (FK)-Medium enthaltend eine oder mehrere polymerisierbare Verbindungen, wobei alle im FK-Medium vorhandenen polymerisierbaren Verbindungen ausschließlich Methacrylatgruppen als polymerisierbare Gruppen aufweisen, sowie eine oder mehrere mesogene oder flüssigkristalline Verbindungen mit einer oder mehreren Alkenylgruppen, welche gegenüber einer Polymerisationsreaktion unter den zur Polymerisation der Methacrylatgruppen verwendeten Bedingungen stabil sind.

Weiterer Gegenstand der Erfindung ist ein FK-Medium enthaltend
- eine polymerisierbare Komponente A), enthaltend eine oder mehrere polymerisierbare Verbindungen, wobei alle im FK-Medium vorhandenen polymerisierbaren Verbindungen ausschließlich Methacrylatgruppe(n) als polymerisierbare Gruppe(n) enthalten, wie vor- und nachstehend beschrieben, sowie
- eine flüssigkristalline Komponente B) enthaltend eine oder mehrere, vorzugsweise zwei oder mehr niedermolekulare (d.h. monomere bzw. unpolymerisierte) Verbindungen, darunter mindestens eine mesogene oder flüssigkristalline Verbindung mit einer oder mehreren Alkenylgruppen, welche gegenüber einer Polymerisationsreaktion unter den zur Polymerisation der Methacrylatgruppen verwendeten Bedingungen stabil sind.

Weiterer Gegenstand der Erfindung ist die Verwendung von erfindungsgemäßen FK-Medien in FK-Anzeigen, insbesondere in PS- und PSA-Anzeigen.

Weiterer Gegenstand der Erfindung ist eine FK-Anzeige enthaltend ein erfindungsgemäßes FK-Medium, insbesondere eine PS (polymer stabilized)- oder PSA (polymer sustained alignment)-Anzeige, besonders bevorzugt eine PSA-VA-, PSA-OCB-, PS-IPS-, PS-FFS- oder PS-TN-Anzeige.

Ein weiterer Gegenstand der Erfindung ist eine FK-Anzeige des PS- oder PSA-Typs, vorzugsweise enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung,
dadurch gekennzeichnet, dass alle im FK-Medium vorhandenen polymerisierbaren Verbindungen ausschließlich Methacrylatgruppe(n) als polymerisierbare Gruppe(n) enthalten, und die niedermolekulare Komponente eine oder mehrere mesogene oder flüssigkristalline Verbindungen mit einer oder mehreren Alkenylgruppen enthält, welche gegenüber einer Polymerisationsreaktion unter den zur Polymerisation der Methacrylatgruppen verwendeten Bedingungen stabil sind.

Ein weiterer Gegenstand der Erfindung ist ein FK-Medium enthaltend eine oder mehrere polymerisierbare Methacrylatverbindungen und eine oder mehrere Alkenylverbindungen wie vor- und nachstehend beschrieben.

Besonders bevorzugt sind FK-Medien enthaltend eine, zwei oder drei polymerisierbare Methacrylatverbindungen wie vor- und nachstehend beschrieben.

Ferner bevorzugt sind achirale polymerisierbare Methacrylatverbindungen, sowie FK-Medien enthaltend, vorzugsweise ausschließlich bestehend aus, achiralen Verbindungen.

Ferner bevorzugt sind PSA-Anzeigen und FK-Medien, worin die polymerisierbare Komponente bzw. Komponente A) eine oder mehrere polymerisierbare Verbindungen mit einer Methacrylatgruppe (monoreaktiv) und eine oder mehrere polymerisierbare Verbindungen mit zwei oder mehr, vorzugsweise zwei Methacrylatgruppen (di- oder multireaktiv) enthält.

Ferner bevorzugt sind PSA-Anzeigen und FK-Medien, worin die polymerisierbare Komponente bzw. Komponente A) ausschließlich polymerisierbare Verbindungen mit zwei Methacrylatgruppen (direaktiv) enthält.

Die polymerisierbaren Verbindungen können einzeln den FK-Medien zugesetzt werden, es können aber auch Mischungen enthaltend zwei oder mehr erfindungsgemäße polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen sind mesogen oder nicht-mesogen, vorzugsweise mesogen oder flüssigkristallin.

Ferner bevorzugt sind FK-Medien, worin die niedermolekulare Komponente bzw. Komponente B) eine FK-Verbindung oder eine FK-Mischung ist, die eine nematische Flüssigkristallphase aufweist.

In einer bevorzugten Ausführungsform der Erfindung sind die polymerisierbaren Verbindungen ausgewählt aus Formel I

R^{a}-A¹-(Z¹-A²)ₘ₁-R^{b} I

worin die einzelnen Reste folgende Bedeutung haben
- A¹ und A²: jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche optional durch L ein- oder mehrfach substituiert ist,
- Z¹: bei jedem Auftreten gleich oder verschieden -O-, -S-, -CO-,-CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-,-CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung,
- L, R^{a} und R^{b}: jeweils unabhängig voneinander H, OH, Halogen, SF₅, NO₂, eine Kohlenstoffgruppe oder Kohlenwasserstoffgruppe, wobei die Verbindungen mindestens einen Rest L, R^{a} und R^{b} enthalten, der eine Gruppe P-Sp- bedeutet oder enthält,
- R⁰ und R⁰⁰: jeweils unabhängig voneinander H oder Alkyl mit 1 bis 12 C-Atomen,
- P: CH₂=C(CH₃)-COO-,
- Sp: eine Abstandsgruppe oder eine Einfachbindung,
- m1: 0, 1, 2, 3 oder 4,
- n1: 1, 2, 3 oder 4.

Besonders bevorzugte Verbindungen der Formel I sind solche, worin
- A¹ und A²: jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P-Sp-, OH, CH₂OH, F, Cl, Br, I, -CN, -NO₂, -NCO, -NCS,-OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl oder P-Sp- ersetzt sein können,
- Y¹: Halogen,
- R^{x}: P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-,-CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- R^{a} und R^{b}: jeweils unabhängig voneinander P-Sp-, H, L wie oben definiert, oder geradkettiges oder verzweigtes Alkyl mit 1 bis 25 C-Atomen, worin auch eine oder mehrere nicht benachbarte CH₂-Gruppen jeweils unabhängig voneinander durch -C(R^{x})=C(R^{x})-,-C≡C-, -N(R^{x})-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können,
bedeuten, wobei mindestens einer der Reste R^{a}, R^{b} und L mindestens eine Gruppe P-Sp- enthält.

Besonders bevorzugt sind Verbindungen der Formel I, worin einer oder beide Reste R^{a} und R^{b} P-Sp- bedeuten.

Besonders bevorzugte Verbindungen der Formel I sind aus folgenden Unterformeln ausgewählt 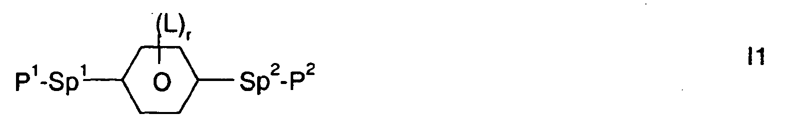 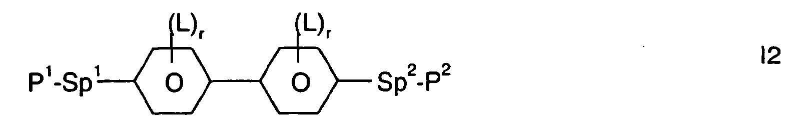 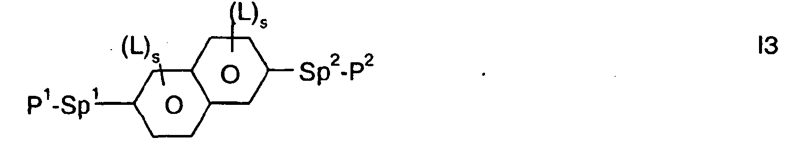 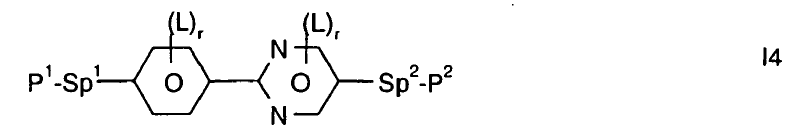 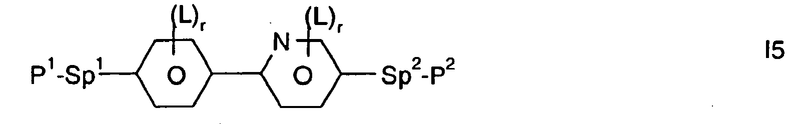 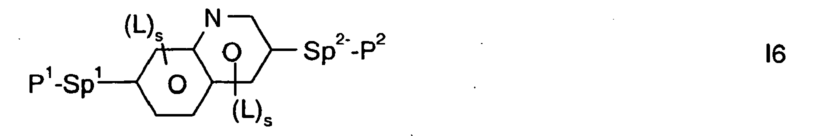 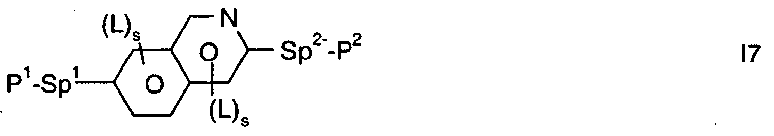 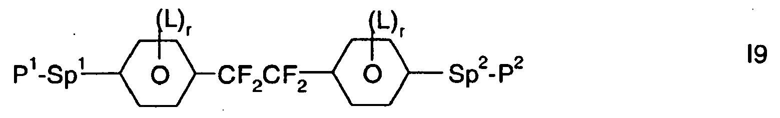 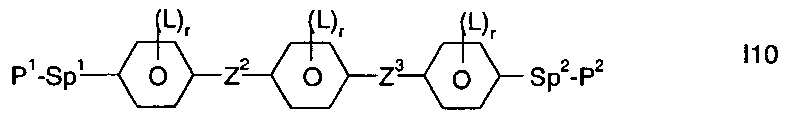 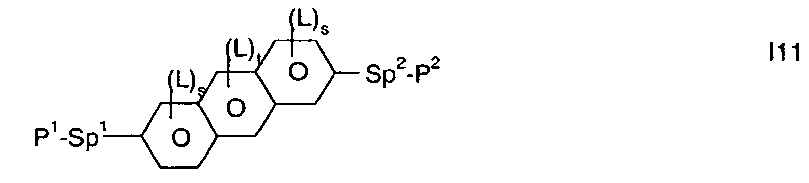 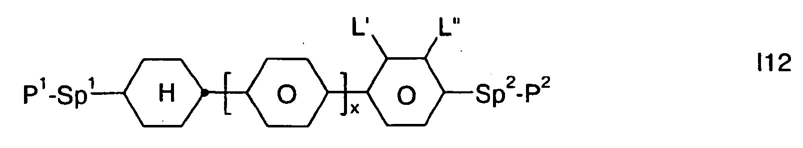 worin
- P¹und P²: die für P angegebene Bedeutung besitzen,
- Sp¹ und Sp²: eine der für Sp angegebenen Bedeutungen besitzen oder eine Einfachbindung bedeuten,
- Z² und Z³: jeweils unabhängig voneinander -COO- oder -OCO bedeuten,
- L: die oben angegebene Bedeutung besitzt,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1, und
- R^{y} und R^{z}: jeweils unabhängig voneinander H oder CH₃ bedeuten.

In einer weiteren bevorzugten Ausführungsform der Erfindung sind die polymerisierbaren Verbindungen chirale Verbindungen ausgewählt aus Formel II:

(R*-(A¹-Z¹)ₘ₁)ₖ-Q II

worin A¹, Z¹ und m1 bei jedem Auftreten gleich oder verschieden eine der in Formel I angegebenen Bedeutungen besitzen,
- R*: bei jedem Auftreten gleich oder verschieden eine der für R^{a} in Formel I angegebenen Bedeutungen besitzt,
- Q: eine k-valente chirale Gruppe bedeutet, welche optional ein- oder mehrfach mit L substituiert ist,
- k: 1, 2, 3, 4, 5 oder 6 ist,
wobei die Verbindungen mindestens einen Rest R* oder L enthalten, der eine Gruppe P-Sp- wie oben definiert bedeutet oder enthält.

Besonders bevorzugte Verbindungen der Formeln II enthalten eine monovalente Gruppe Q der Formel III 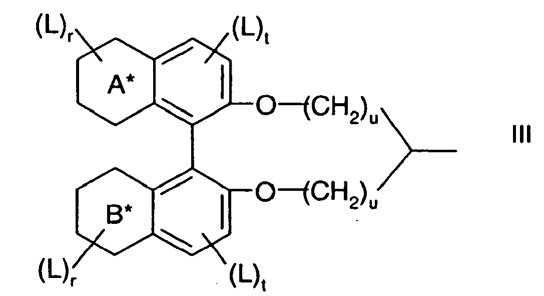 worin L und r bei jedem Auftreten gleich oder verschieden die oben angegebene Bedeutung besitzen,
- A* und B*: jeweils unabhängig voneinander anelliertes Benzol, Cyclohexan oder Cyclohexen,
- t: bei jedem Auftreten gleich oder verschieden 0, 1 oder 2, und
- u: bei jedem Auftreten gleich oder verschieden 0, 1 oder 2
bedeutet. Besonders bevorzugt sind Gruppen der Formel III, worin x 1 oder 2 bedeutet.

Weitere bevorzugte Verbindungen der Formel II enthalten eine monovalente Gruppe Q oder eine oder mehrere Gruppen R* der Formel IV 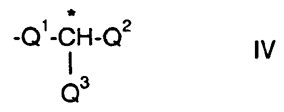 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch eine oder zwei nicht benachbarte CH₂-Gruppen durch -O-, -S-, -CH=CH-, -CO-, -OCO-, -COO-, -O-COO-, -S-CO-, -CO-S- oder-C≡C- so ersetzt sein können, dass O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel IV sind beispielsweise 2-butyl (=1-methylpropyl), 2-methylbutyl, 2-methylpentyl, 3-methylpentyl, 2-ethylhexyl, 2-propylpentyl, insbesondere 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluoroctyloxy, 2-fluordecyloxy, 1,1,1-trifluor-2-octyloxy, 1,1,1-trifluor-2-octyl, 2-fluormethyloctyloxy.

Weitere bevorzugte Verbindungen der Formel II enthalten eine bivalente Gruppe Q der Formel V 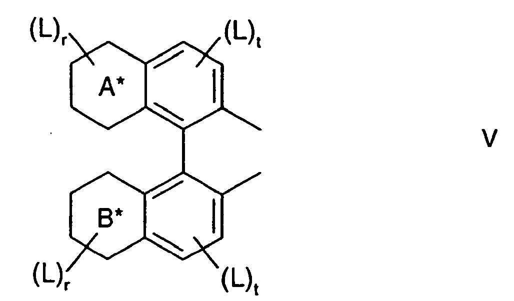 worin L, r, t, A* und B* die oben angegebene Bedeutung besitzen.

Weitere bevorzugte Verbindungen der Formel II enthalten eine bivalente Gruppe Q ausgewählt aus folgenden Formeln 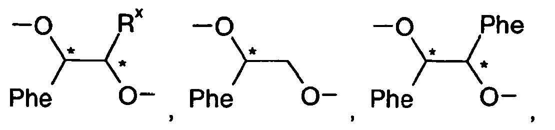 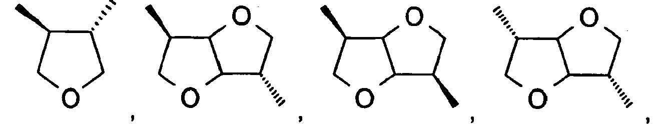 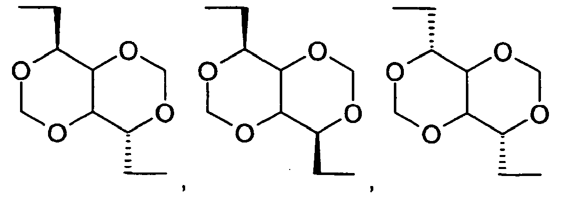 worin Phe Phenyl bedeutet, welches optional durch L ein- oder mehrfach substituiert ist, und R^{x} F oder optional fluoriertes Alkyl mit 1 bis 4 C-Atomen bedeutet.

Besonders bevorzugte Verbindungen der Formel II sind aus folgenden Unterformeln ausgewählt 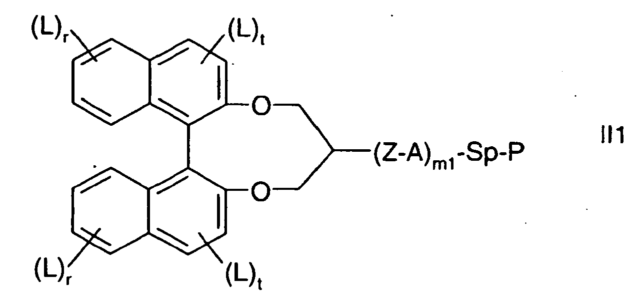 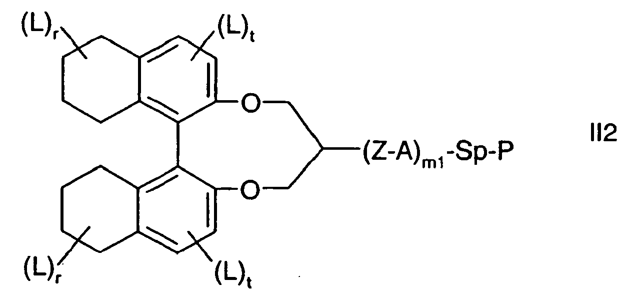 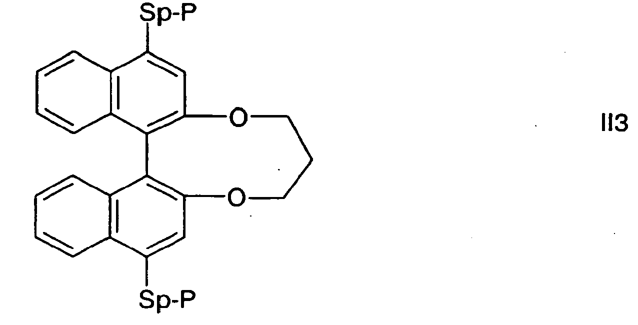 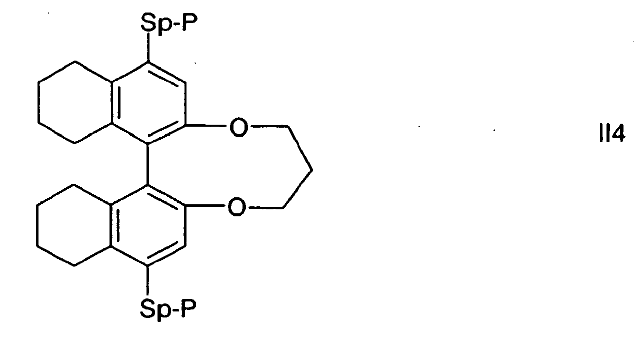 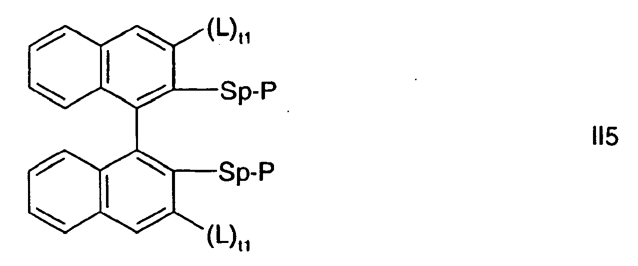 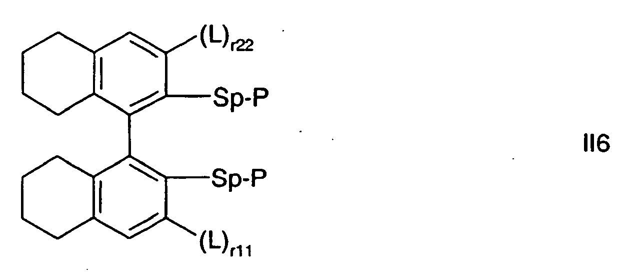 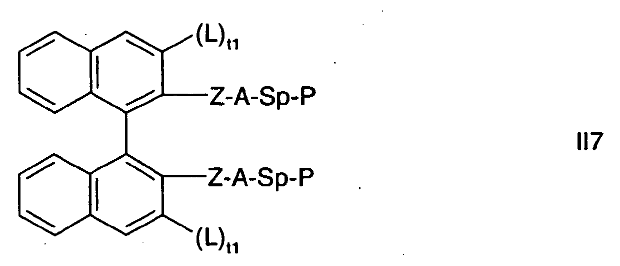 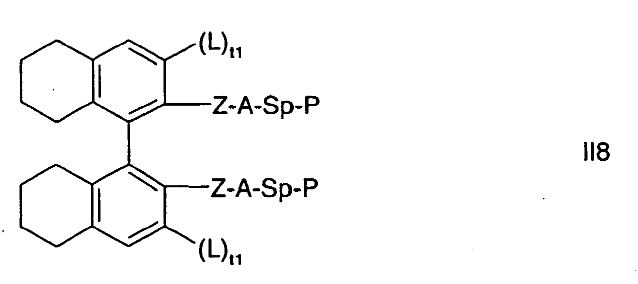 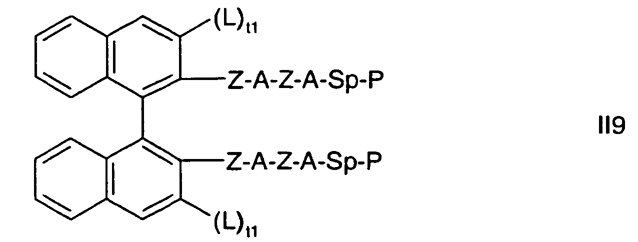 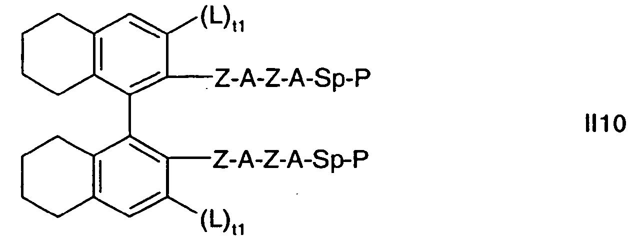 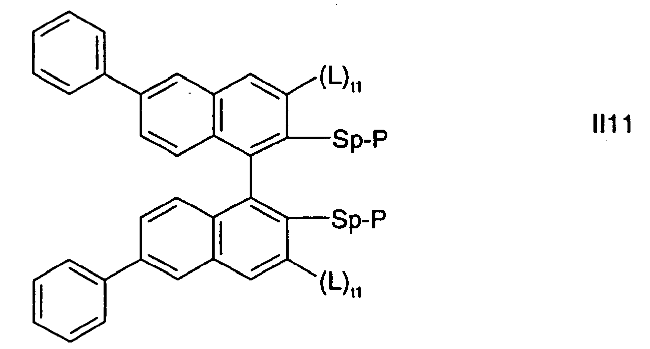 worin L, P, Sp, m1, r und t die oben angegebene Bedeutung haben, Z bzw. A bei jedem Auftreten gleich oder verschieden eine der für Z¹ bzw.
A¹ angegebenen Bedeutungen hat, und t1 bei jedem Auftreten gleich oder verschieden 0 oder 1 bedeutet.

In einer weiteren bevorzugten Ausführungsform der Erfindung enthalten die Verbindungen der Formel I und deren Unterformeln einen oder mehrere verzweigte Reste R^{a} und/oder R^{b} und/oder L mit zwei oder mehr Methacrylatgruppen (multifunktionelle polymerisierbare Reste). Geeignete Reste dieses Typs, sowie diese enthaltende polymerisierbare Verbindungen sind beispielsweise in US 7,060,200 B1 oder US 2006/0172090 A1 beschrieben. Besonders bevorzugt sind multifunktionelle polymerisierbare Reste ausgewählt aus folgenden Formeln

-X-alkyl-CHP-CH₂-CH₂P I*a

-X-alkyl-C(CH₂P)(CH₂P)-CH₂P I*b

-X-alkyl-CHPCHP-CH₂P I*c

-X-alkyl-C(CH₂P)(CH₂P)-CₐₐH₂ₐₐ₊₁ I*d

-X-al kyl-CHP-CH₂P I*e

-X-alkyl-CHPP I*f

-X-alkyl-CPP-CₐₐH₂ₐₐ₊₁ I*g

-X-alkyl-C(CH₂P)(CH₂P)-CH₂OCH₂-C(CH₂P)(CH₂P)CH₂P I*h

-X-alkyl-CH((CH₂)ₐₐP)((CH₂)_{bb}P) I*i

-x-alkyl-CHPCHP-CₐₐH₂ₐₐ₊₁ I*k

-X'-alkyl-C(CH₃)(CH₂P¹)(CH₂P²) I*m

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R^{x})=C(R^{x})-, -C≡C-, -N(R^{x})-, -O-, -S-, -CO-, -CO-O-, -O-CO-, -O-CO-O- so ersetzt sein können, dass O-und/oder S-Atome nicht direkt miteinander verknüpft sind, und worin auch ein oder mehrere H-Atome durch F, Cl oder CN ersetzt sein können, wobei R^{x} die oben angegebene Bedeutung hat und vorzugsweise R⁰ wie oben definiert bedeutet,
aa und bb bb jeweils unabhängig voneinander 0, 1, 2, 3, 4, 5 oder 6 bedeuten,
- X: eine der für X' angegebenen Bedeutungen besitzt, und
- P: CH₂=C(CH₃)-COO- bedeutet.

Vor- und nachstehend gelten folgende Bedeutungen:

Der Begriff "PSA" wird, falls nicht anders angegeben, stellvertretend für PS-Anzeigen und PSA-Anzeigen verwendet.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung ("RM") die mesogene Gruppe und die polymerisierbare(n) Gruppe(n) miteinander verbindet.

Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂ -C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O-so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino, Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7-oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Das Biarylgrundgerüst der Formel 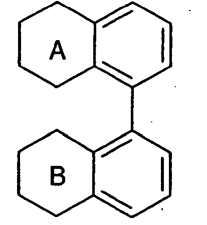 ist vorzugsweise ausgewählt aus folgenden Formeln

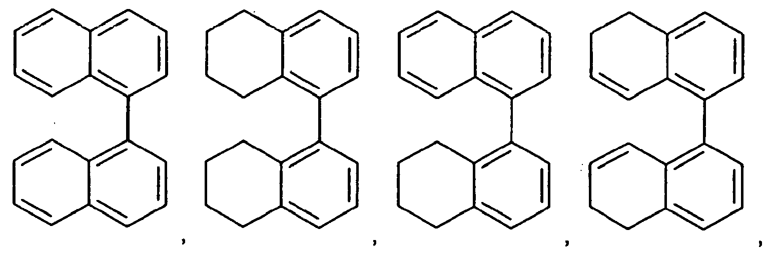

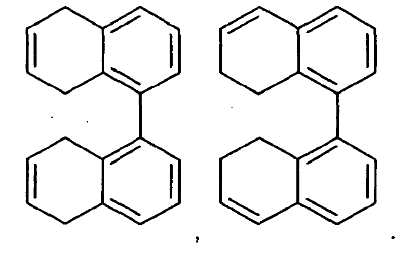

Die Aryl-, Heteroaryl-, Kohlenstoff- und Kohlenwasserstoffreste weisen gegebenenfalls einen oder mehrere Substituenten auf, welche vorzugsweise ausgewählt sind aus der Gruppe enthaltend Silyl, Sulfo, Sulfonyl, Formyl, Amin, Imin, Nitril, Mercapto, Nitro, Halogen, C₁₋₁₂ Alkyl, C₆₋₁₂ Aryl, C₁₋₁₂ Alkoxy, Hydroxy, oder Kombinationen dieser Gruppen.

Bevorzugte Substituenten sind beispielsweise Iösiichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, im Folgenden auch als "L" bezeichnet, sind beispielsweise F, Cl, Br, I, -CN, -NO₂, -NCO, -NCS, -OCN, -SCN, - C(=O)N(R^{x})₂, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, - CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 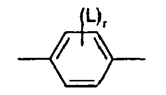 ist vorzugsweise 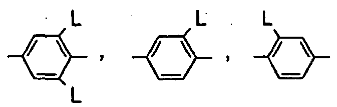 oder 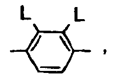 worin L eine der oben angegebenen Bedeutungen hat.

Bevorzugte Abstandsgruppen Sp sind ausgewählt aus der Formel Sp'-X', so dass der Rest "P-Sp-" der Formel "P-Sp'-X'-" entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-,-NH-, -NR⁰-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH- oder -C≡C-ersetzt sein können, dass O- und/oder S-Atome nicht direkt miteinander verknüpft sind,
- X': -O-, -S-, -CO-, -COO-, -OCO-, -O-COO-, -CO-NR⁰-, -NR⁰-CO-, -NR⁰-CO-NR⁰-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-,-CH=CR⁰-, -CY²=CY³-, -C≡C-, -CH=CH-COO-, -OCO-CH=CH- oder eine Einfachbindung bedeutet,
- R⁰ und R⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.
- X': ist vorzugsweise -O-, -S -CO-, -COO-, -OCO-, -O-COO-, -CO-NR⁰-, - NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰R⁰⁰-O)ₚ₁-,
worin p1 eine ganze Zahl von 1 bis 12 ist, q1 eine ganze Zahl von 1 bis 3 ist, und R⁰ und R⁰⁰ die oben angegebenen Bedeutungen besitzen.

Besonders bevorzugte Gruppen -X'-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Ferner bevorzugt sind polymerisierbare Verbindungen, worin Sp eine Einfachbindung bedeutet.

Die Herstellung der polymerisierbaren Verbindungen erfolgt in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart. Die Synthese von polymerisierbaren Acrylaten und Methacrylaten der Formel I kann in Analogie zu den in US 5,723,066 beschriebenen Methoden durchgeführt werden. Weitere, besonders bevorzugte Methoden finden sich in den Beispielen.

Im einfachsten Fall erfolgt die Synthese durch Veresterung oder Veretherung von kommerziell erhältlichen Diolen der allgemeinen Formel HO-A¹-(Z¹-A²)ₘ₁-OH, worin A¹, A², Z¹ und m1 die oben angegebenen Bedeutungen besitzen, wie z.B. 2,6-Dihydroxynaphthalin (Naphthalin-2,6-diol), oder 1-(4-Hydroxyphenyl)-phenyl-4-ol, mit entsprechenden Säuren, Säurederivaten, oder halogenierten Verbindungen enthaltend eine Gruppe P, wie z.B. Methacrylsäurechlorid oder Methacrylsäure in Gegenwart von einem wasserentziehenden Reagenz wie z.B. DCC (Dicyclohexylcarbodiimid).

Die polymerisierbaren Verbindungen werden im FK-Medium zwischen den Substraten der FK-Anzeige unter Anlegen einer Spannung durch in-situ-Polymerisation polymerisiert bzw. vernetzt (falls eine Verbindung zwei oder mehr polymerisierbare Gruppen enthält). Geeignete und bevorzugte Polymerisationsmethoden sind beispielsweise die thermische oder Photopolymerisation, vorzugsweise Photopolymerisation, insbesondere UV- Photopolymerisation. Dabei können ggf. auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich z.B. die kommerziell erhältlichen Photoinitiatoren Irgacure651®, Irgacure184®, Irgacure907®, Irgacure369®, oder Darocure 1173® (Ciba AG). Falls ein Initiator eingesetzt wird, beträgt dessen Anteil im Gesamtgemisch vorzugsweise 0,001 bis 5 Gew.-%, besonders bevorzugt 0,001 bis 1 Gew.-%. Die Polymerisation kann aber auch ohne Zusatz eines Initiators erfolgen. In einer weiteren bevorzugten Ausführungsform enthält das FK-Medium keinen Polymerisationsinitiator.

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind z.B. die kommerziell erhältlichen Stabilisatoren der Serie Irganox ® (Ciba AG). Falls Stabilisatoren eingesetzt werden, beträgt deren Anteil, bezogen auf die Gesamtmenge an RMs bzw. polymerisierbarer Komponente A), vorzugsweise 10 - 5000 ppm, besonders bevorzugt 50 - 500 ppm.

Die erfindungsgemäßen polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte.

Die erfindungsgemäßen FK-Medien enthalten vorzugsweise < 5%, besonders bevorzugt < 1 %, ganz besonders bevorzugt < 0.5 % an polymerisierbaren Verbindungen, insbesondere polymerisierbaren Verbindungen der oben genannten Formeln.

Die erfindungsgemäßen FK-Medien enthalten neben den oben beschriebenen polymerisierbaren Verbindungen eine niedermolekulare Komponente. Die niedermolekulare Komponente ist vorzugsweise eine FK-Mischung ("FK-Hostmischung") enthaltend eine oder mehr, vorzugsweise zwei oder mehr niedermolekulare (d.h. monomere bzw. unpolymerisierte) Verbindungen, wobei mindestens eine dieser Verbindungen eine mesogene oder flüssigkristalline Verbindung enthaltend eine oder mehrere Alkenylgruppen ist ("Alkenylverbindung"), wobei diese Alkenylgruppen gegenüber einer Polymerisationsreaktion unter den zur Polymerisation der Methacrylatgruppen verwendeten Bedingungen stabil sind.

Die Alkenylgruppen sind vorzugsweise geradkettiges, verzweigtes oder cyclisches Alkenyl, insbesondere mit 2 bis 25 C-Atomen, besonderes bevorzugt mit 2 bis 12 C-Atomen, worin auch eine oder mehrere nicht benachbarte CH₂-Gruppen durch -O-, -S-, -CO-, -CO-O-, -O-CO-, -O-CO-O-so ersetzt sein können, dass O- und/oder S-Atome nicht direkt miteinander verknüpft sind, und worin auch ein oder mehrere H-Atome durch F und/oder Cl ersetzt sein können.

Bevorzugte Alkenylgruppen sind geradkettiges Alkenyl mit 2 bis 7 C-Atomen und Cyclohexenyl, insbesondere Ethenyl, Propenyl, Butenyl, Pentenyl, Hexenyl, Heptenyl, 1,4-Cyclohexen-1-yl und 1,4-Cyclohexen-3-yl.

In FK-Medien zur Verwendung in PSA-VA-Anzeigen enthält die niedermolekulare Komponente vorzugsweise eine oder mehrere Alkenylverbindungen der Formel A und/oder B: 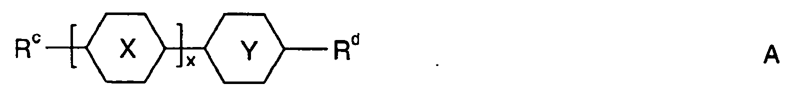 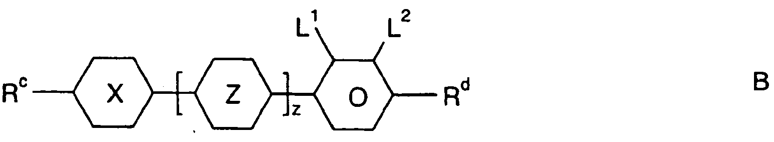 worin die einzelnen Reste, bei jedem Auftreten gleich oder verschieden, jeweils unabhängig voneinander folgende Bedeutung besitzen: 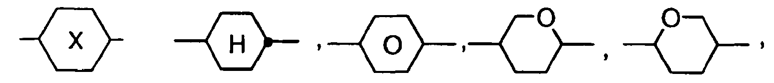 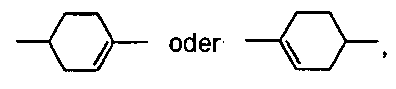 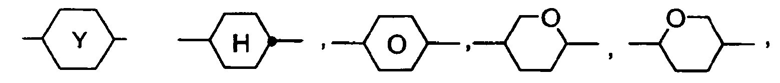 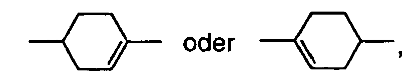 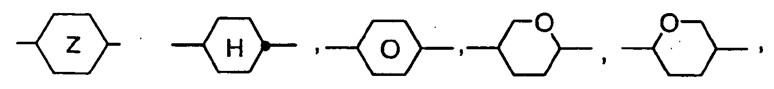 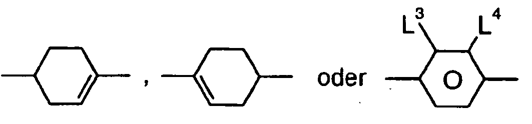
- R^{c}: Alkenyl mit 2 bis 9 C-Atomen, oder, falls mindestens einer der Ringe X, Y und Z Cyclohexenyl bedeutet, auch eine der Bedeutungen von R^{d},
- R^{d}: Alkyl mit 1 bis 12 C-Atomen, worin auch eine oder zwei nicht benachbarte CH₂-Gruppen durch -O-, -CH=CH-, -CO-, -OCO-oder -COO- so ersetzt sein können, dass O-Atome nicht direkt miteinander verknüpft sind,
- L¹⁻⁴: jeweils unabhängig voneinander H, F, Cl, OCF₃, CF₃, CH₃, CH₂F oder CHF₂H, vorzugsweise H, F oder Cl,
- x: 1 oder 2,
- z: 0 oder 1.

R^{d} ist vorzugsweise geradkettiges Alkyl oder Alkoxy mit 1 bis 8 C-Atomen oder geradkettiges Alkenyl mit 2 bis 7 C-Atomen.

Das FK-Medium enthält vorzugsweise keine Verbindungen mit einer endständigen Vinyloxygruppe (-O-CH=CH₂), insbesondere keine Verbindungen der Formel A oder B, worin R^{d} eine endständige Vinyloxygruppe (-O-CH=CH₂) bedeutet oder enthält.

Vorzugsweise bedeuten L¹ und L² F, oder einer von L¹ und L² F und der andere Cl, sowie L³ und L⁴ F, oder einer von L³ und L⁴ F und der andere Cl.

Die Verbindungen der Formel A sind vorzugsweise ausgewählt aus den folgenden Unterformeln:

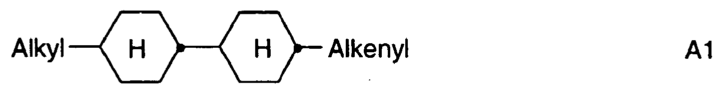

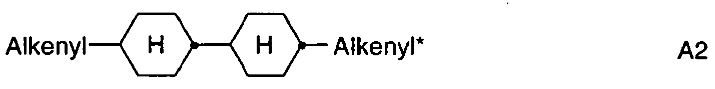

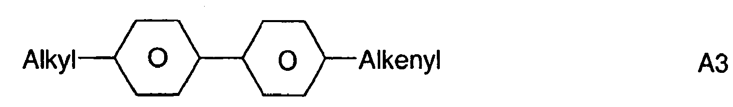

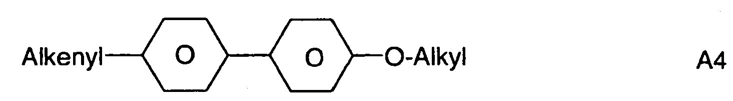

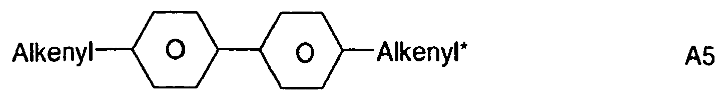

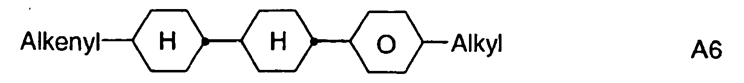

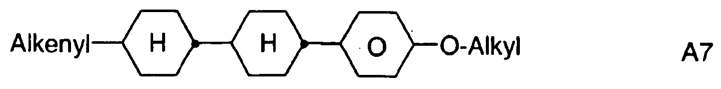

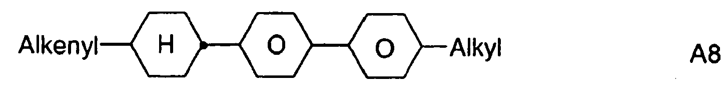

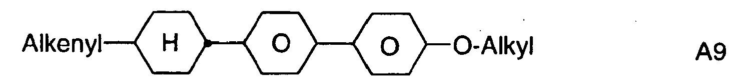

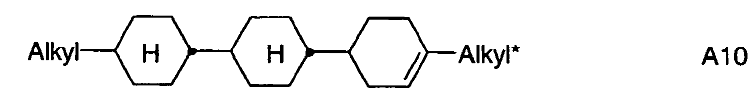

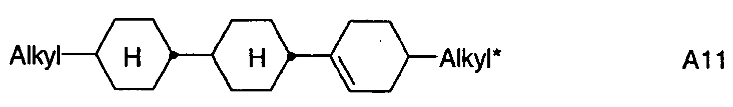

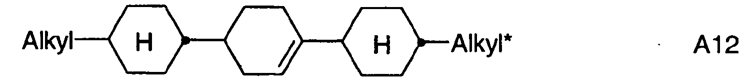

Die Verbindungen der Formel B sind vorzugsweise ausgewählt aus den folgenden Unterformeln: 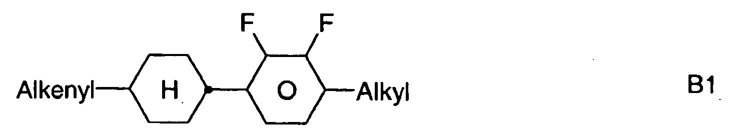 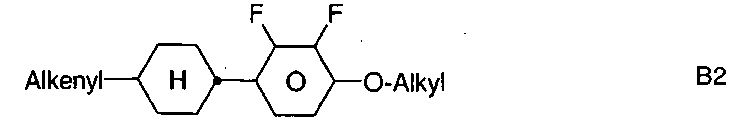 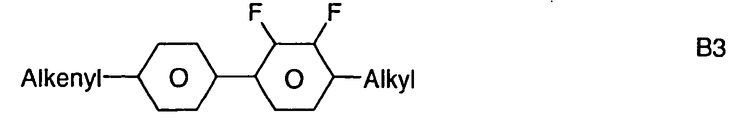 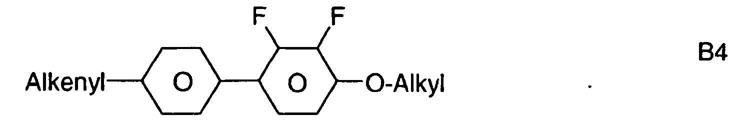 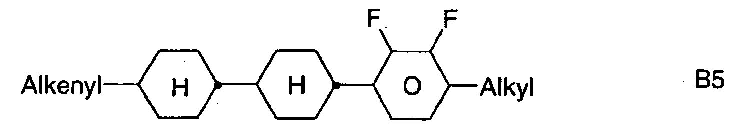 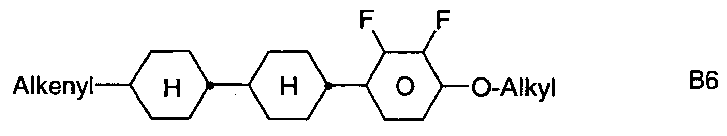 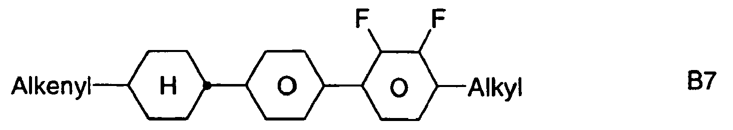 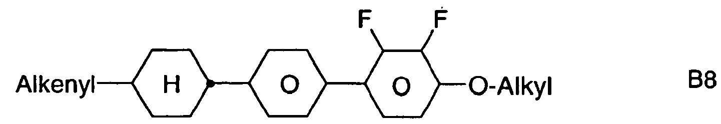 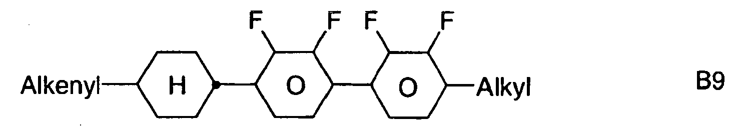 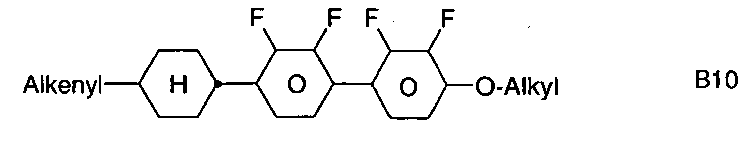 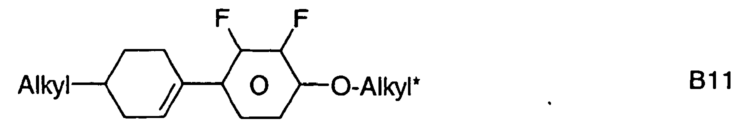 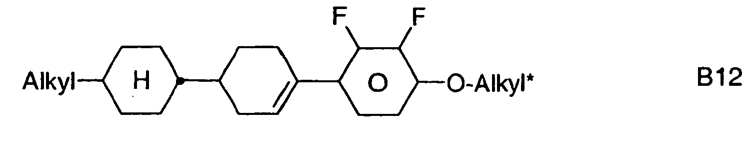 worin Alkyl einen geradkettigen Alkylrest mit 1-6 C-Atomen und Alkenyl und Alkenyl* jeweils unabhängig voneinander einen geradkettigen Alkenylrest mit 2-7 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.

Ganz besonders bevorzugte Verbindungen der Formel A sind ausgewählt aus den folgenden Unterformeln:

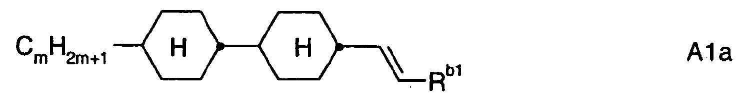

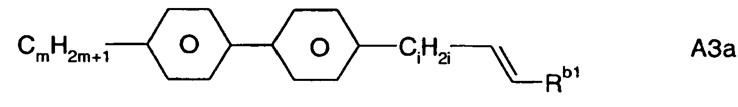

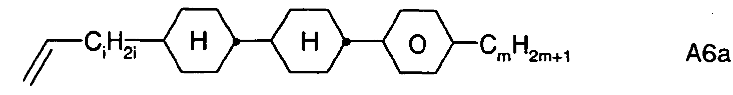

Ganz besonders bevorzugte Verbindungen der Formel B sind ausgewählt aus den folgenden Unterformeln: 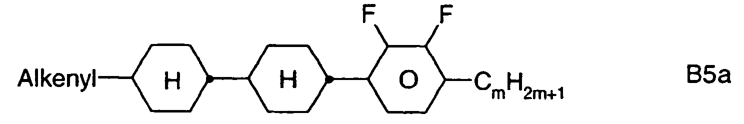 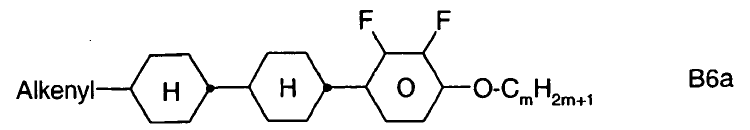 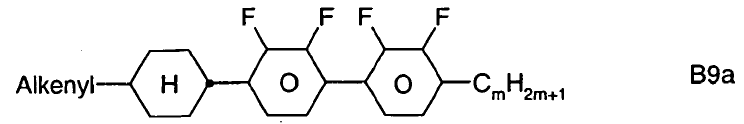 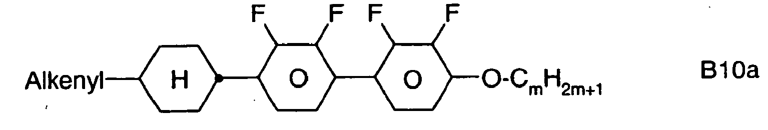 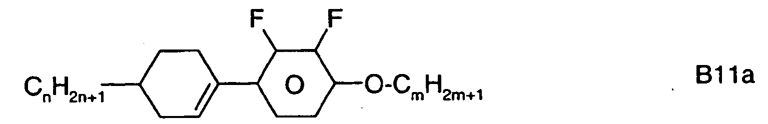 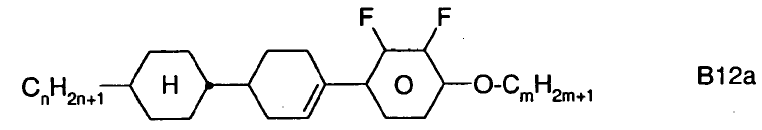 worin m und n jeweils unabhängig voneinander 1, 2, 3, 4, 5 oder 6, i 0, 1, 2 oder 3, R^{b1} H, CH₃ oder C₂H₅ und Alkenyl CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂- bedeutet.

In FK-Medien zur Verwendung in PSA-OCB-Anzeigen enthält die niedermolekulare Komponente vorzugsweise eine oder mehrere Alkenylverbindungen der Formel A oder deren Unterformeln wie oben definiert.

Weitere besonders bevorzugte FK-Hostmischungen und FK-Medien werden im Folgenden genannt:
a) FK-Medium, welches zusätzlich eine oder mehrere Verbindungen ausgewählt aus den folgenden Formeln enthält: 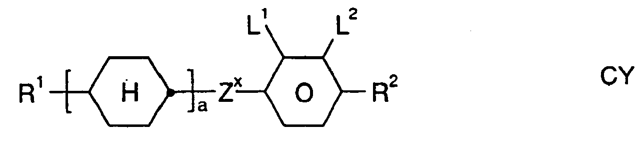 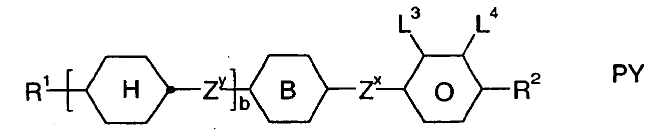 worin die einzelnen Reste folgende Bedeutung besitzen
   - a: 1 oder 2,
   - b: 0 oder 1,

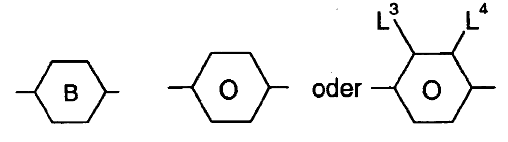

   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹⁻⁴: jeweils unabhängig voneinander F, Cl, OCF₃, CF₃, CH₃, CH₂F, CHF₂.
   Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.
   Die Verbindungen der Formel CY sind vorzugsweise ausgewählt aus den folgenden Unterformeln 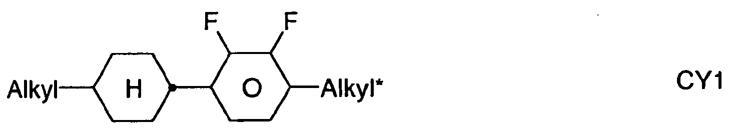 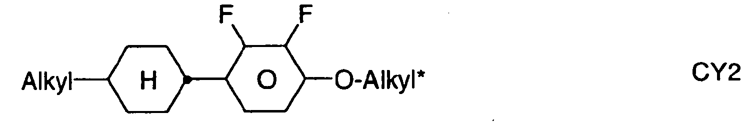 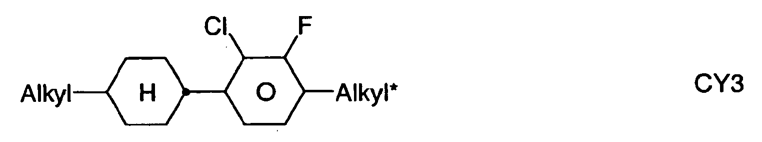 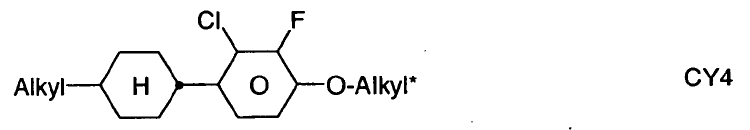 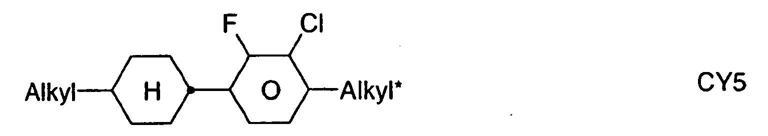 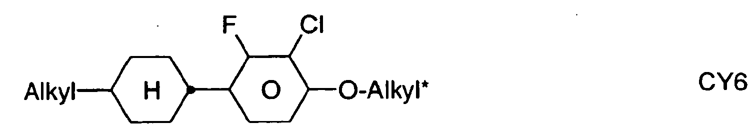 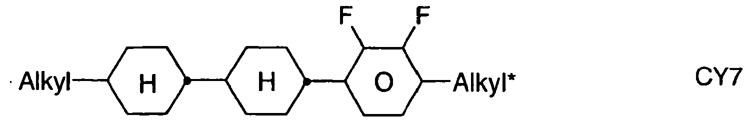 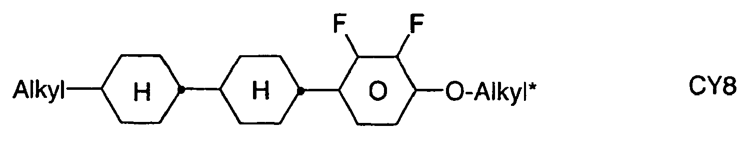 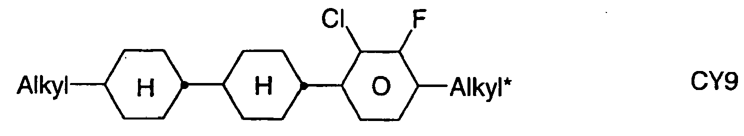 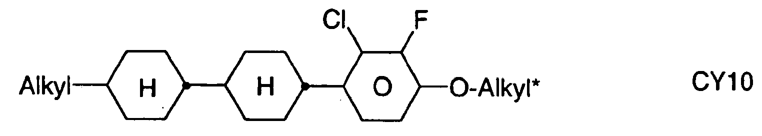 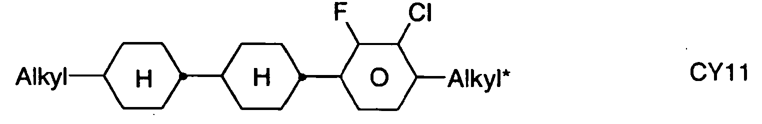 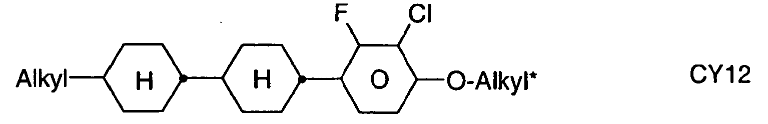 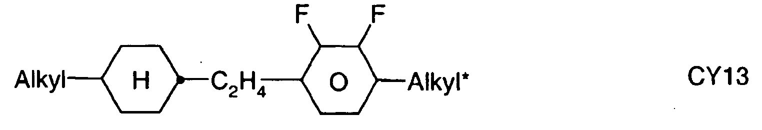 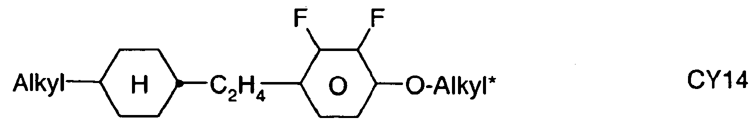 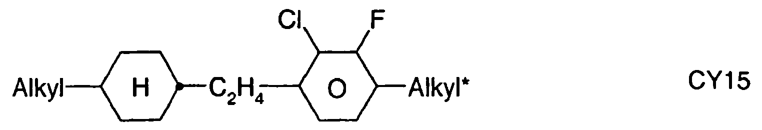 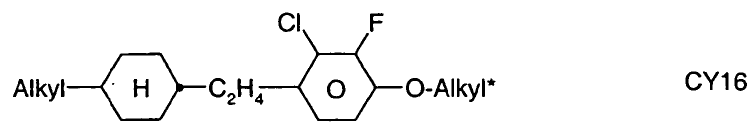 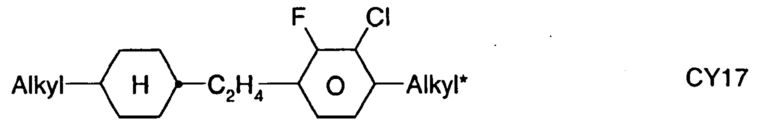 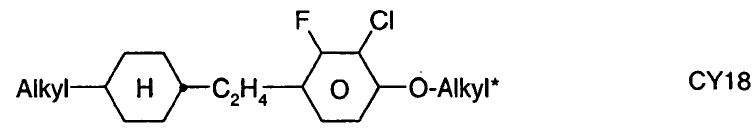 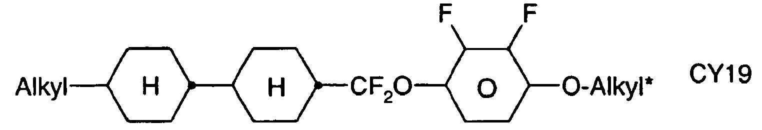 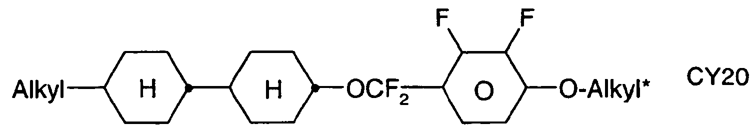 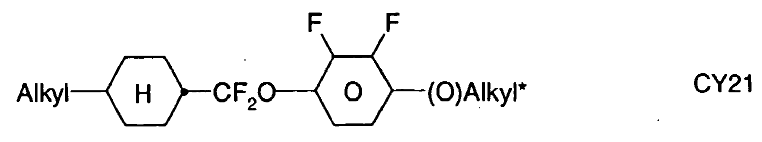 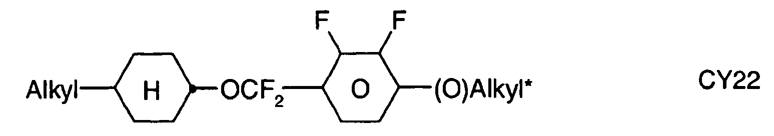 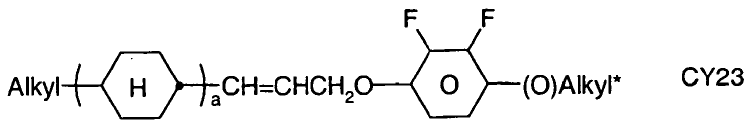 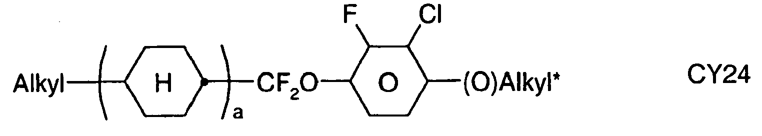 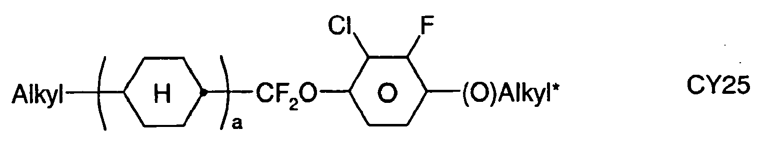 worin a 1 oder 2 und Alkyl und Alkyl* jeweils unabhängig voneinander einen geradkettigen Alkylrest mit 1-6 C-Atomen bedeuten.
   Die Verbindungen der Formel PY sind vorzugsweise ausgewählt aus den folgenden Unterformeln: 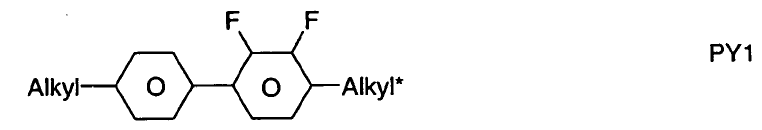 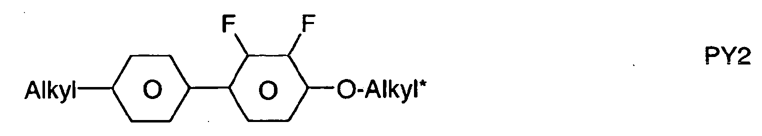 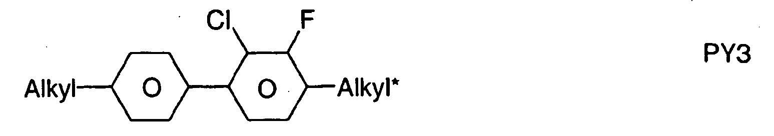 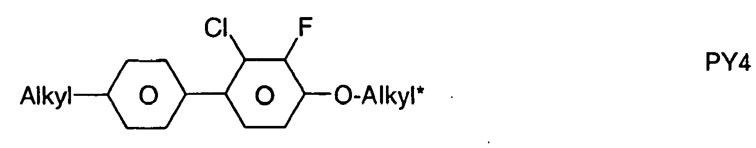 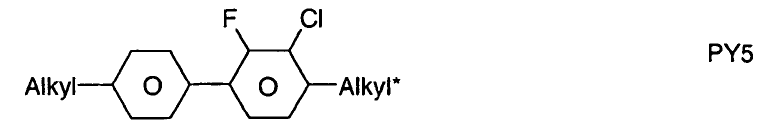 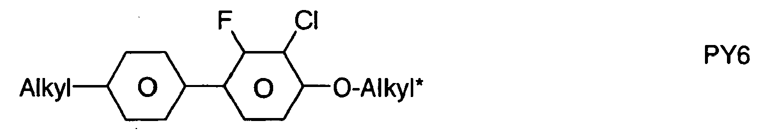 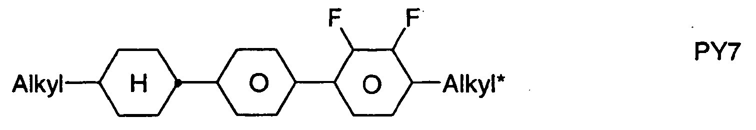 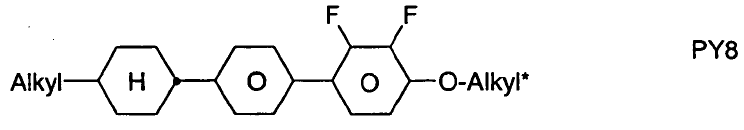 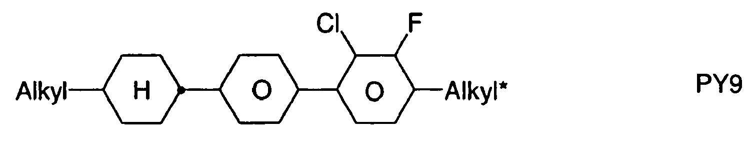 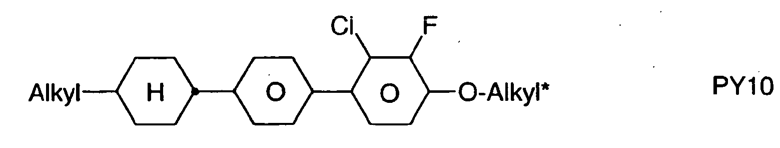 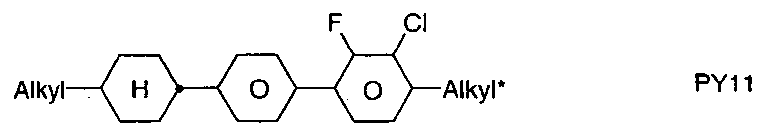 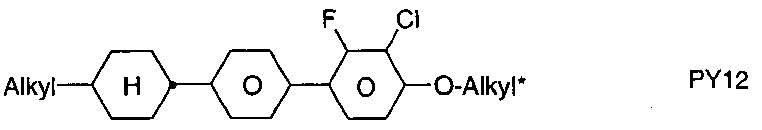 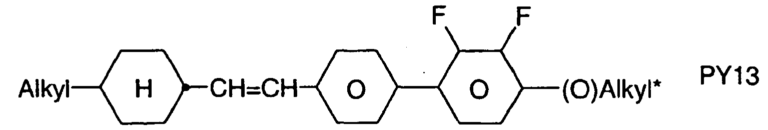 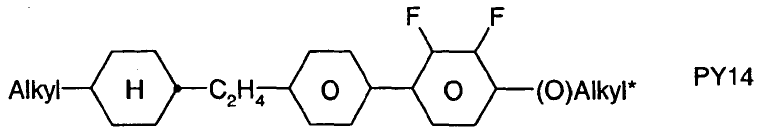 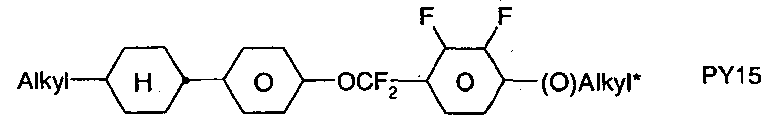 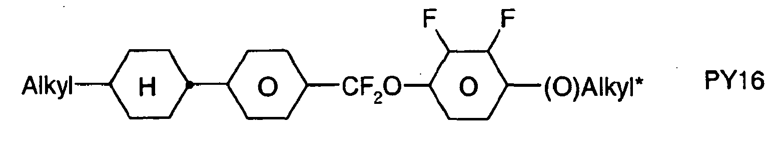 worin Alkyl und Alkyl* jeweils unabhängig voneinander einen geradkettigen Alkylrest mit 1-6 C-Atomen bedeuten.
b) FK-Medium, welches zusätzlich eine oder mehrere Verbindungen der folgenden Formel enthält: 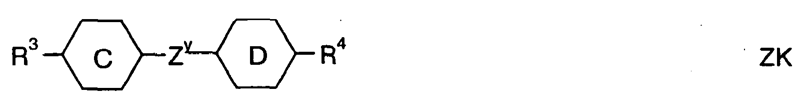 worin die einzelnen Reste folgende Bedeutung besitzen 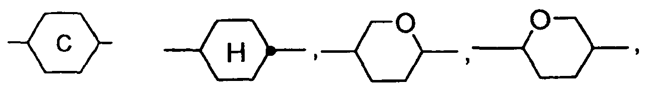 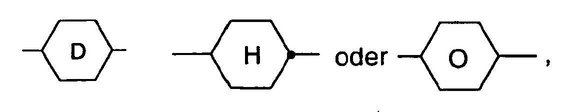
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
   - Z^{y}: -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung.
   Die Verbindungen der Formel ZK sind vorzugsweise ausgewählt aus den folgenden Unterformeln: 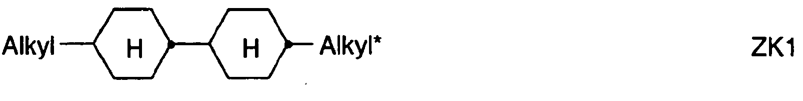 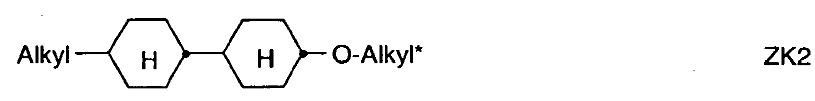 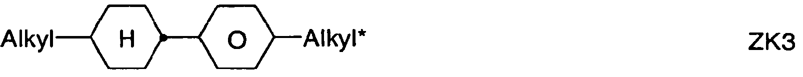 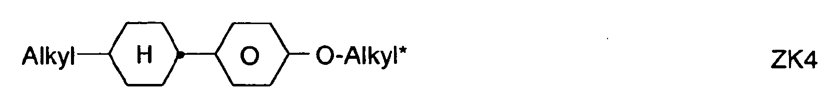 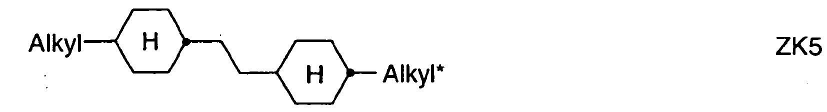 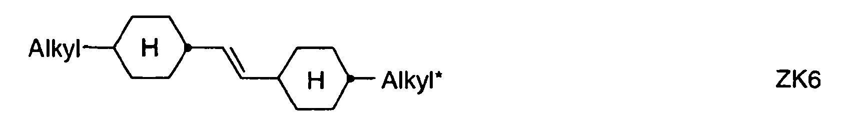 worin Alkyl und Alkyl* jeweils unabhängig voneinander einen geradkettigen Alkylrest mit 1-6 C-Atomen bedeuten,
c) FK-Medium, welches zusätzlich eine oder mehrere Verbindungen der folgenden Formel enthält: 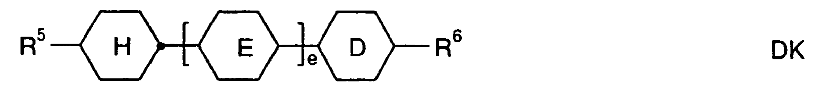 worin die einzelnen Reste bei jedem Auftreten gleich oder verschieden folgende Bedeutung haben:
   - R⁵ und R⁶: jeweils unabhängig voneinander eine der oben für R¹ angegebenen Bedeutungen, 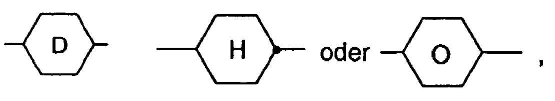 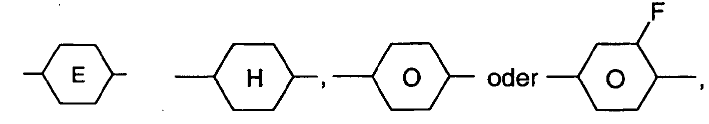 und
   - e: 1 oder 2.
   Die Verbindungen der Formel DK sind vorzugsweise ausgewählt aus den folgenden Unterformeln: 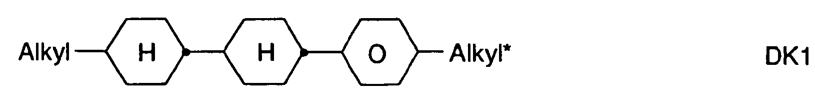 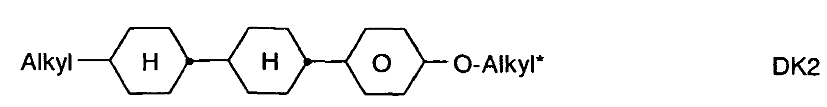 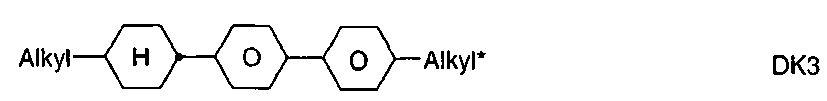 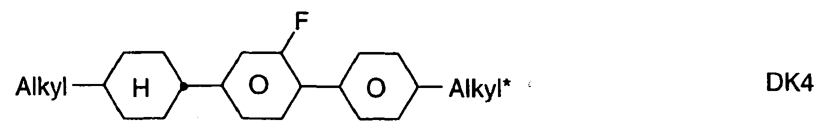 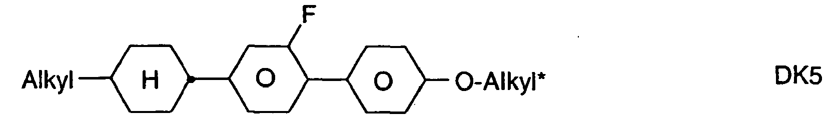 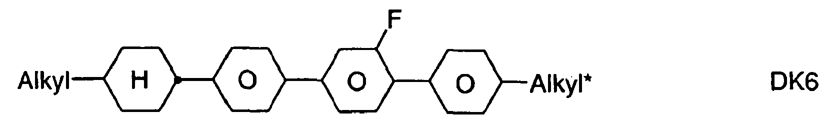 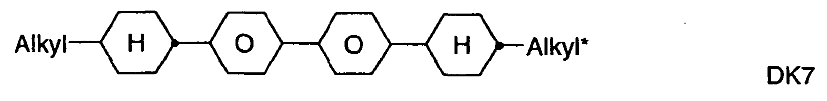 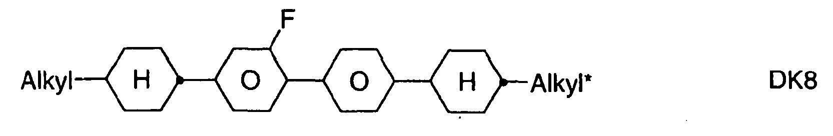 worin Alkyl und Alkyl* jeweils unabhängig voneinander einen geradkettigen Alkylrest mit 1-6 C-Atomen bedeuten.
d) FK-Medium, welches zusätzlich eine oder mehrere Verbindungen der folgenden Formel enthält: 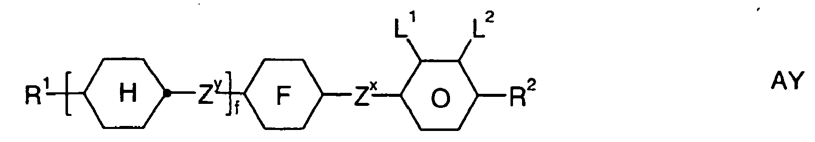 worin die einzelnen Reste folgende Bedeutung besitzen 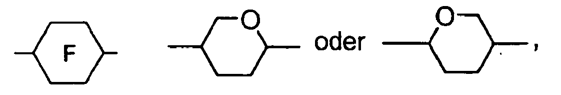
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder-COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.
   Vorzugsweise bedeuten beide Reste L¹ und L² F oder einer der Reste L¹ und L² F und der andere Cl.
   Die Verbindungen der Formel AY sind vorzugsweise ausgewählt aus den folgenden Unterformeln 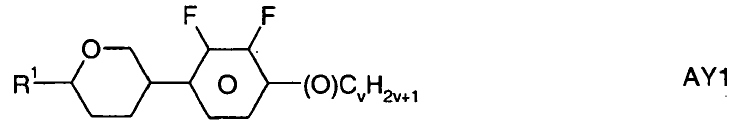 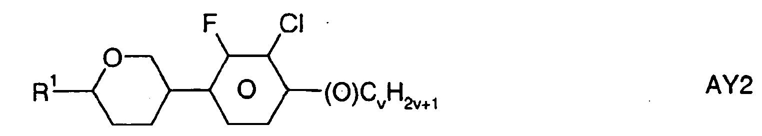 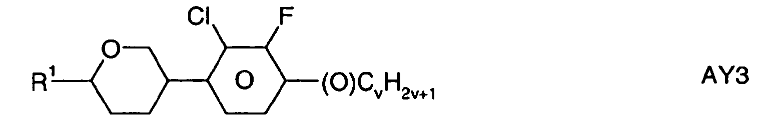 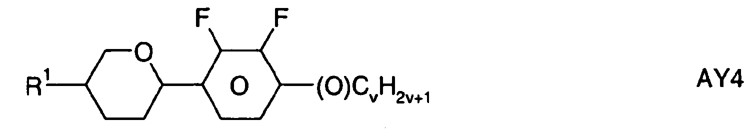 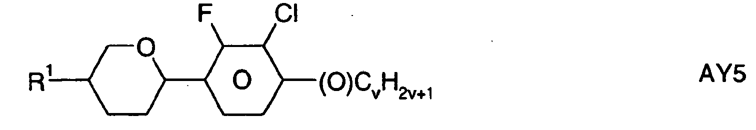 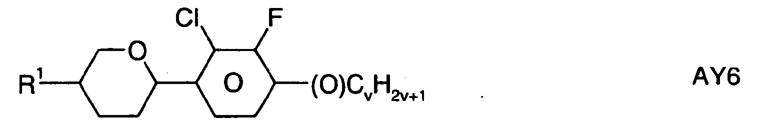 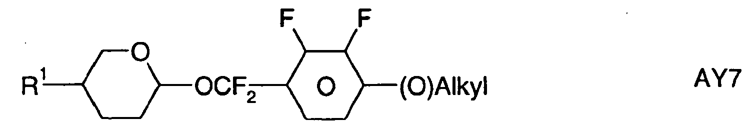 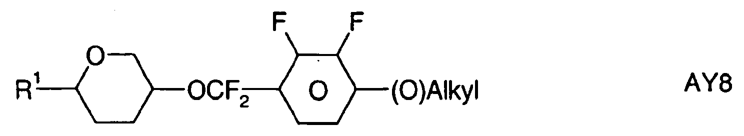 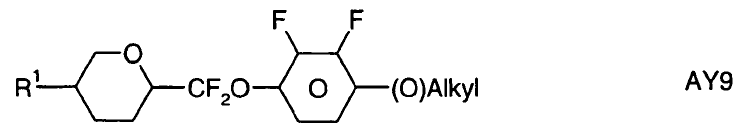 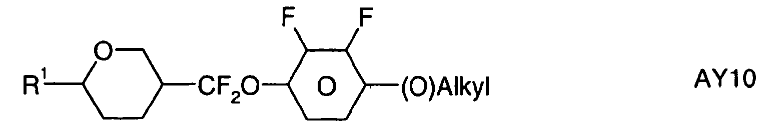 worin R¹ die oben angegebene Bedeutung hat und v eine ganze Zahl von 1 bis 6 bedeutet. R¹ bedeutet vorzugsweise geradkettiges Alkyl, insbesondere CH₃, C₂H₅, n-C₃H₇, n-C₄H₉, n-C₅H₁₁
e) FK-Medium, welches zusätzlich eine oder mehrere Verbindungen ausgewählt aus den folgenden Formeln enthält: 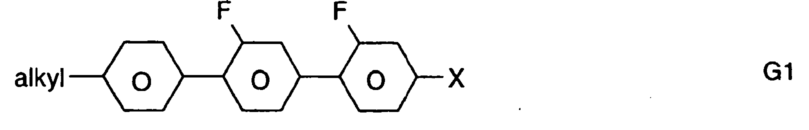 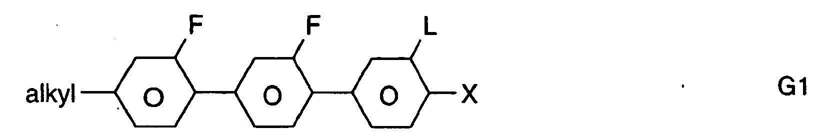 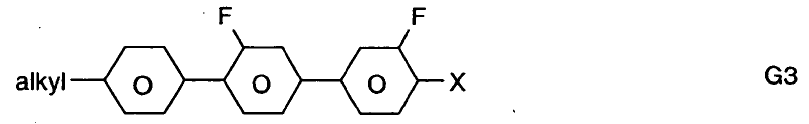 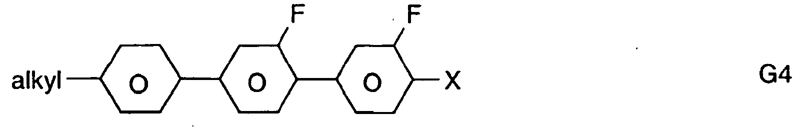 worin alkyl C₁₋₆-alkyl, L H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus den folgenden Formeln enthält: 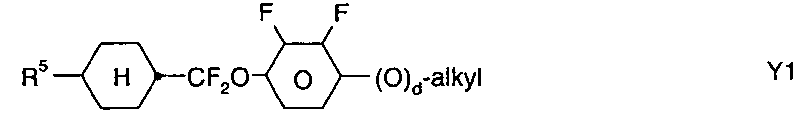 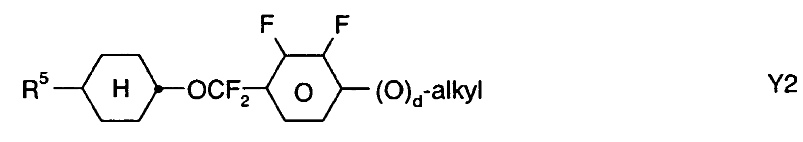 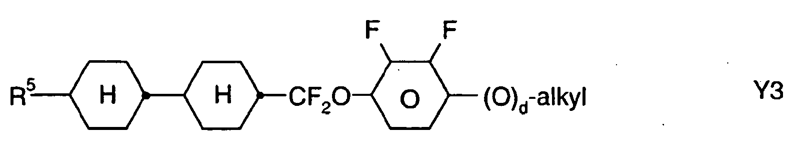 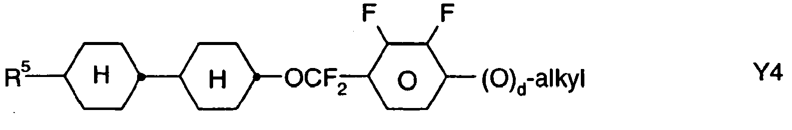 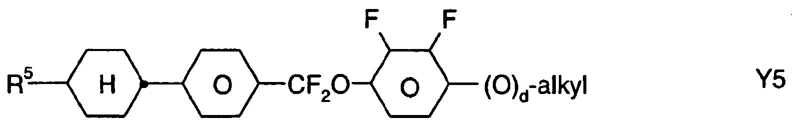 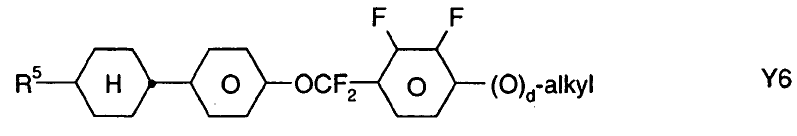 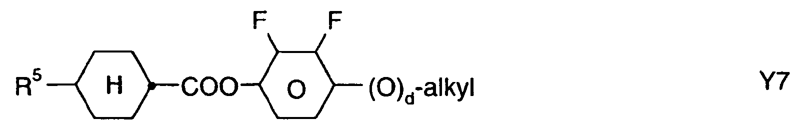 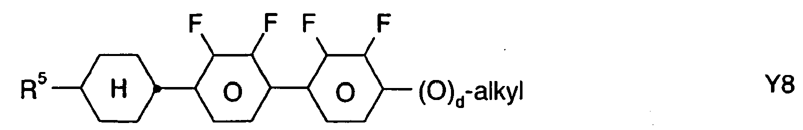 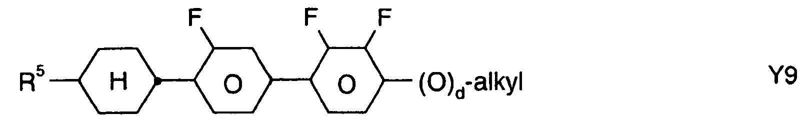 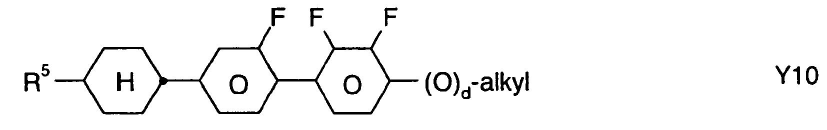 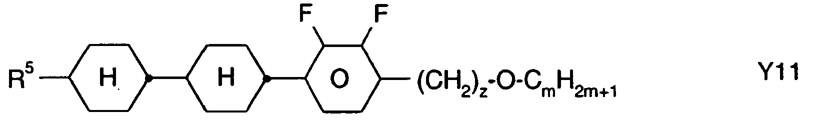 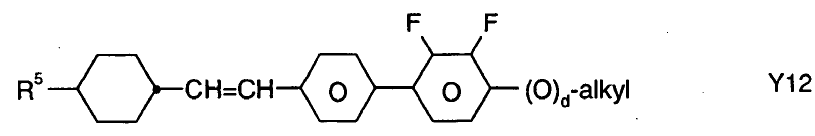 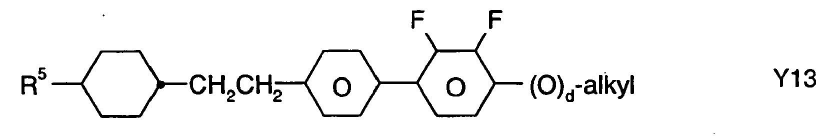 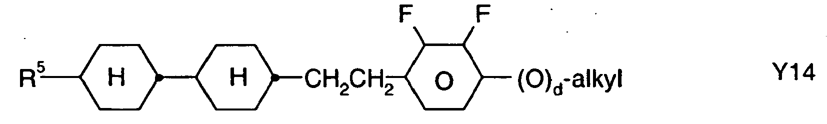 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, welches zusätzlich eine oder mehrere Biphenylverbindungen der folgenden Formeln enthält: 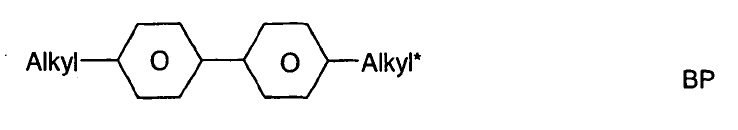 worin Alkyl und Alkyl* jeweils unabhängig voneinander einen geradkettigen Alkylrest mit 1-6 C-Atomen bedeuten.
h) FK-Medium, welches zusätzlich eine oder mehrere Terphenylverbindungen der folgenden Formel enthält: 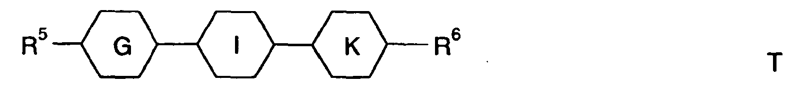 worin R⁵ und R⁶ jeweils unabhängig voneinander eine der oben für R¹ angegebenen Bedeutungen besitzen und 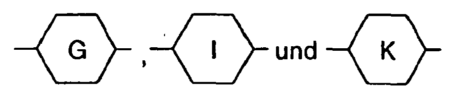 jeweils unabhängig voneinander 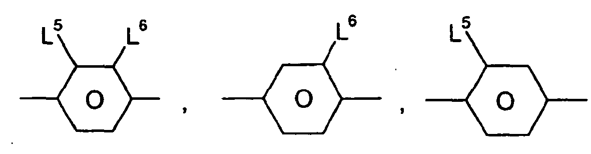 oder 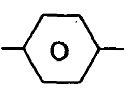 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus den folgenden Unterformeln 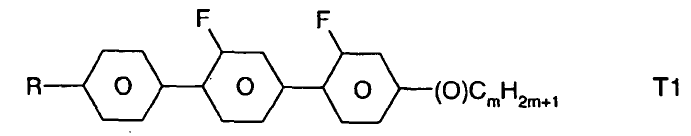 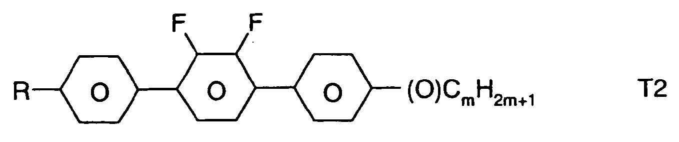 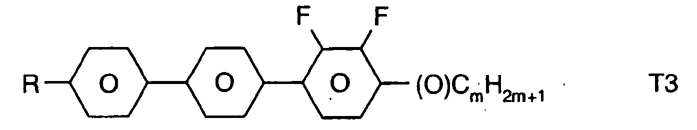 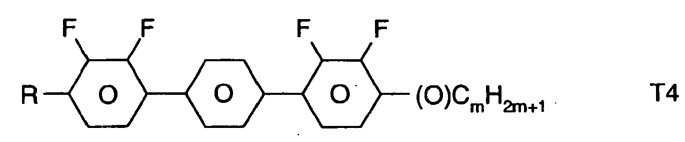 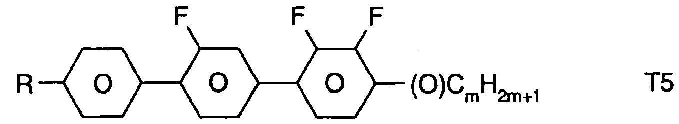 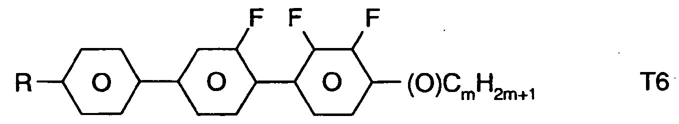 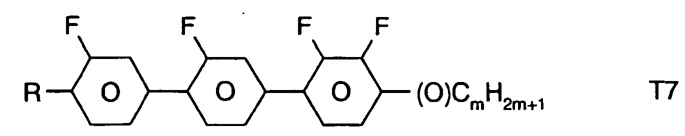 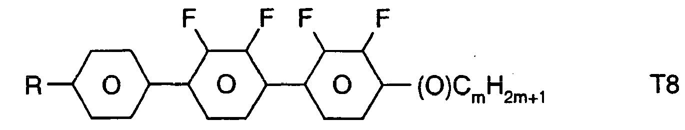 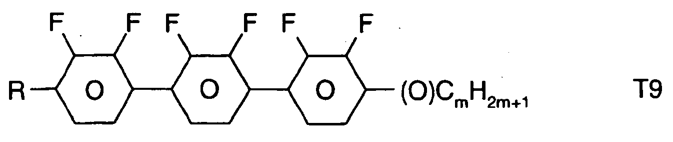 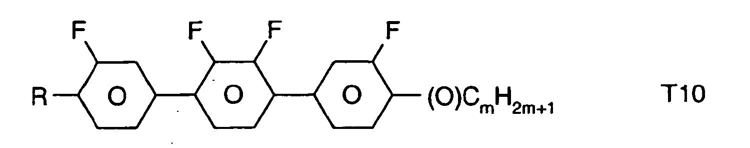 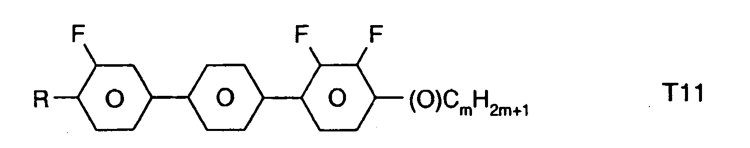 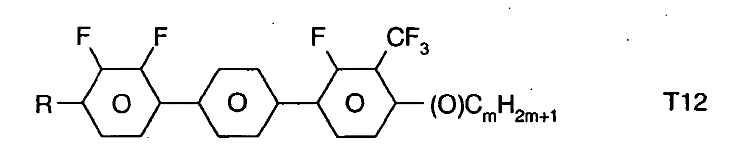 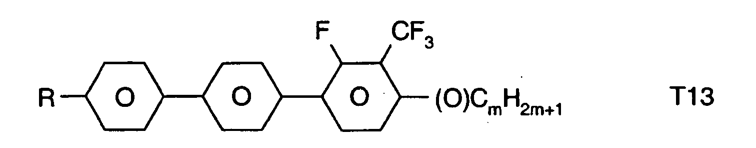 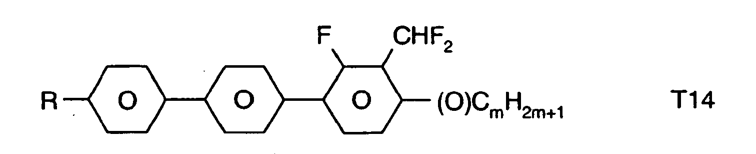 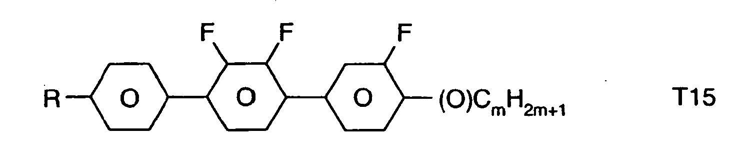 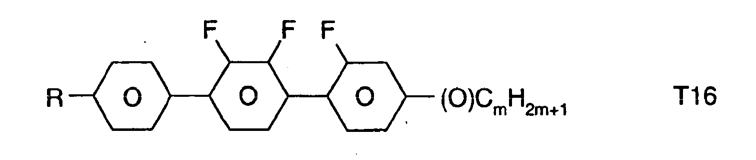 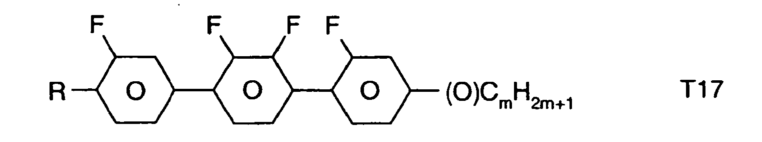 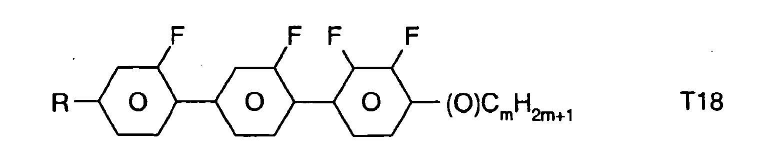 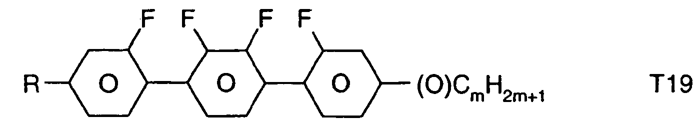 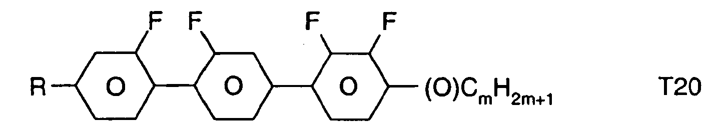 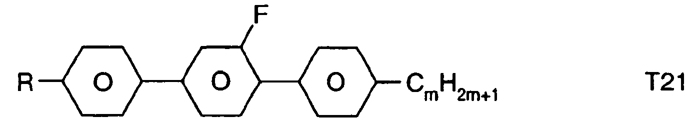 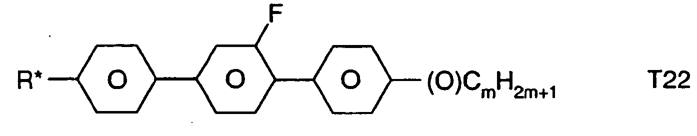 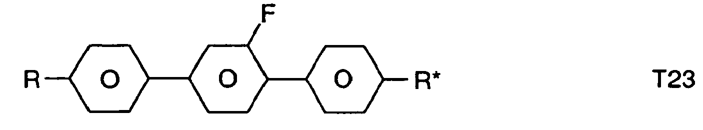 worin R einen geradkettigen Alkyl- oder Alkoxyrest mit 1-7 C-Atomen, R* einen geradkettigen Alkenylrest mit 2-7 C-Atomen, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Vorzugsweise bedeutet R Methyl, Ethyl, Propyl, Butyl, Pentyl, Hexyl Methoxy, Ethoxy, Propoxy, Butoxy oder Pentoxy.
   Das erfindungsgemäße FK-Medium enthält die Terphenyle der Formeln T und deren bevorzugte Unterformeln vorzugsweise in einer Menge von 2-30 Gew.%, insbesondere von 5-20 Gew.%.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen der folgenden Formeln enthält: 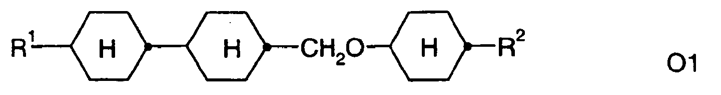 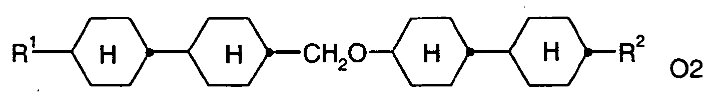 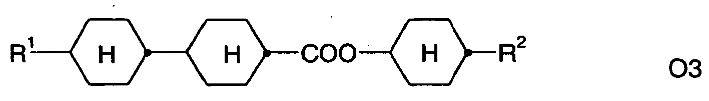 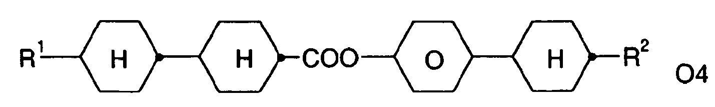 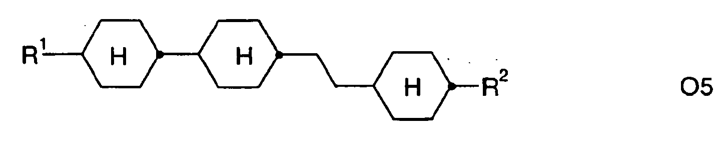 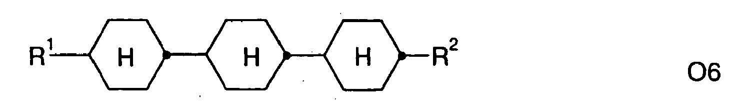 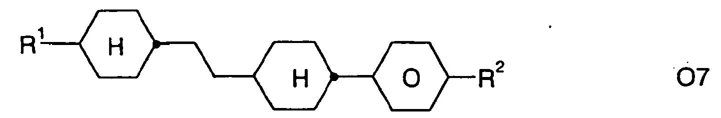 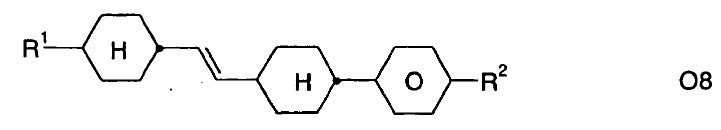 worin R¹ und R² die oben angegebenen Bedeutungen haben, und vorzugsweise jeweils unabhängig voneinander geradkettiges Alkyl oder Alkoxy bedeuten.
   Bevorzugte Medien enthalten eine oder mehrere Verbindungen ausgewählt aus den Formeln O1, 03 und 04.
k) FK-Medium, welches zusätzlich eine oder mehrere Verbindungen der folgenden Formel enthält: 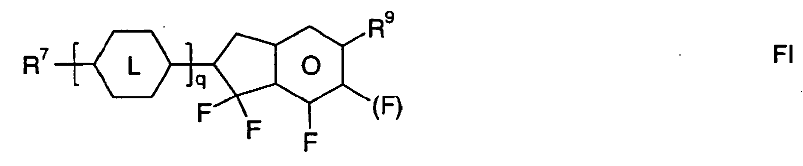 worin 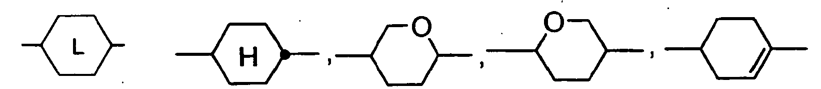 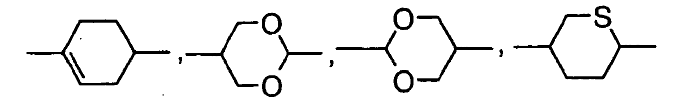 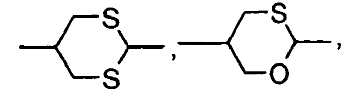 R⁹ H, CH₃, C₂H₅ oder n-C₃H₇ und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.
   Besonders bevorzugte Verbindungen der Formel IF sind ausgewählt aus den folgenden Unterformeln: 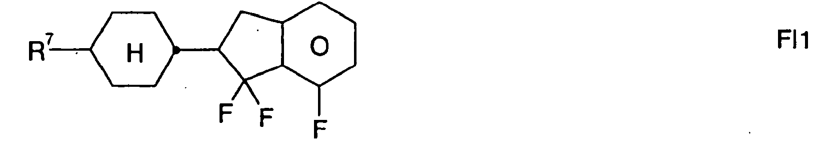 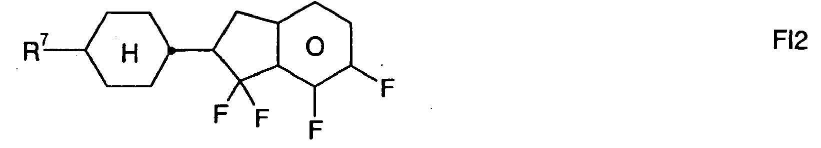 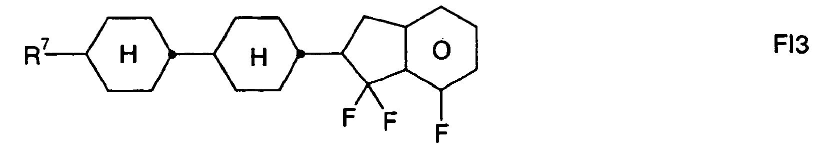 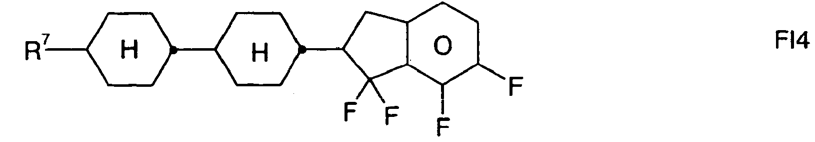 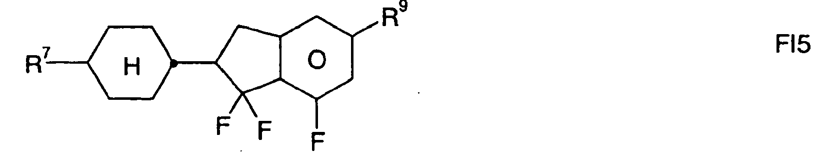 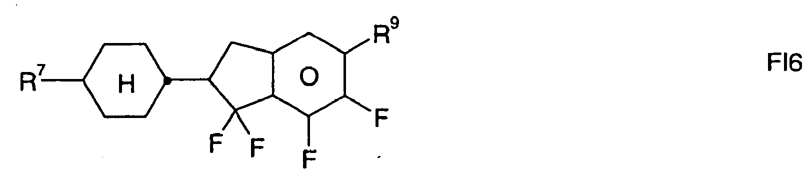 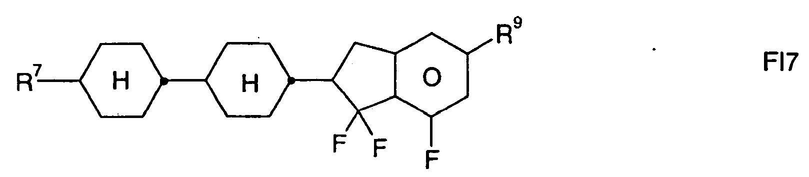 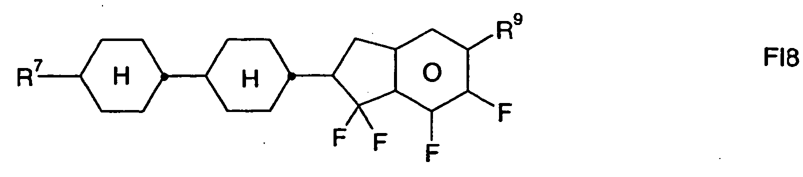 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
m) FK-Medium, welches zusätzlich eine oder mehrere Verbindungen der folgenden Formeln enthält: 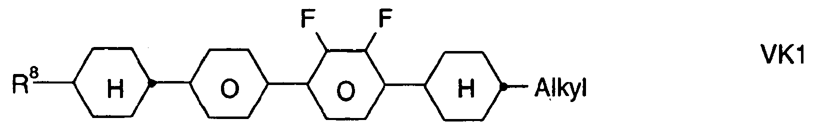 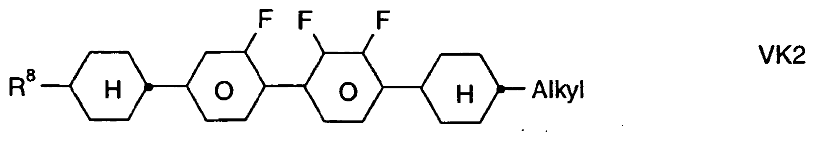 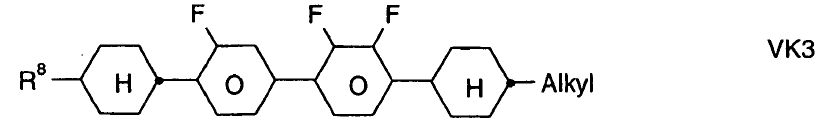 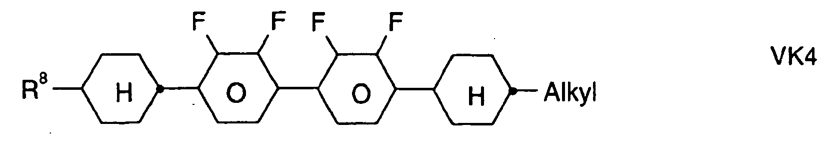 worin R⁸ die für R¹ angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus den folgenden Formeln: 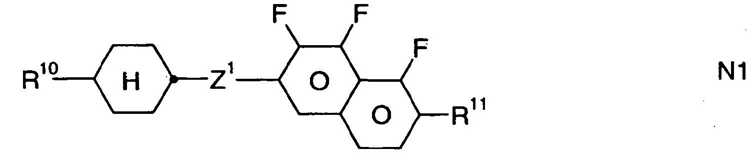 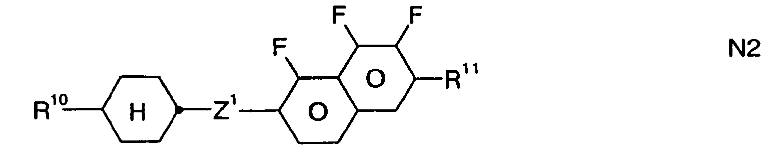 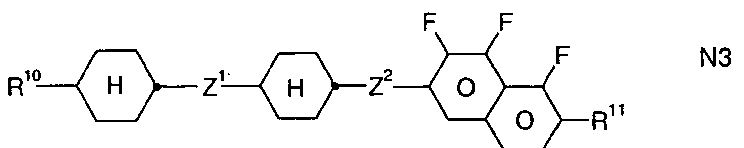 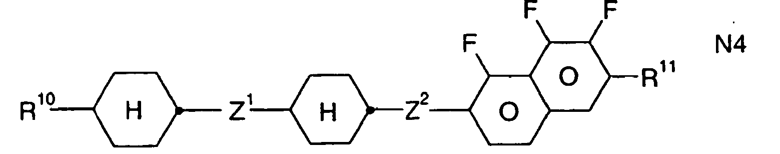 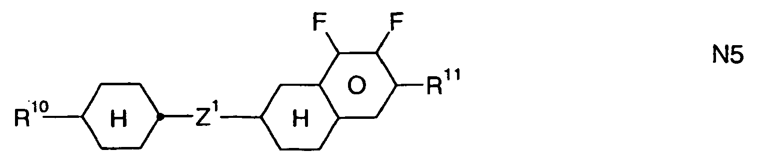 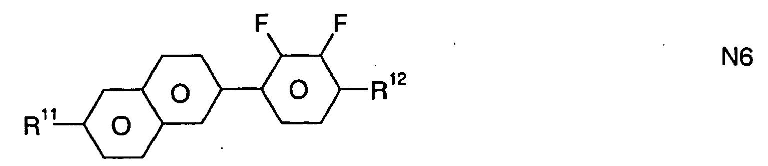 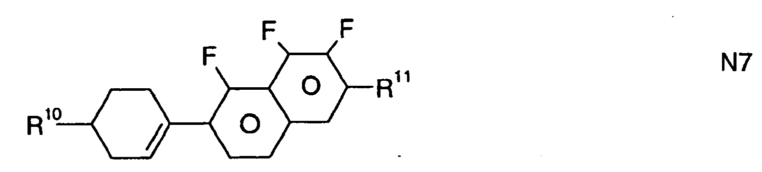 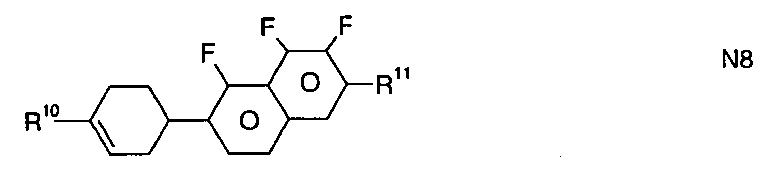 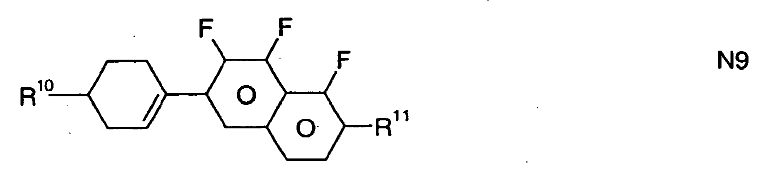 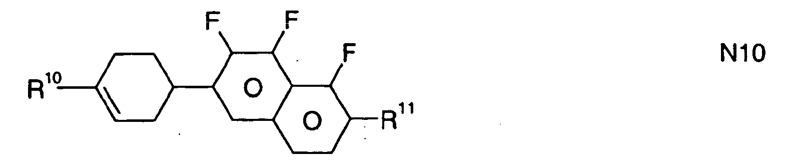 worin R¹⁰ und R¹¹ jeweils unabhängig voneinander eine der für R¹ angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander -C₂H₄-, -CH=CH-, - (CH₂)₄-, -(CH₂)₃O-, -O(CH₂)₃-, -CH=CHCH₂CH₂-, -CH₂CH₂CH=CH-, - CH₂O-, -OCH₂-, -COO-, -OCO-, -C₂F₄-, -CF=CF-, -CF=CH-, -CH=CF-, -CH₂- oder eine Einfachbindung bedeuten.
o) FK-Medium, welches zusätzlich eine oder mehrere eine oder mehrere Difluordibenzochromane und/oder Chromane der folgenden Formeln enthält: 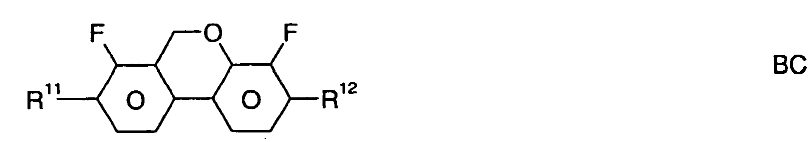 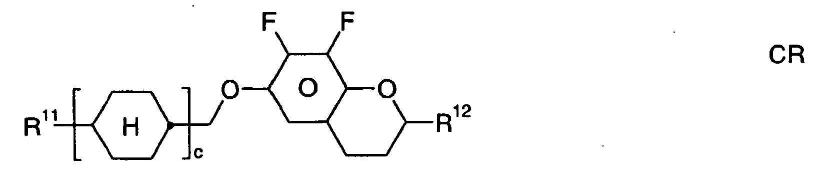 worin R¹¹ und R¹² jeweils unabhängig voneinander die oben angegebene Bedeutung aufweisen, und c 0 oder 1 bedeutet, vorzugsweise in Mengen von 3 bis 20 Gew.%, insbesondere in Mengen von 3 bis 15 Gew.%.
   Besonders bevorzugte Verbindungen der Formeln BC und CR sind ausgewählt aus den folgenden Unterformeln: 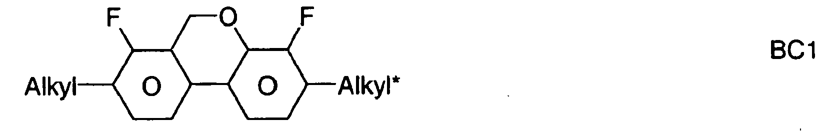 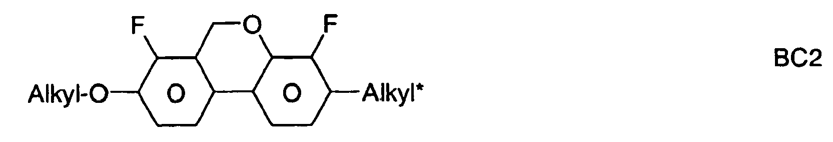 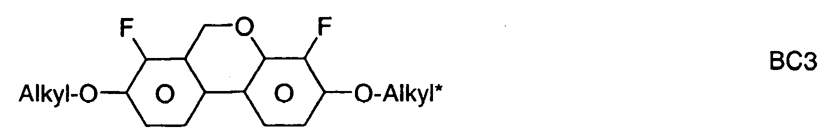 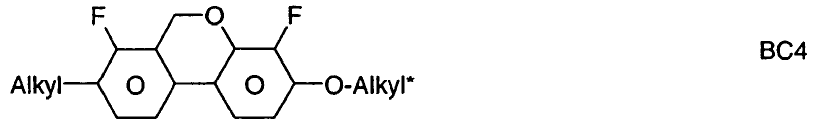 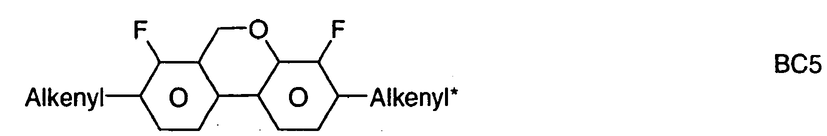 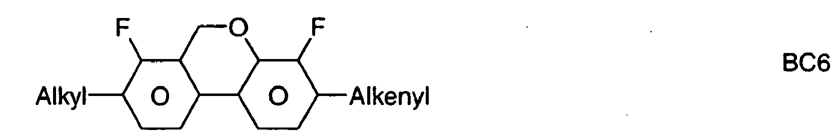 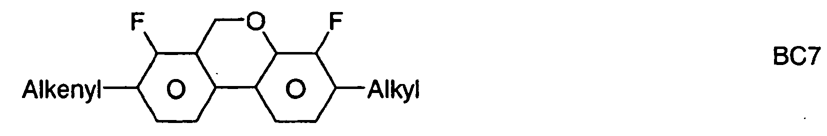 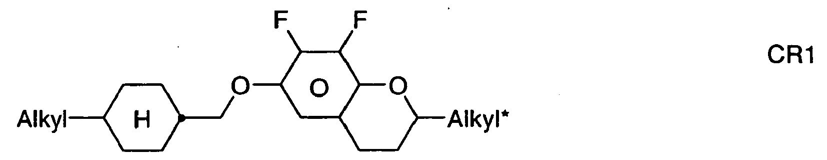 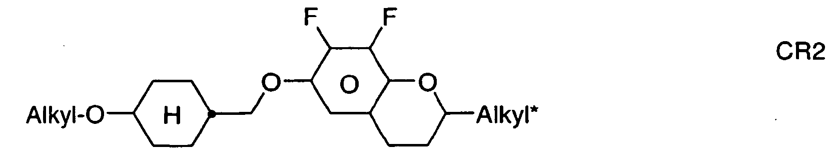 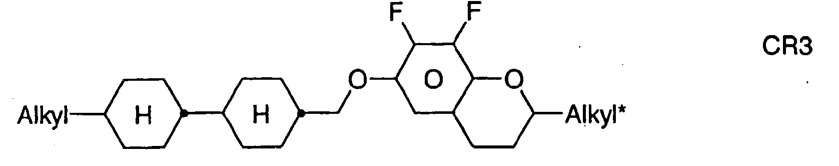 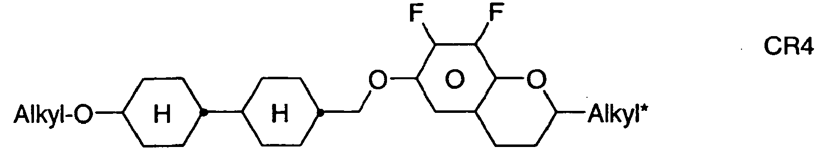 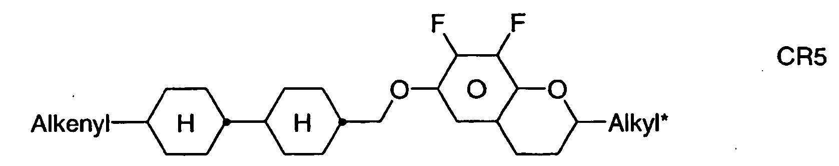 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₃CH=CH-, CH₂=CHCH₂CH₂-, CH₃CH=CHC₂H₄- oder C₃H₇CH=CH-.
   Ganz besonders bevorzugt sind Mischungen enthaltend eine, zwei oder drei Verbindungen der Formel BC-2.
p) FK-Medium, welches zusätzlich eine oder mehrere fluorierte Phenanthrene oder Dibenzofurane der folgenden Formeln enthält: 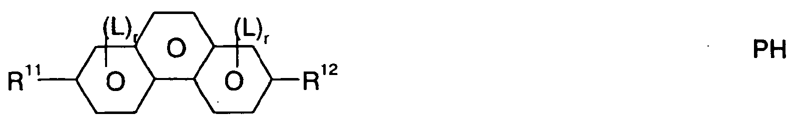 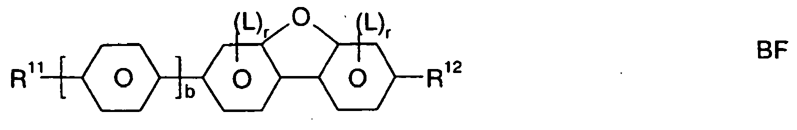 worin R¹¹ und R¹² jeweils unabhängig voneinander die oben angegebenen Bedeutungen besitzen, b 0 oder 1, L F und r 1, 2 oder 3 bedeutet.
   Besonders bevorzugte Verbindungen der Formeln PH und BF sind ausgewählt aus den folgenden Unterformeln: 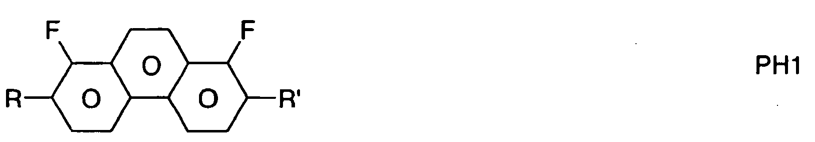 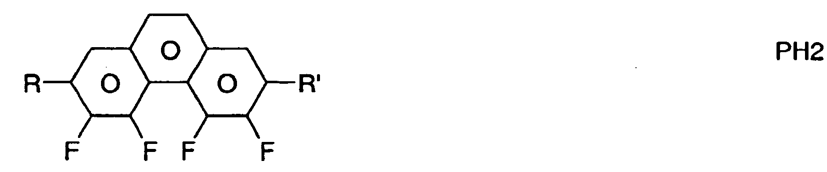 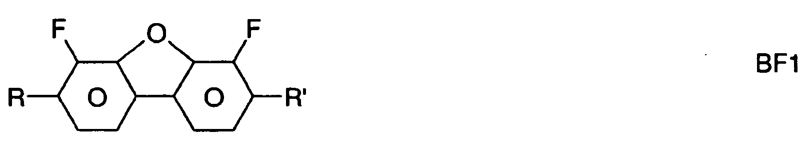 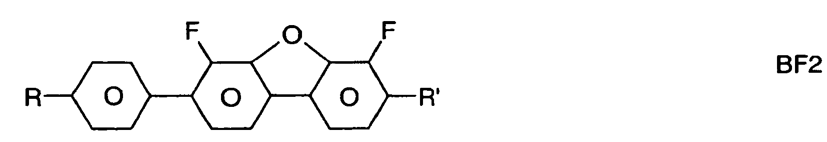 worin R und R' jeweils unabhängig voneinander einen geradkettigen Alkyl- oder Alkoxyrest mit 1-7 C-Atomen bedeuten.
q) FK-Medium, vorzugsweise zur Verwendung in PSA-OCB-Anzeigen, welches eine oder mehrere Verbindungen der folgenden Formeln enthält: 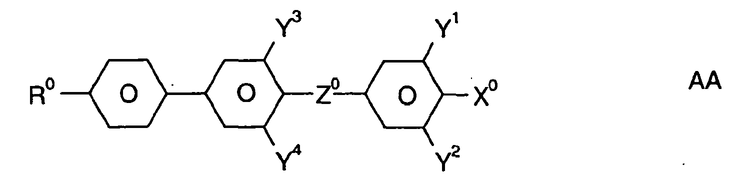 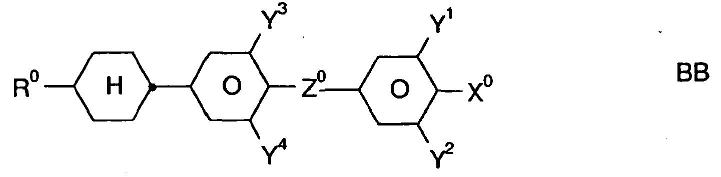 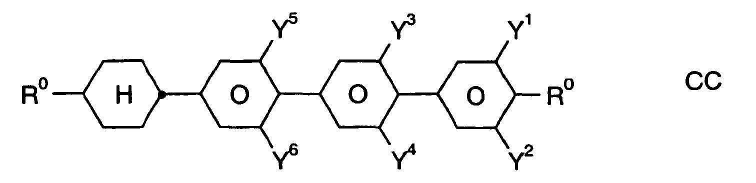 worin
   - R⁰: bei jedem Auftreten gleich oder verschieden n-Alkyl, Alkoxy, Oxaalkyl, Fluoralkyl oder Alkenyl mit jeweils bis zu 9 C-Atomen,
   - X⁰: F, Cl oder jeweils halogeniertes Alkyl, Alkenyl, Alkenyloxy oder Alkoxy mit jeweils bis zu 6 C-Atomen,
   - Z⁰: -CF₂O- oder eine Einfachbindung,
   - Y¹⁻⁶: jeweils unabhängig voneinander H oder F,
   bedeuten.
   X⁰ ist vorzugsweise F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃ oder CH=CF₂, besonders bevorzugt F oder OCF₃.
   Die Verbindungen der Formel AA sind vorzugsweise ausgewählt aus den folgenden Formeln: 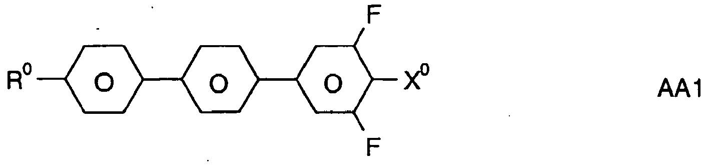 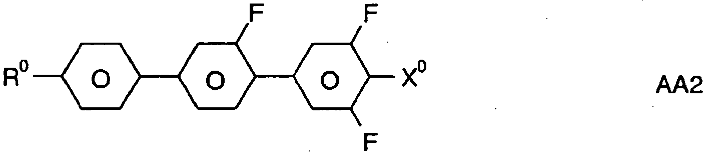 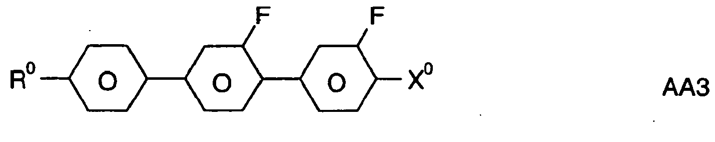 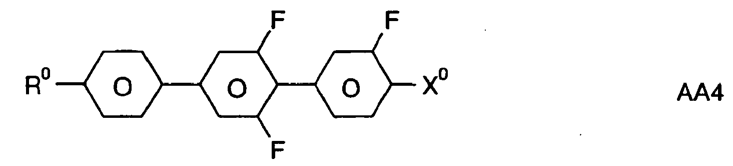 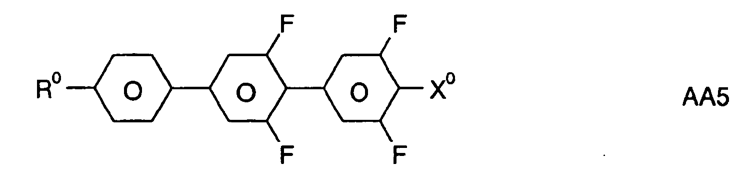 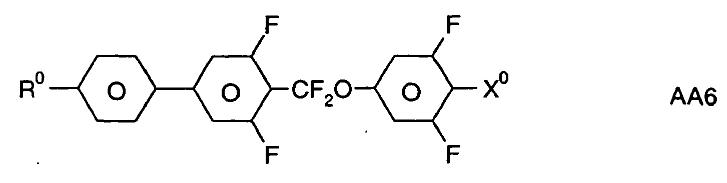 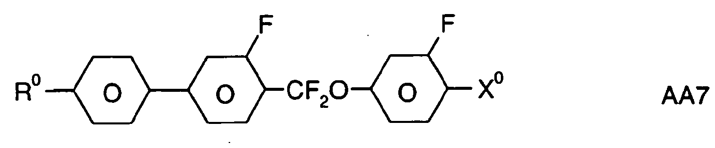 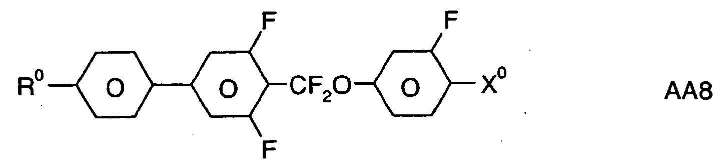 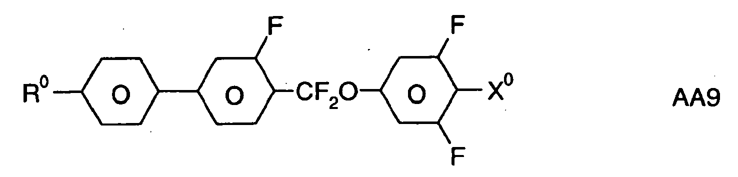 worin R⁰ und X⁰ die oben angegebene Bedeutung besitzen, und X⁰ vorzugsweise F bedeutet. Besonders bevorzugt sind Verbindungen der Formeln AA2 und AA6.
   Die Verbindungen der Formel BB sind vorzugsweise ausgewählt aus den folgenden Formeln: 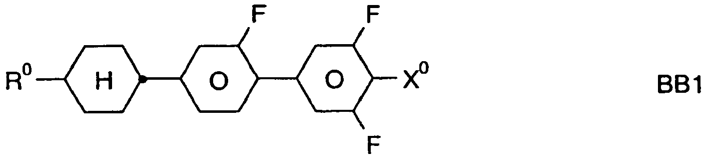 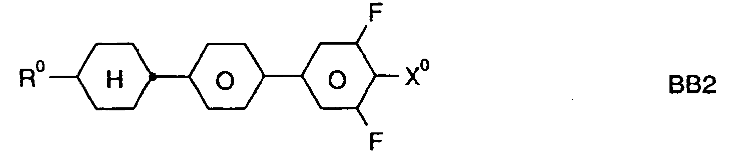 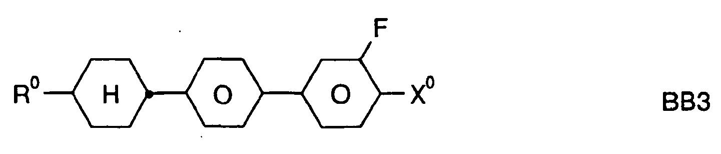 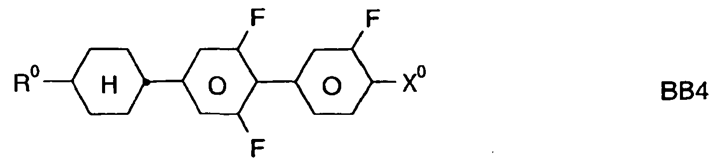 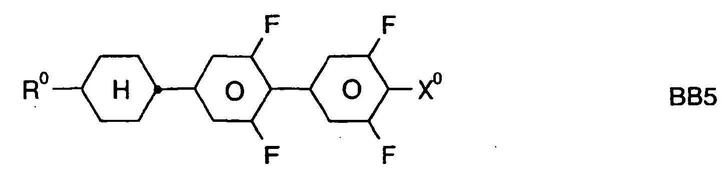 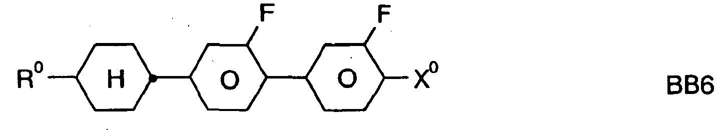 worin R⁰ und X⁰ die oben angegebene Bedeutung besitzen, und X⁰ vorzugsweise F bedeutet. Besonders bevorzugt sind Verbindungen der Formeln BB1, BB2 und BB5.
   Die Verbindungen der Formel CC sind vorzugsweise ausgewählt aus den folgenden Formeln: 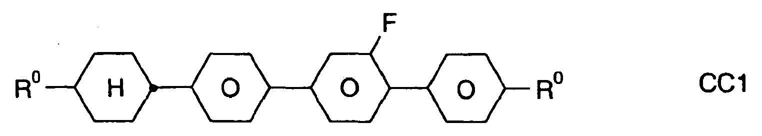 worin R⁰ bei jedem Auftreten gleich oder verschieden die oben angegebene Bedeutung besitzt, und vorzugsweise Alkyl mit 1 bis 6 C-Atomen bedeutet.
r) FK-Medium, welches 1 bis 5, vorzugsweise 1, 2 oder 3 polymerisierbare Verbindungen enthält.
s) FK-Medium, worin der Anteil an polymerisierbaren Verbindungen im Gesamtgemisch 0,05 bis 5 %, vorzugsweise 0,1 bis 1 % beträgt.
t) FK-Medium, welches 1 bis 8, vorzugsweise 1 bis 5 Verbindungen der Formel A und/oder B enthält, besonders bevorzugt ausgewählt aus den Formeln A1, A2, A3, A6, B5, B6, B9 und B10. Der Anteil dieser Verbindungen im Gesamtgemisch beträgt vorzugsweise von 5 bis 70 %, besonders bevorzugt 10 bis 40 %. Der Gehalt dieser einzelnen Verbindungen beträgt vorzugsweise jeweils 2 bis 60 %, besonders bevorzugt 2 bis 40 %.
u) FK-Medium, welches 1 bis 8, vorzugsweise 1 bis 5 Verbindungen ausgewählt aus den Formeln CY2, CY14 und PY2 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
v) FK-Medium, welches 1 bis 8, vorzugsweise 1 bis 5 Verbindungen ausgewählt aus den Formeln CY8, PY8 und B10 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
w) FK-Medium, welches 1 bis 8, vorzugsweise 1 bis 5 Verbindungen ausgewählt aus den Formeln CY9, PY7 und T2 enthält. Der Anteil dieser Verbindungen im Gesamtgemisch beträgt vorzugsweise 5 bis 50 %, besonders bevorzugt 10 bis 25 %. Der Gehalt dieser einzelnen Verbindungen beträgt vorzugsweise jeweils 2 bis 20 %.
x) FK-Medium, welches 1 bis 10, vorzugsweise 1 bis 8 Verbindungen ausgewählt aus den Formeln ZK1, ZK2, ZK3, ZK4, T1 und O1 enthält. Der Anteil dieser Verbindungen im Gesamtgemisch beträgt vorzugsweise 3 bis 45 %, besonders bevorzugt 5 bis 35 %. Der Gehalt dieser einzelnen Verbindungen beträgt vorzugsweise jeweils 2 bis 15 %.
y) FK-Medium, worin der Anteil an Verbindungen der Formel CY, PY und ZK im Gesamtgemisch mehr als 50 %, vorzugsweise mehr als 60 % beträgt.
z) FK-Medium, welches eine oder mehrere Verbindungen ausgewählt aus den Formeln Fl, N1-N10, CR und PH enthält. Der Anteil dieser Verbindungen im Gesamtgemisch beträgt vorzugsweise 2 bis 30 %. Der Gehalt dieser einzelnen Verbindungen beträgt vorzugsweise jeweils 1 bis 15 %.

Die Kombination von Verbindungen der oben genannten bevorzugten Ausführungsformen a)-z) mit den oben beschriebenen polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die Einstellung eines Pretilt-Winkels in PS(A)-Anzeigen. Insbesondere zeigen die FK-Medien in PS(A)-Anzeigen im Vergleich zu den Medien aus dem Stand der Technik deutlich verringerte Schaltzeiten, insbesondere auch der Graustufenschaltzeiten.

Vorzugsweise weist die Flüssigkristallmischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

Erfindungsgemäße FK-Medien zur Verwendung in Anzeigen des VA-Typs weisen eine negative dielektrische Anisotropie Δε auf, vorzugsweise von etwa -0,5 bis -7,5, insbesondere von etwa -2,5 bis -5,5 bei 20°C und 1 kHz.

Erfindungsgemäße FK-Medien zur Verwendung in Anzeigen des OCB-Typs weisen eine positive dielektrische Anisotropie Δε auf, vorzugsweise von etwa +7 bis +17 bei 20°C und 1 kHz.

Die Doppelbrechung Δn in erfindungsgemäßen FK-Medien zur Verwendung in Anzeigen des VA-Typs liegt vorzugsweise unter 0,16, besonders bevorzugt zwischen 0,06 und 0,14, insbesondere zwischen 0,07 und 0,12.

Die Doppelbrechung Δn in erfindungsgemäßen FK-Medien zur Verwendung in Anzeigen des OCB-Typs liegt vorzugsweise zwischen 0,14 und 0,22, insbesondere zwischen 0,16 und 0,22.

Die Dielektrika können auch weitere, dem Fachmann bekannte und in der Literatur beschriebene Zusätze enthalten. Beispielsweise können 0 bis 15 Gew.-% pleochroitische Farbstoffe zugesetzt werden, ferner Nanopartikel, Leitsalze, vorzugsweise Ethyl-dimethyldodecylammonium-4-hexoxy-benzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der bevorzugten Ausführungsformen a)-z) der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Es versteht sich für den Fachmann von selbst, dass die erfindungsgemäßen FK-Medien auch Verbindungen enthalten können,
worin beispielsweise H, N, O, Cl, F durch die entsprechenden Isotope ersetzt sind.

Der Aufbau der erfindungsgemäßen FK-Anzeigen entspricht der für PS(A)-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Colour Filter-Seite unstrukturiert ist und lediglich die Elektrode auf der TFT-Seite Schlitze aufweist. Besonders geeignete und bevorzugte Elektrodenstrukturen für PSA-VA-Anzeigen sind beispielsweise in US 2006/0066793 A1 beschrieben.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Folgende Abkürzungen werden verwendet:
(n, m, z: jeweils unabhängig voneinander 1, 2, 3, 4, 5 oder 6)

**Tabelle A**

| | |
|---|---|
| 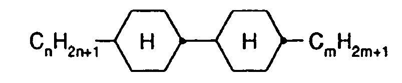 | 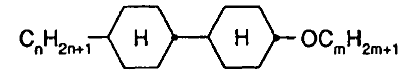 |
| CCH-nm | CCH-nOm |
| 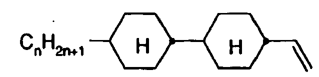 | 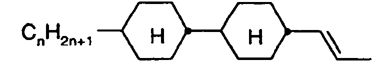 |
| CC-n-V | CC-n-V1 |
| 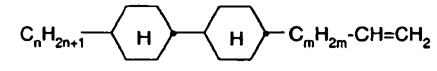 | 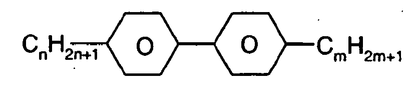 |
| CC-n-mV | PP-n-m |
| 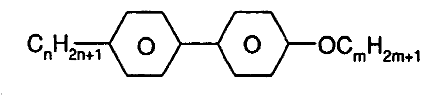 | 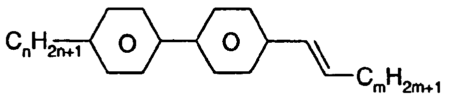 |
| PP-n-Om | PP-n-Vm |
| 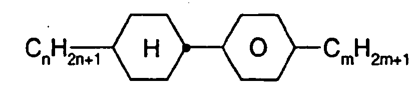 | 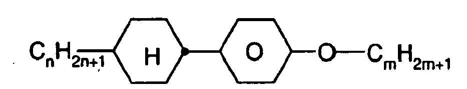 |
| PCH-nm | PCH-nOm |
| 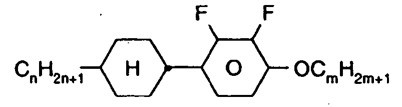 | 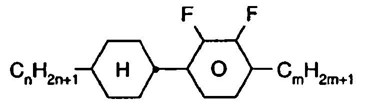 |
| CY-n-Om | CY-n-m |
| 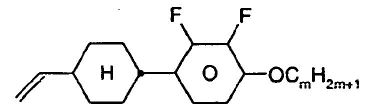 | |
| | |
| | 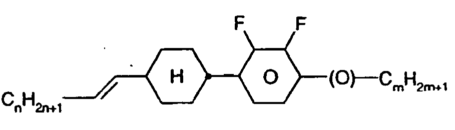 |
| CY-V-Om | CY-nV-(O)m |
| 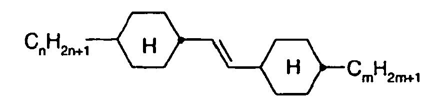 | 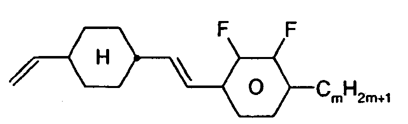 |
| CVC-n-m | CVY-V-m |
| 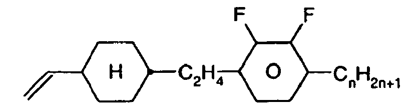 | 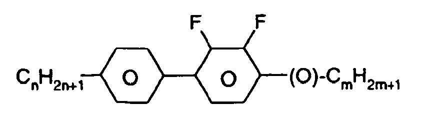 |
| CEY-V-m | PY-n-(O)m |
| 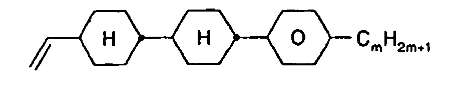 | 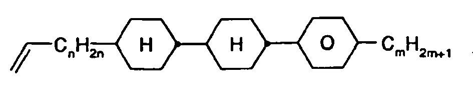 |
| CCP-V-m | CCP-Vn-m |
| 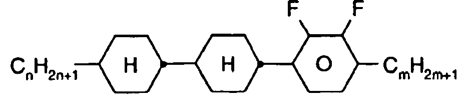 | 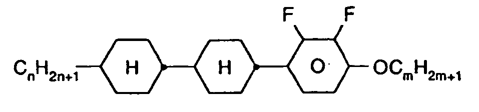 |
| CCY-n-m | CCY-n-Om |
| 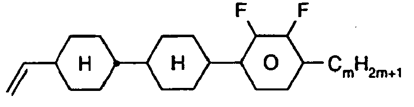 | 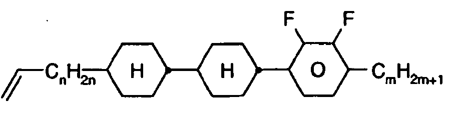 |
| CCY-V-m | CCY-Vn-m |
| 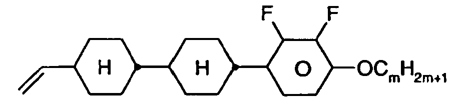 | 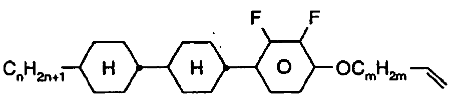 |
| CCY-V-Om | CCY-n-OmV |
| 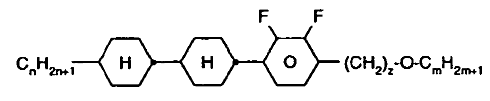 | 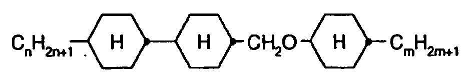 |
| CCY-n-zOm | CCOC-n-m |
| 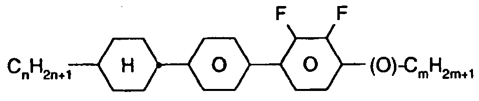 | 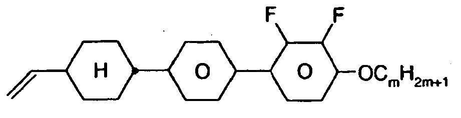 |
| CPY-n-(O)m | CPY-V-Om |
| 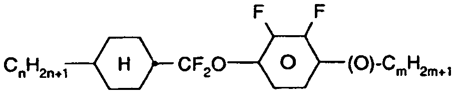 | 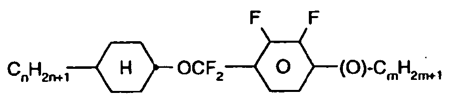 |
| CQY-n-(O)m | CQIY-n-(O)m |
| 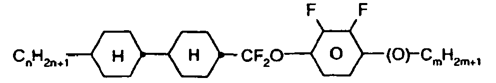 | 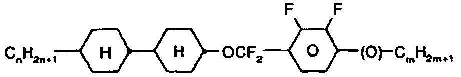 |
| CCQY-n-(O)m | CCQIY-n-(O)m |
| 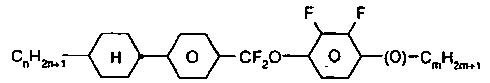 | 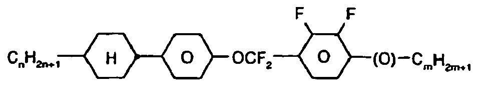 |
| CPQY-n-(O)m | CPQIY-n-Om |
| 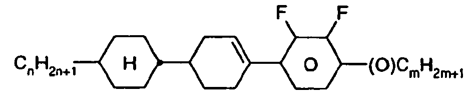 | 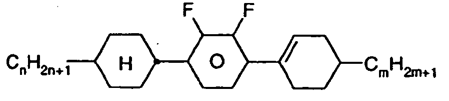 |
| CLY-n-(O)m | CYLI-n-m |
| 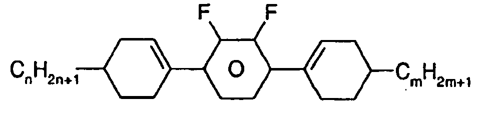 | 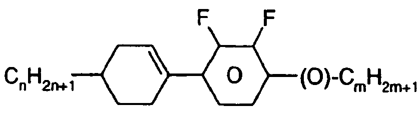 |
| | |
| LYLI-n-m | LY-n-(O)m |
| 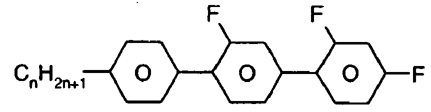 | 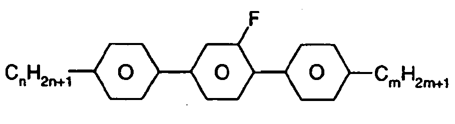 |
| PGIGI-n-F | PGP-n-m |
| 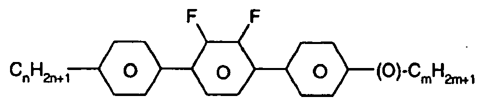 | 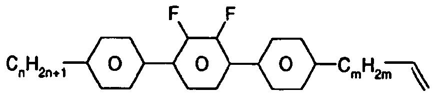 |
| PYP-n-(O)m | PYP-n-mV |
| 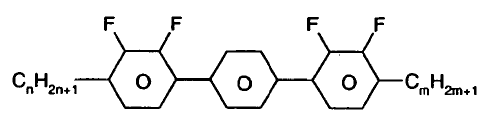 | 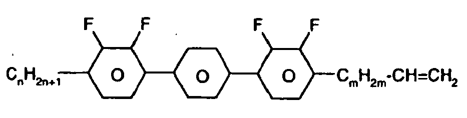 |
| YPY-n-m | YPY-n-mV |
| 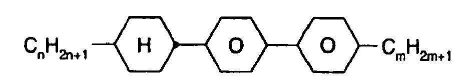 | 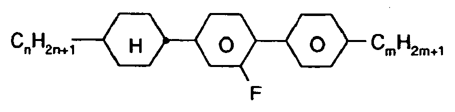 |
| BCH-nm | BCH-nmF |
| 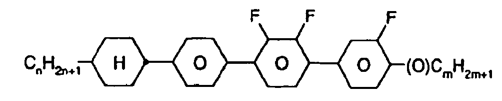 | 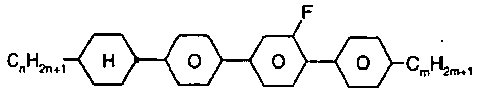 |
| CPYP-n-(O)m | CPGP-n-m |
| 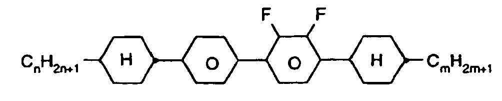 | 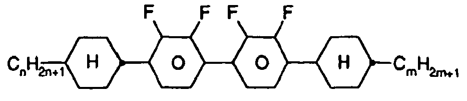 |
| CPYC-n-m | CYYC-n-m |
| 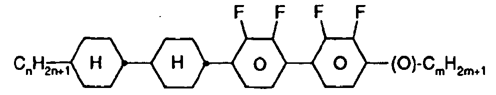 | 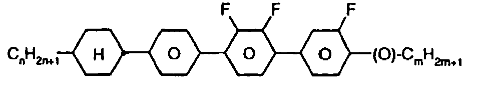 |
| CCYY-n-m | CPYG-n-(O)m |
| 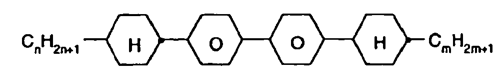 | 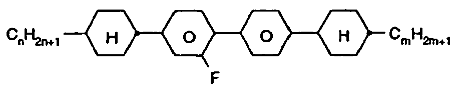 |
| CBC-nm | CBC-nmF |
| 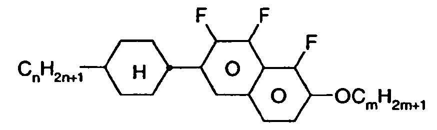 | 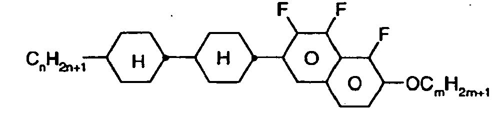 |
| CNap-n-Om | CCNap-n-Om |
| 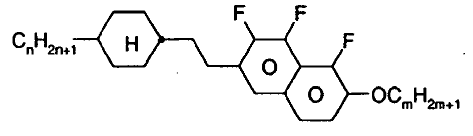 | 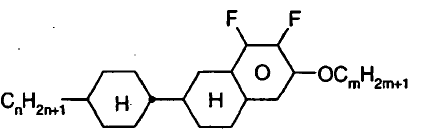 |
| CENap-n-Om | CTNap-n-Om |
| 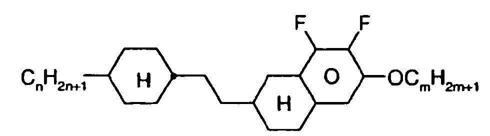 | 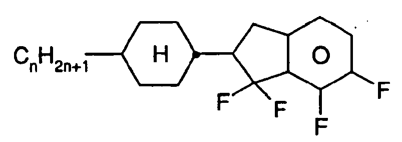 |
| CETNap-n-Om | CK-n-F |
| 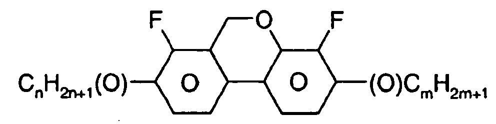 | 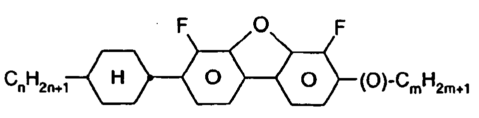 |
| DFDBC-n(O)-(O)m | C-DFDBF-n-(O)m |

In einer bevorzugten Ausführungsform der vorliegenden Erfindung enthalten die erfindungsgemäßen FK-Medien eine oder mehrere Verbindungen ausgewählt aus der Gruppe bestehend aus Verbindungen der Tabelle A.

**Tabelle B**

| In der Tabelle B werden mögliche Dotierstoffe angegeben, die den erfindungsgemäßen FK-Medien zugesetzt werden können. | |
|---|---|
| 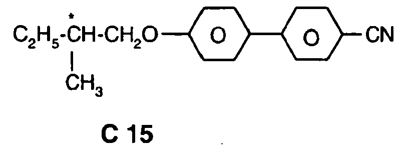 | 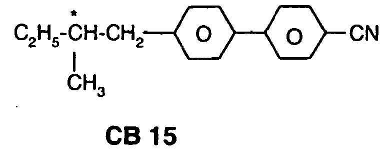 |
| 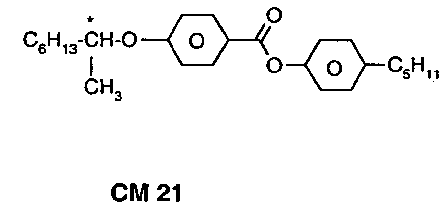 | 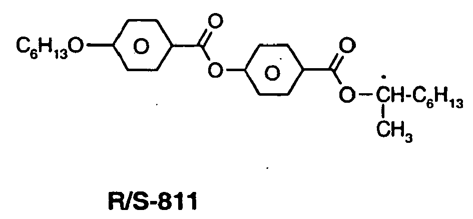 |
| 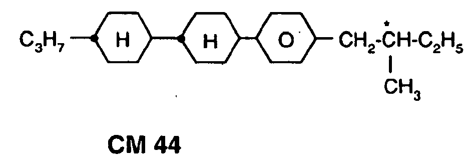 | 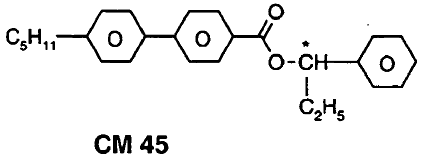 |
| 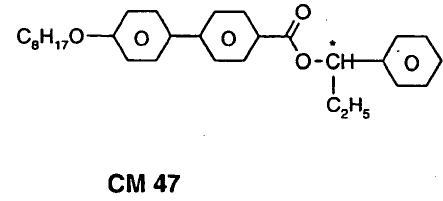 | 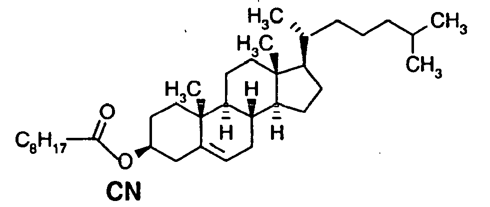 |
| 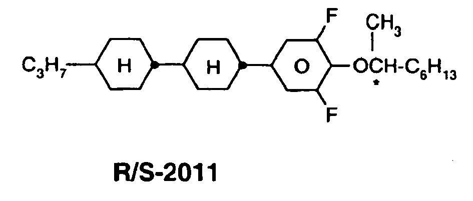 | 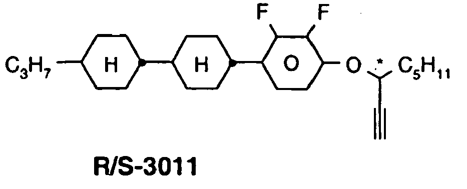 |
| 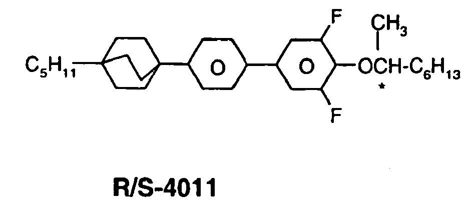 | 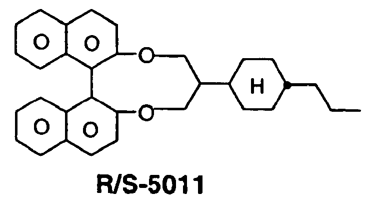 |
| 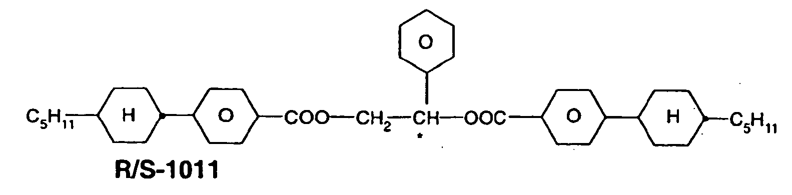 | |

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Gruppe bestehend aus Verbindungen der Tabelle B.

**Tabelle C**

| In der Tabelle C werden mögliche Stabilisatoren angegeben, die den erfindungsgemäßen FK-Medien zugesetzt werden können. (n bedeutet hier eine ganze Zahl von 1 bis 12) | |
|---|---|
| 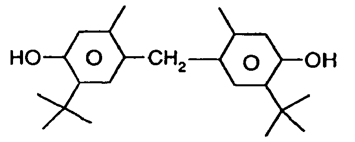 | 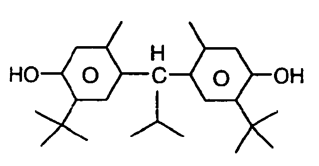 |
| 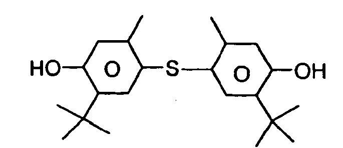 | 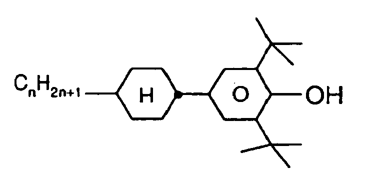 |
| 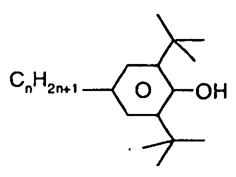 | 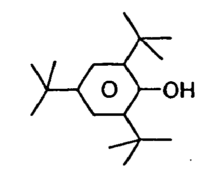 |
| 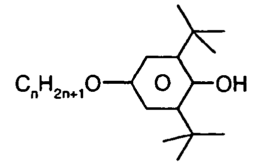 | 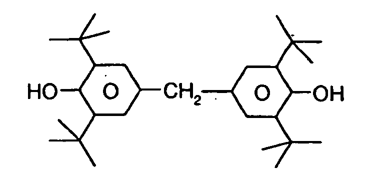 |
| 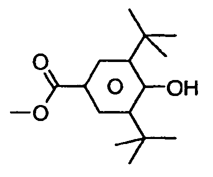 | 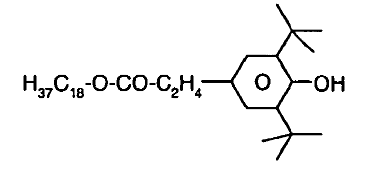 |
| 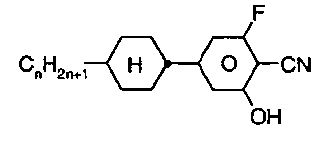 | 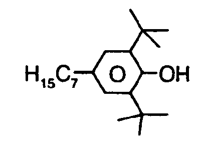 |
| 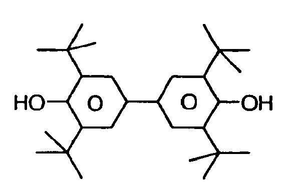 | 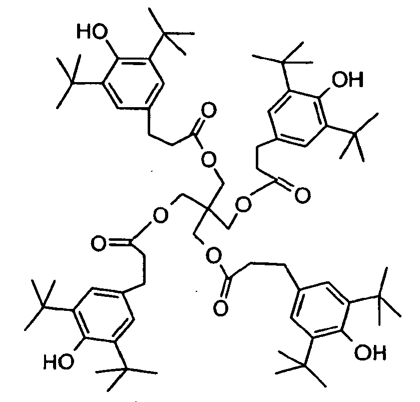 |
| 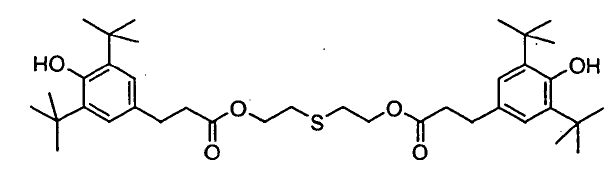 | |
| 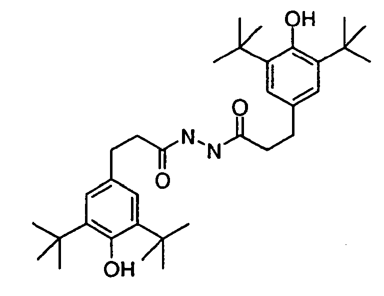 | 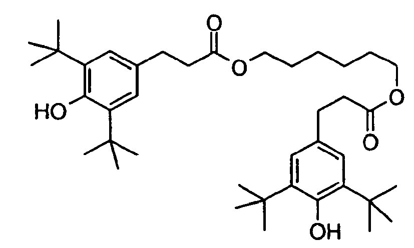 |
| 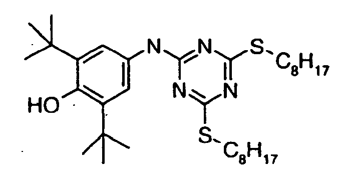 | 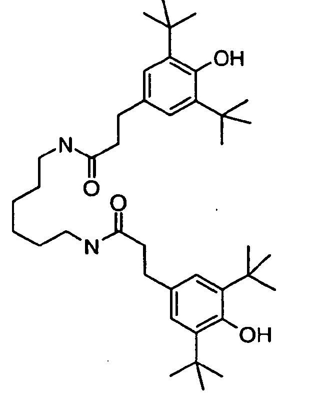 |
| 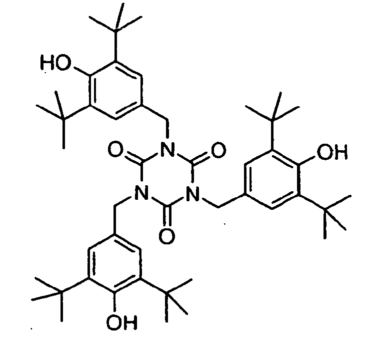 | 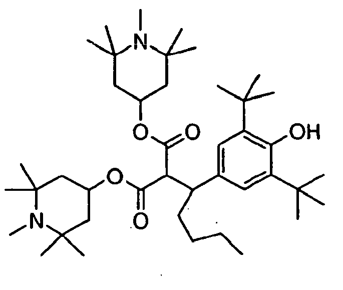 |
| 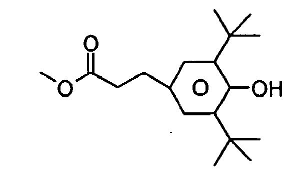 | 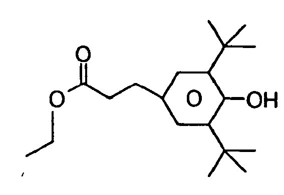 |
| 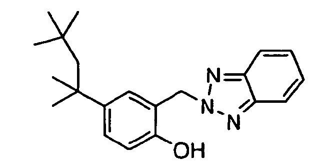 | 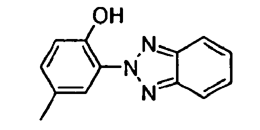 |
| 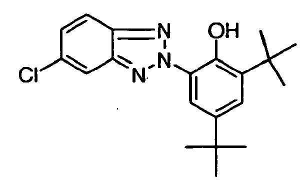 | 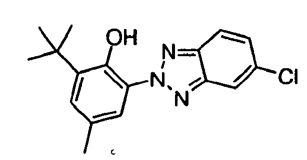 |
| 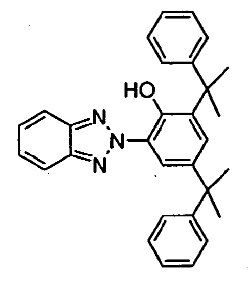 | 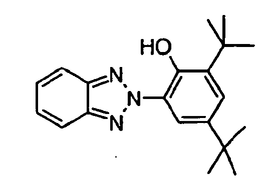 |
| 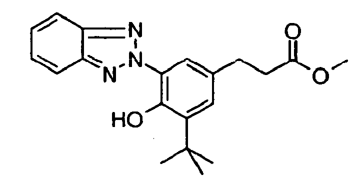 | 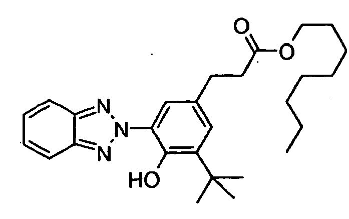 |
| 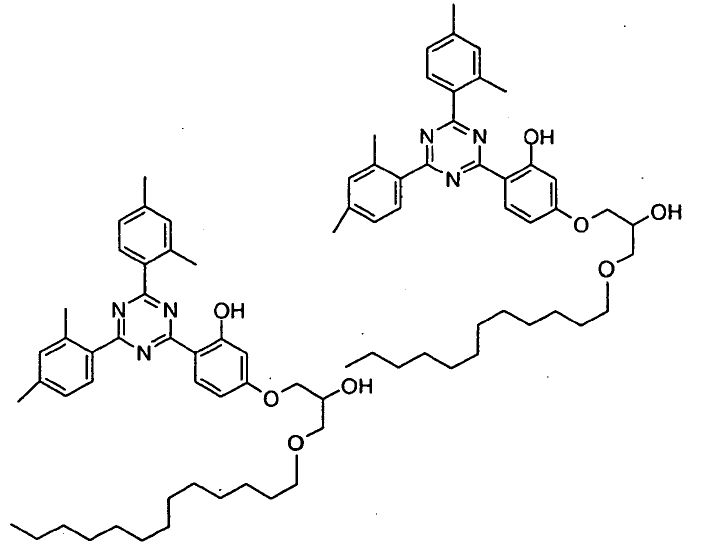 | |
| 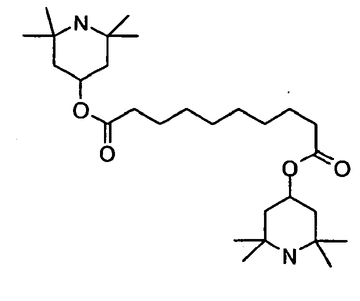 | 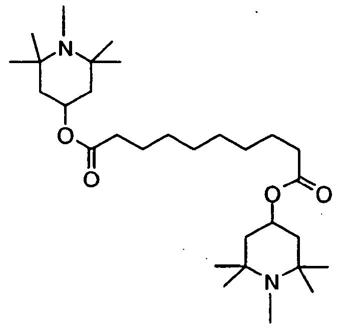 |

Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle C.

Außerdem werden folgende Abkürzungen und Symbole verwendet:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,

- Δn: optische Anisotropie bei 20°C und 589 nm,
- ε_{┴}: dielektrische Suszeptibilität senkrecht zum Direktor bei 20°C und 1 kHz,
- ε∥: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen in Gewichtsprozent angegeben, und beziehen sich auf die entsprechende Mischung oder Mischungskomponente soweit nicht explizit anders angegeben.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige weist zwei planparallele Trägerplatten im Abstand von 4 µm und Elektrodenschichten mit darüberliegenden Orientierungsschichten aus geriebenem Polyimid auf den Innenseiten der Trägerplatten auf, welche eine homöotrope Randorientierung der Flüssigkristallmoleküle bewirken.

Die polymerisierbaren Verbindungen werden in der Anzeige durch UV-Bestrahlung bei vorgegebener Zeit polymerisiert, wobei gleichzeitig eine Spannung an die Anzeige angelegt wird (üblicherweise 10V bis 30V Wechselstrom, 1 kHz). In den Beispielen wurde, falls nicht anders angegeben, eine Quecksilberdampflampe mit 28 mW/cm² verwendet, die Intensität wurde mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein kleiner Wert (d.h. eine große Abweichung vom 90°-Winkel) entspricht dabei einem großen Tilt.

Falls nicht anders beschrieben werden in den nachfolgenden Beispielen die Messungen des Tiltwinkels wie folgt durchgeführt: Zur FK-Host-Mischung werden 0.3% einer polymerisierbaren monomeren Verbindung zugesetzt, und die dadurch entstandene Mischung in VA-e/o-Testzellen gefüllt (90° gerieben, Orientierungsschicht VA-Polyimid, Schichtdicke d≈4µm). Unter Anlegen einer Spannung U=24V (Wechselstrom) wird die Zelle 2 Minuten lang mit UV-Licht der Intensität I=50mW/cm² bestrahlt, dadurch erfolgt Polymerisation der monomeren Verbindung. Gegebenenfalls wird in einem zweiten Versuch der FK/Monomer-Mischung noch zusätzlich 0.006% des Photoinitiators Irgacure-651 zugesetzt und die Belichtungszeit auf 2 Minuten verkürzt. Vor und nach der UV-Bestrahlung wird per Drehkristall-Experiment (Autronic-Melchers TBA-105) der Tiltwinkel bestimmt. Ein kleiner Wert (d.h. eine große Abweichung vom 90°-Winkel) entspricht dabei einem großen Tilt.

Der HR -Wert wird wie folgt gemessen: Zur FK-Host-Mischung werden 0.3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d≈4µm). Der HR-Wert wird nach 5min bei 100°C vor und nach 2h UV-Belastung (suntest) bei 1V, 60Hz, 64µs pulse bestimmt (Messgerät: Autronic-Melchers VHRM-105).

### Beispiel 1

Die nematische FK-Host-Mischung N1 wird wie folgt formuliert

| | | | |
|---|---|---|---|
| CY-3-04 | 23,50 % | Kp. | + 86,5 |
| CCY-3-O2 | 8,00 % | Δn | 0,1199 |
| CCY-3-O3 | 8,00 % | Δε | - 4,1 |
| CCY-4-O2 | 1,50 % | ε∥ | 3,7 |
| CPY-2-O2 | 10,00 % | K₃/K₁ | 1,03 |
| CPY-3-O2 | 10,00 % | γ₁ | 176 |
| PYP-2-3 | 12,00 % | V₀ | 2,05 |
| PYP-2-4 | 2,50 % | | |
| CCP-V-1 | 1,50 % | | |
| CC-3-V1 | 8,00 % | | |
| CC-5-V | 15,00 % | | |

Durch Zugabe von 0.3 % der Methacrylatverbindungen M1 und M2 zur FK-Host-Mischung N1 werden die erfindungsgemäßen polymerisierbaren Mischungen MM1 und MM2 hergestellt. Durch Zugabe von 0.3 % der strukturanalogen Acrylatverbindungen A1 und A2 zu N1 werden außerdem die polymerisierbaren Vergleichsmischungen MA1 und MA2 hergestellt.

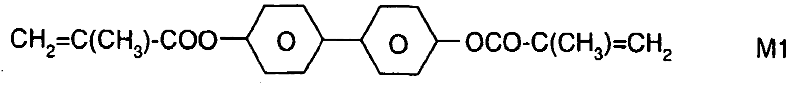

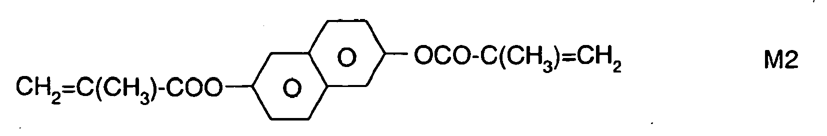

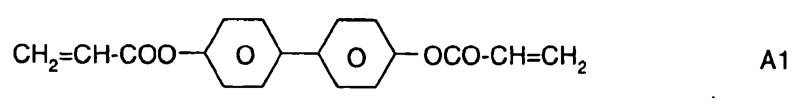

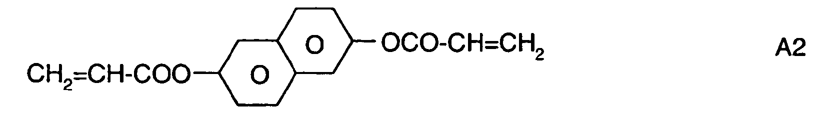

Für alle Mischungen wird der HR bei 100°C (nach 5 Minuten Temperierzeit) wie oben angegeben vor und nach UV-Belastung gemessen. Für die polymerisierbaren Mischungen wird außerdem der Tiltwinkel nach Polymerisation wie oben angegeben bestimmt (ohne Photoinitiator). Die Ergebnisse sind in Tabelle 1 zusammengefasst.

**Tabelle 1**

| Mischung | Monomer | HR [%] | | Tilt [°] |
|---|---|---|---|---|
| | | vor UV | nach 2h UV | |
| N1 | - | 81.6 | 59.7 | - |
| MM1 | M1 | 79.8 | 75.2 | 75.7 |
| MM2 | M2 | 79.3 | 69.6 | 78.9 |
| MA1 | A1 | 79.3 | 47.4 | 88.2 |
| MA2 | A2 | 80.6 | 34.0 | 87.0 |

Wie aus Tabelle 1 ersichtlich ist, zeigen die erfindungsgemäßen Mischungen MM1 und MM2 mit Methacrylaten deutlich höhere VHR-Werte nach UV-Belastung als die Vergleichsmischungen MA1 und MA2 mit Acrylaten. Zudem zeigen die erfindungsgemäßen Mischungen MM1 und MM2 mit Methacrylaten deutlich ausgeprägtere Tiltwinkel (d.h. geringere °-Werte) als die Vergleichsmischungen MA1 und MA2 mit Acrylaten.

### Beispiel 2

Die nematische FK-Mischung N2 wird wie folgt formuliert

| | | | |
|---|---|---|---|
| CCH-501 | 9,00 % | Kp. | + 70,0 |
| CCH-35 | 14,00 % | Δ | 0,0825 |
| PCH-53 | 8,00 % | Δε | - 3,5 |
| CY-3-04 | 14,00 % | ε_{∥} | 3,5 |
| CY-5-O4 | 13,00% | K₃/K₁ | 1,00 |
| CCY-3-O2 | 8,00% | γ₁ | 141 |
| CCY-5-O2 | 8,00 % | V₀ | 2,06 |
| CCY-2-1 | 9,00 % | | |
| CCY-3-1 | 9,00 % | | |
| CPY-2-02 | 8,00 % | | |

Durch Zugabe von jeweils 10% der Alkenylverbindungen CC-3-V, CC-4-V, CC-5-V, CC-1-V3, CC-3-V1, sowie der homologen Verbindung CCH-34 ohne Alkenylgruppe, zur FK-Mischung N2 werden die FK-HostMischungen N3-N8 hergestellt.

Durch Zugabe von 0.3 % der Methacrylatverbindung M1 zu den HostMischungen N3-N8 werden die erfindungsgemäßen polymerisierbaren Mischungen MM3-MM8 hergestellt.

Der Tiltwinkel der Mischungen nach Polymerisation wird wie oben angegeben bestimmt (ohne Photoinitiator). Die Ergebnisse sind in Tabelle 2 zusammengefasst.

**Tabelle 2**

| Host-Mischung | Mischung | zugesetzte Verbindung | | Tilt [°] |
|---|---|---|---|---|
| | | Acronym | Konzentration | |
| N3 | MM3 | CC-3-V | 10 % | 82.9 |
| N4 | MM4 | CC-4-V | 10 % | 82.7 |
| N5 | MM5 | CC-5-V | 10 % | 82.7 |
| N6 | MM6 | CC-1-V3 | 10 % | 83.3 |
| N7 | MM7 | CC-3-V1 | 10 % | 82.7 |
| N8 | MM8 | CCH-34 | 10 % | 82.5 |

Wie aus Tabelle 2 ersichtlich ist, zeigen alle erfindungsgemäßen Mischungen MM3-MM8 einen deutlich ausgeprägten Tiltwinkel (d.h. kleine Werte zwischen 82° und 84°). Dabei ist der Tiltwinkel für alle Alkenylverbindungen ungefähr gleich, und auch nur geringfügig kleiner als in der Mischung mit der "Nicht-Alkenylverbindung" CCH-34. In den erfindungsgemäßen Mischungen wird also durch den Zusatz von verschiedenen Alkenylverbindungen, bei gleichzeitiger Verwendung von Methacrylaten als polymerisierbare Komponente, nur ein geringer negativer Einfluss auf den Tiltwinkel festgestellt.

### Beispiel 3

Durch Zugabe von 20% der Alkenylverbindung CC-3-V zur FK-Mischung N2 aus Beispiel 2 wird die FK-Host-Mischung N9 hergestellt.

Durch Zugabe von 0.3 % der Methacrylatverbindungen M1 und M2 zur FK-Host-Mischung N2 bzw. N9 werden die erfindungsgemäßen polymerisierbaren Mischungen MM9-MM12 hergestellt. Durch Zugabe von 0.3 % der strukturanalogen Acrylatverbindungen A1 und A2 zu N2 bzw. N9 werden außerdem die polymerisierbaren Vergleichsmischungen MA3-MA6 hergestellt.

Für alle Mischungen wird der HR wie oben angegeben vor und nach UV-Belastung gemessen. Für die polymerisierbaren Mischungen wird außerdem der Tiltwinkel nach Polymerisation wie oben angegeben bestimmt (ohne Photoinitiator). Die Ergebnisse sind in Tabelle 3 zusammengefasst.

**Tabelle 3**

| Mischung | Host* | Monomer | HR [%] | | Tilt [°] |
|---|---|---|---|---|---|
| | | | vor UV | nach 2h UV | |
| N2 | - | - | 92.5 | 88.1 | - |
| N9 | N2 | - | 98.2 | 96.3 | - |
| MM9 | N2 | M1 | 93.6 | 93.2 | 85.2 |
| MM10 | N9 | M1 | 97.8 | 91.0 | 86.7 |
| MM11 | N2 | M2 | 93.1 | 94.2 | 81.4 |
| MM12 | N9 | M2 | 97.9 | 89.5 | 83.8 |
| MA3 | N2 | A1 | 93.8 | 80.2 | 88.2 |
| MA4 | N9 | A1 | 97.8 | 67.8 | 89.5 |
| MA5 | N2 | A2 | 93.1 | 91.1 | 84.2 |
| MA6 | N9 | A2 | 97.0 | 55.0 | 89.9 |

| | | | | | |
|---|---|---|---|---|---|
| * N9 = N2 + 20% CC-3-V | | | | | |

Wie aus Tabelle 3 ersichtlich ist, zeigen die erfindungsgemäßen Mischungen MM9-MM12 mit Methacrylaten generell deutlich höhere HR-Werte nach UV-Belastung sowie deutlich höhere Tiltwinkel (d.h. geringere °-Werte) als die analogen Vergleichsmischungen MA3-MA6 mit Acrylaten.

Außerdem zeigt Tabelle 3, dass die reine FK-Hostmischung N9 (mit der Alkenylverbindung CC-3-V) im Vergleich zur reinen FK-Hostmischung N2 (ohne Alkenylverbindung) einen höheren HR-Wert aufweist. Durch Zusatz einer polymerisierbaren Verbindung wird dieser HR-Wert bei der alkenylhaltigen FK-Hostmischung N9 (mit Alkenylverbindung) teilweise deutlich verringert. Im Gegensatz dazu wird der HR-Wert bei N2 durch Zusatz der polymerisierbaren Verbindung teilweise sogar erhöht. Die Verringerung des HR-Werts von N9 ist aber bei Verwendung der Methacrylaten M1 und M2 deutlich schwächer ausgeprägt als bei den Acrylaten A1 und A2.

Die Verwendung von Methacrylaten hilft also, den Abfall des HR bei alkenylhaltigen FK-Hostmischungen in der PS(A)-Anzeige zu begrenzen.

### Beispiel 4

Durch Zugabe von 10% der Verbindung CLY-3-03 (mit einer Cyclohexenylgruppe) zur FK-Mischung N2 aus Beispiel 2 wird die FK-Host-Mischung N10 hergestellt.

Durch Zugabe von 0.3 % der Methacrylatverbindung M2 zur FK-Host-Mischung N2 bzw. N10 werden die erfindungsgemäßen polymerisierbaren Mischungen MM13 und MM14 hergestellt. Durch Zugabe von 0.3 % der Acrylatverbindung A1 zu N2 bzw. N10 werden außerdem die polymerisierbaren Vergleichsmischungen MA7 und MA8 hergestellt.

Für die polymerisierbaren Mischungen wird der Tiltwinkel nach Polymerisation wie oben angegeben bestimmt (ohne Photoinitiator). Die Ergebnisse sind in Tabelle 4 zusammengefasst.

**Tabelle 4**

| Mischung | Host* | Monomer | Tilt [°] |
|---|---|---|---|
| MM13 | N2 | M2 | 81.4 |
| MM14 | N10 | M3 | 80.7 |
| MA7 | N2 | A1 | 88.2 |
| MA8 | N10 | A1 | 89.5 |

| | | | |
|---|---|---|---|
| * N10 = N2 + 10% CLY-3-03 | | | |

Die erfindungsgemäßen Mischungen MM13 und MM14 mit Methacrylaten zeigen deutlich ausgeprägtere Tiltwinkel (d.h. geringere °-Werte) als die Vergleichsmischungen MA7 und MA8 mit Acrylaten.

## Patentansprüche

1. Flüssigkristall- (FK)-Medium enthaltend eine oder mehrere polymerisierbare Verbindungen, wobei alle im FK-Medium vorhandenen polymerisierbaren Verbindungen ausschließlich Methacrylatgruppen als polymerisierbare Gruppen aufweisen, sowie eine oder mehrere niedermolekulare mesogene oder flüssigkristalline Verbindungen mit einer oder mehreren Alkenylgruppen, welche gegenüber einer Polymerisationsreaktion unter den zur Polymerisation der Methacrylatgruppen verwendeten Bedingungen stabil sind.

2. FK-Medium nach Anspruch 1, enthaltend eine polymerisierbare Komponente A), enthaltend eine oder mehrere polymerisierbare Verbindungen, wobei alle im FK-Medium vorhandenen polymerisierbaren Verbindungen ausschließlich Methacrylatgruppe(n) als polymerisierbare Gruppe(n) enthalten, und eine flüssigkristalline Komponente B) enthaltend eine oder mehrere niedermolekulare Verbindungen, darunter mindestens eine mesogene oder flüssigkristalline Verbindung mit einer oder mehreren Alkenylgruppen, welche gegenüber einer Polymerisationsreaktion unter den zur Polymerisation der Methacrylatgruppen verwendeten Bedingungen stabil sind.

3. FK-Medium nach Anspruch 1 oder 2, **dadurch gekennzeichnet, dass** die polymerisierbare Komponente eine oder mehrere polymerisierbare Verbindungen mit einer Methacrylatgruppe (monoreaktiv) und eine oder mehrere polymerisierbare Verbindungen mit zwei oder mehr Methacrylatgruppen (di- oder multireaktiv) enthält.

4. FK-Medium nach einem oder mehreren der Ansprüche 1 bis 3, **dadurch gekennzeichnet, dass** die polymerisierbare Komponente ausschließlich polymerisierbare Verbindungen mit zwei Methacrylatgruppen (direaktiv) enthält.

5. FK-Medium nach einem oder mehreren der Ansprüche 1 bis 4, **dadurch gekennzeichnet, dass** die polymerisierbaren Verbindungen aus Formel I ausgewählt sind:
R^{a}-A¹-(Z¹-A²)ₘ₁-R^{b} I
worin die einzelnen Reste folgende Bedeutung haben
A¹ und A² jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche optional durch L ein- oder mehrfach substituiert ist,
Z¹ bei jedem Auftreten gleich oder verschieden -O-, -S-, - CO-, -CO-O-, -OCO-, -O-CO-O-, -OCH₂-, -CH₂O-, - SCH₂-, -CH₂S-, -CF₂O-, -OCF₂-, -CF₂S-, -SCF₂-, - (CH₂)ₙ₁-, -CF₂CH₂-, -CH₂CF₂-, -(CF₂)ₙ₁-, -CH=CH-, - CF=CF-, -C≡C-, -CH=CH-COO-, -OCO-CH=CH-, CR⁰R⁰⁰ oder eine Einfachbindung,
L, R^{a} und R^{b} jeweils unabhängig voneinander H, Halogen, SF₅, NO₂, eine Kohlenstoffgruppe oder Kohlenwasserstoffgruppe, wobei die Verbindungen mindestens einen Rest L, R^{a} und R^{b} enthalten, der eine Gruppe P-Sp- bedeutet oder enthält,
R⁰ und R⁰⁰ jeweils unabhängig voneinander H oder Alkyl mit 1 bis 12 C-Atomen,
P CH₂=C(CH₃)-COO-,
Sp eine Abstandsgruppe oder eine Einfachbindung,
m1 0, 1, 2, 3 oder 4,
n1 1, 2, 3 oder 4.

6. FK-Medium nach Anspruch 5, **dadurch gekennzeichnet, dass** A¹ A², Z¹, Sp und m1 die in Anspruch 5 angegebene Bedeutung haben, und
A¹ und A² jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂- Gruppen durch O und/oder S ersetzt sein können, 1,4- Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7,-methano-indan-2,5-diyl, wobei alle diese Gruppen unsubstituiert oder durch L ein- oder mehrfach substituiert sein können,
L P-Sp-, OH, CH₂OH, F, Cl, Br, I, -CN, -NO₂, -NCO, - NCS, -OCN, -SCN, -C(=O)N(R^{x})₂, -C(=O)Y¹, -C(=O)R^{x}, -N(R^{X})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl oder P-Sp- ersetzt sein können,
Y¹ Halogen,
R^{x} P-Sp-, H, Halogen, geradkettiges, verzweigtes oder cyclisches Alkyl mit 1 bis 25 C-Atomen, worin auch eine oder mehrere nicht benachbarte CH₂-Gruppen durch - O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
R^{a} und R^{b} jeweils unabhängig voneinander P-Sp-, H, L wie oben definiert, oder geradkettiges oder verzweigtes Alkyl mit 1 bis 25 C-Atomen, worin auch eine oder mehrere nicht benachbarte CH₂-Gruppen jeweils unabhängig voneinander durch -C(R^{x})=C(R^{x})-, -C≡C-, -N(R^{x})-, -O-, - S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können,
bedeuten, wobei mindestens einer der Reste R^{a}, R^{b} und L mindestens eine Gruppe P-Sp- enthält.

7. FK-Medium nach Anspruch 5 oder 6, **dadurch gekennzeichnet, dass** die polymerisierbaren Verbindungen aus folgenden Unterformeln ausgewählt sind: 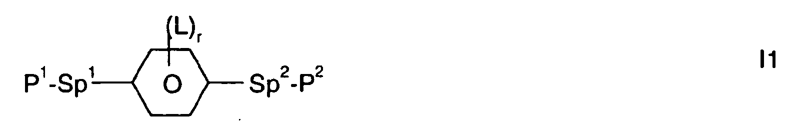 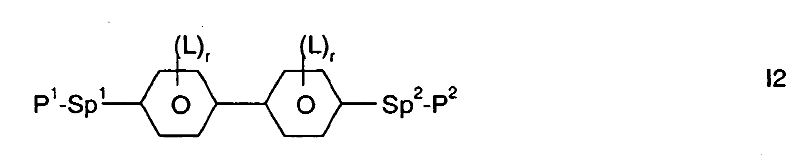 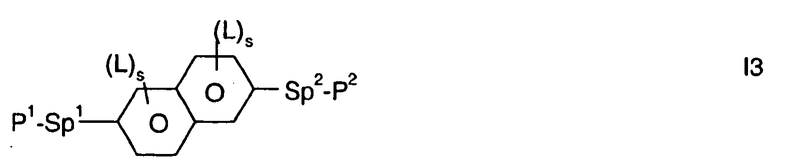 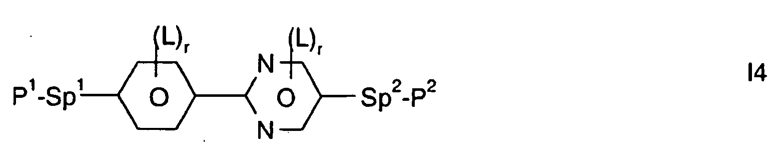 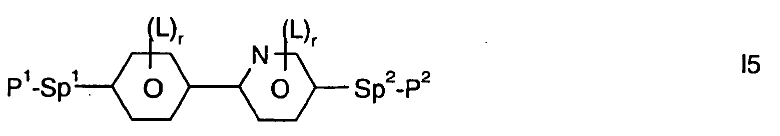 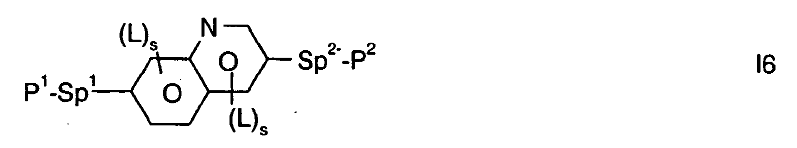 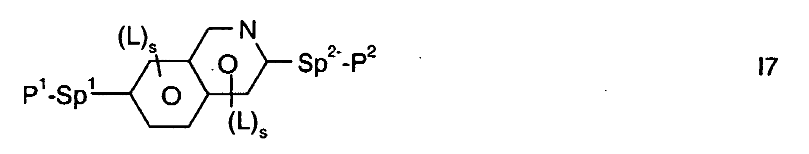 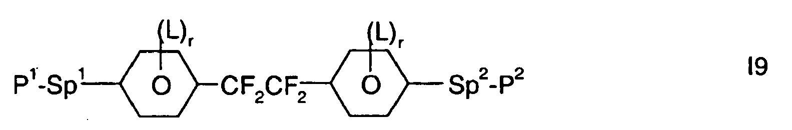 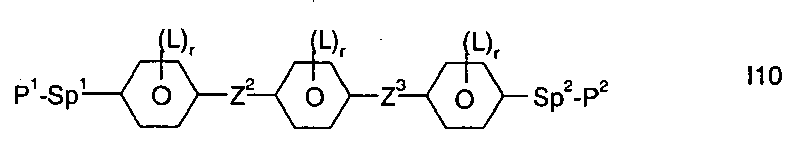 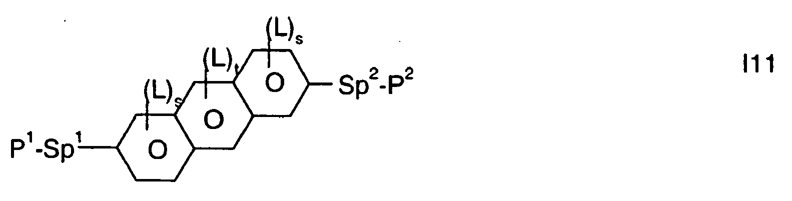 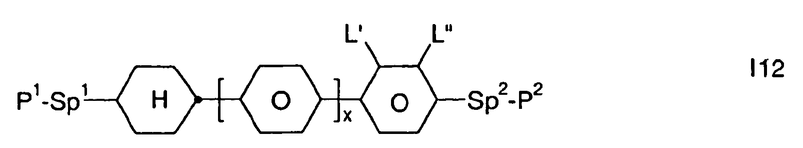 worin
P¹ und P² die für P angegebene Bedeutung besitzen,
Sp¹ und Sp² eine der für Sp angegebenen Bedeutungen besitzen oder eine Einfachbindung bedeuten,
Z² und Z³ jeweils unabhängig voneinander -COO- oder -OCO bedeuten,
L die in Anspruch 5 angegebene Bedeutung hat,
L' und L" jeweils unabhängig voneinander H, F oder Cl bedeuten,
r 0, 1, 2, 3 oder 4 bedeutet,
s 0, 1, 2 oder 3 bedeutet,
t 0, 1 oder 2 bedeutet,
x 0 oder 1, und
R^{y} und R^{z} jeweils unabhängig voneinander H oder CH₃ bedeuten.

8. FK-Medium nach einem oder mehreren der Ansprüche 1 bis 7, **dadurch gekennzeichnet, dass** die niedermolekulare Komponente eine oder mehrere Verbindungen ausgewählt aus folgenden Formeln enthält: 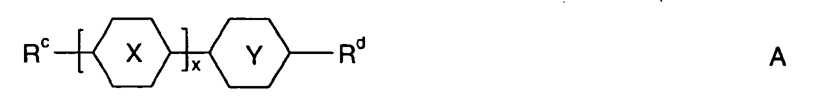 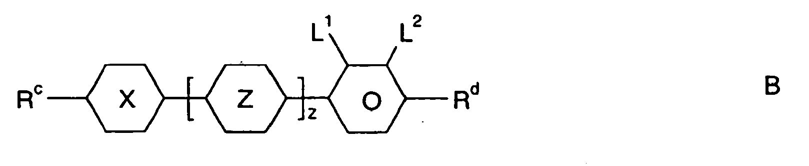 worin die einzelnen Reste, bei jedem Auftreten gleich oder verschieden, jeweils unabhängig voneinander folgende Bedeutung besitzen: 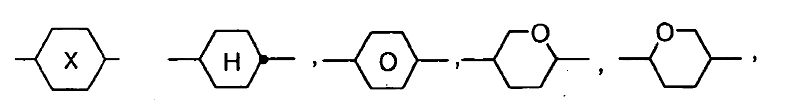 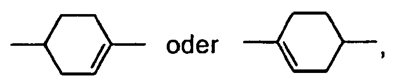 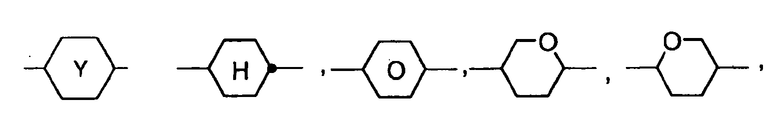 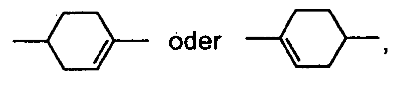 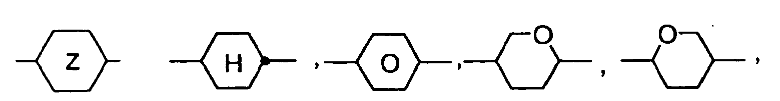 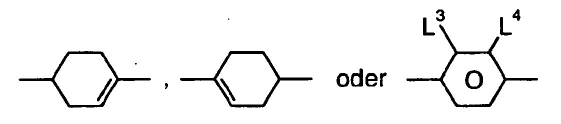
R^{c} Alkenyl mit 2 bis 9 C-Atomen, oder, falls mindestens einer der Ringe X, Y und Z Cyclohexenyl bedeutet, auch eine der Bedeutungen von R^{d},
R^{d} Alkyl mit 1 bis 12 C-Atomen, worin auch eine oder zwei nicht benachbarte CH₂-Gruppen durch -O-, -CH=CH-, -CO-, -OCO- oder -COO- so ersetzt sein können, dass O-Atome nicht direkt miteinander verknüpft sind,
L¹⁻⁴ jeweils unabhängig voneinander H, F, Cl, OCF₃, CF₃, CH₃, CH₂F oder CHF₂H,
x 1 oder 2, z 0 oder 1.

9. FK-Medium nach nach einem oder mehreren der Ansprüche 1 bis 8, **dadurch gekennzeichnet, dass** die niedermolekulare Komponente eine oder mehrere Verbindungen ausgewählt aus folgenden Formeln enthält: 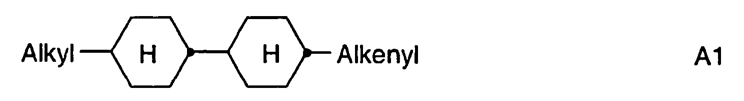 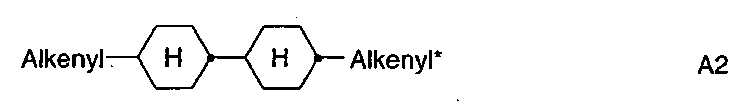 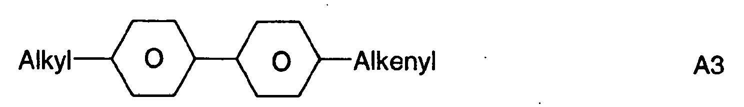 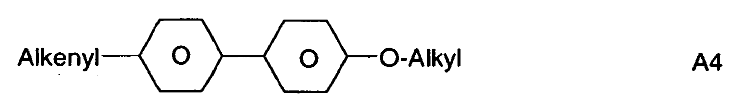 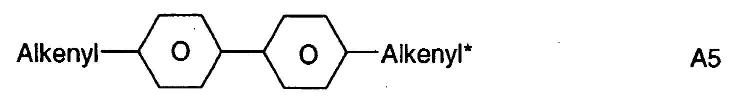 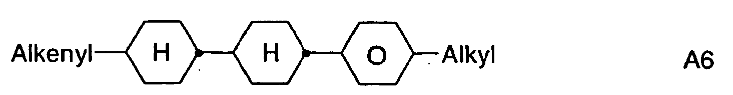 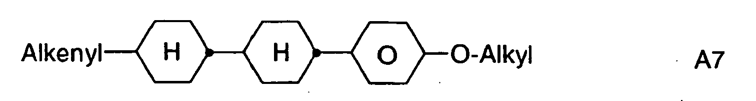 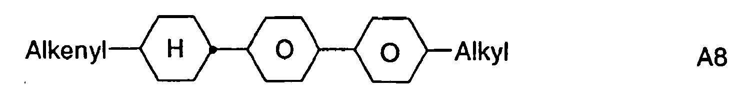 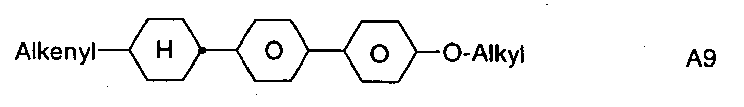 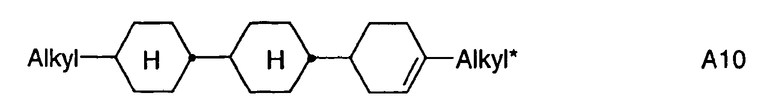 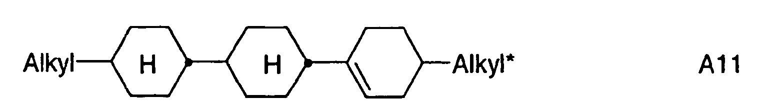 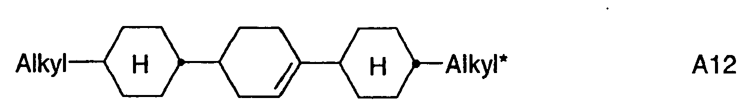 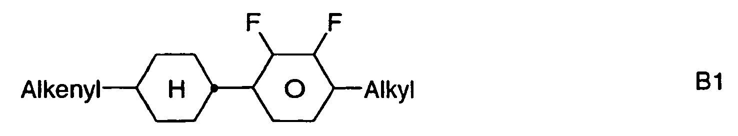 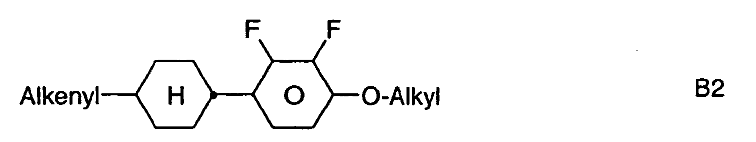 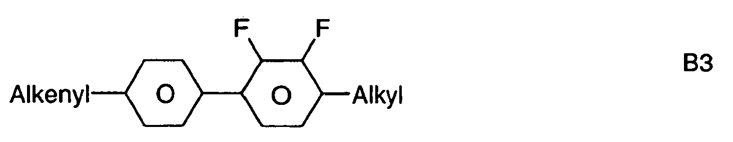 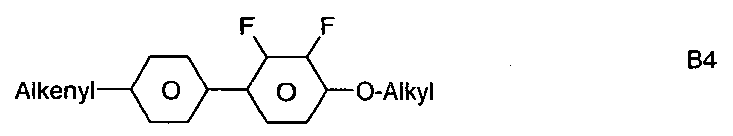 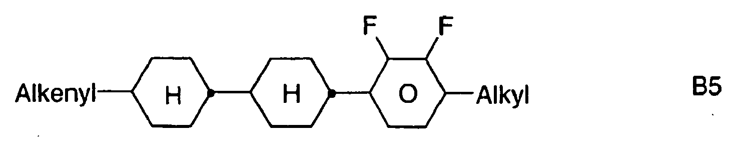 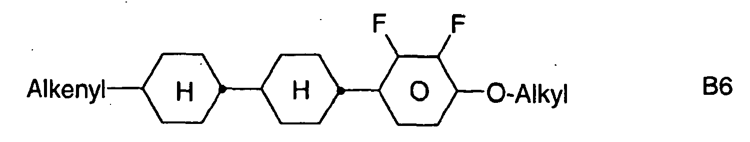 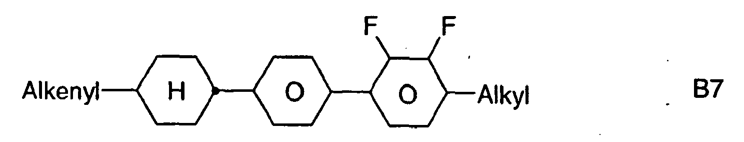 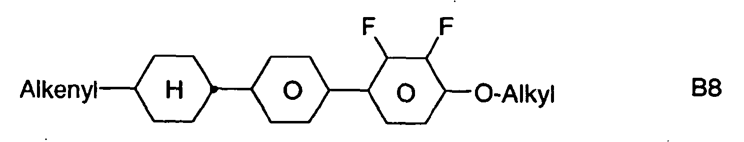 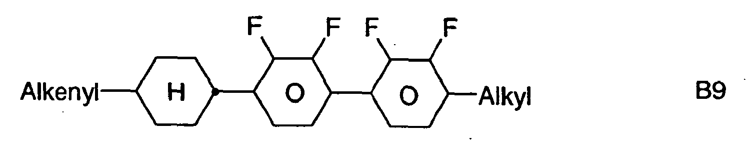 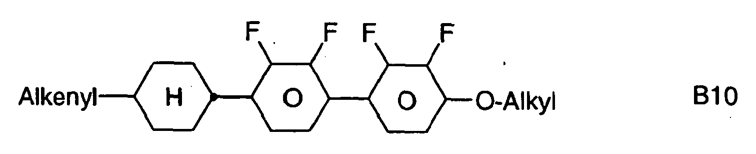 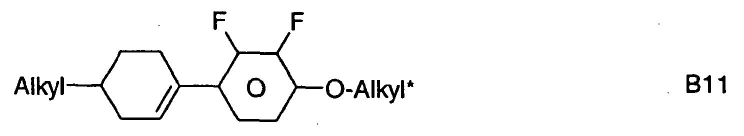 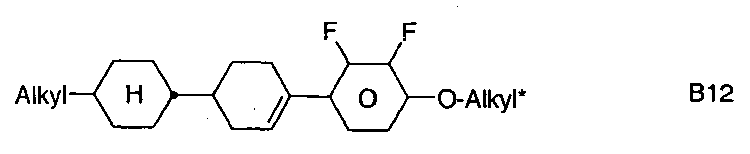 worin Alkyl einen geradkettigen Alkylrest mit 1-6 C-Atomen und Alkenyl und Alkenyl* jeweils unabhängig voneinander einen geradkettigen Alkenylrest mit 2-7 C-Atomen bedeuten.

10. FK-Medium nach einem oder mehreren der Ansprüche 1 bis 9, **dadurch gekennzeichnet, dass** die niedermolekulare Komponente eine oder mehrere Verbindungen ausgewählt aus folgenden Formeln enthält: 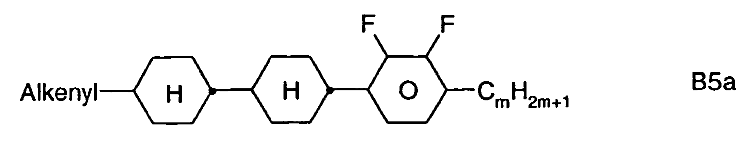 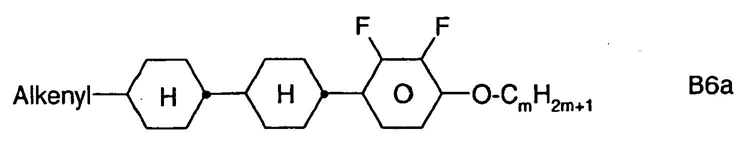 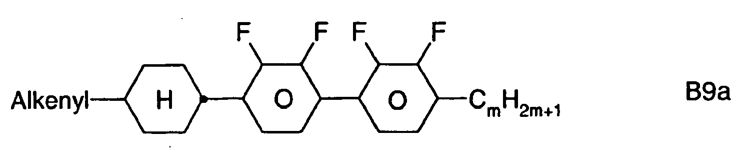 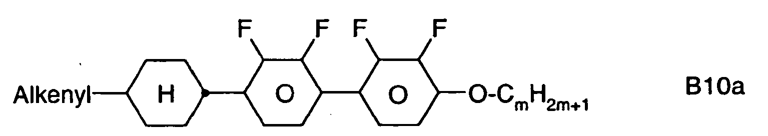 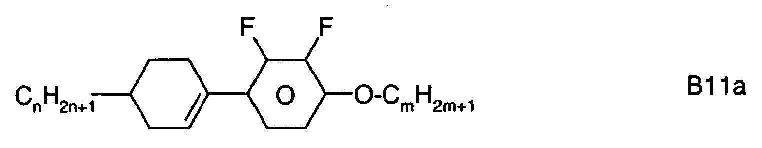 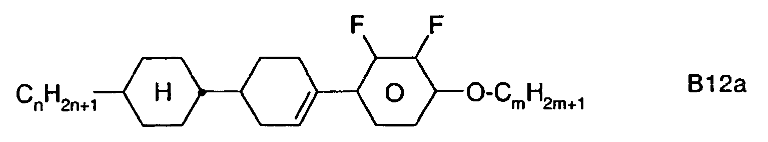 worin m und n jeweils unabhängig voneinander 1, 2, 3, 4, 5 oder 6, i 0, 1, 2 oder 3, R^{b1} H, CH₃ oder C₂H₅ und Alkenyl CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂- bedeutet.

11. FK-Medium nach einem oder mehreren der Ansprüche 1 bis 10, **dadurch gekennzeichnet, dass** es zusätzlich eine oder mehrere Verbindungen ausgewählt aus folgenden Formeln enthält: 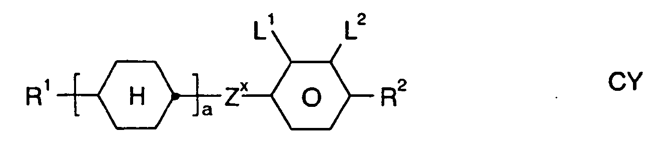 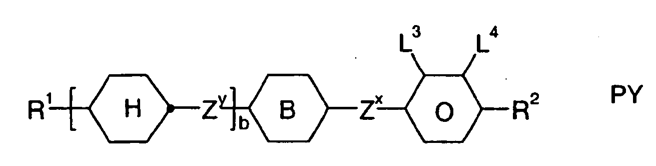 worin die einzelnen Reste folgende Bedeutung besitzen
a 1 oder 2,
b 0 oder 1, 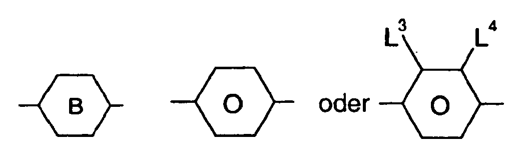
R¹ und R² jeweils unabhängig voneinander Alkyl mit 1 bis 12 C- Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{x} und Z^{y} jeweils unabhängig voneinander -CH=CH-, -CH₂O-, -OCH₂-, -CF₂O-, -OCF₂-, -O-, -CH₂-, -CH₂CH₂-, oder eine Einfachbindung,
L¹⁻⁴ jeweils unabhängig voneinander F, Cl, OCF₃, CF₃, CH₃, CH₂F, CHF₂.

12. FK-Medium nach einem oder mehreren der Ansprüche 1 bis 11, **dadurch gekennzeichnet, dass** es zusätzlich eine oder mehrere Verbindungen der folgenden Formel enthält: 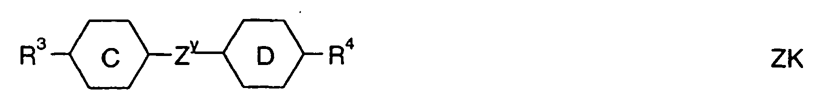 worin die einzelnen Reste folgende Bedeutung besitzen 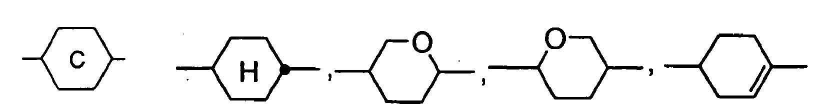 oder 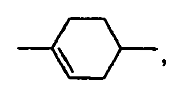 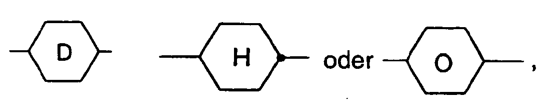
R³ und R⁴ jeweils unabhängig voneinander Alkyl mit 1 bis 12 C- Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{y} -CH₂CH₂-, -CH=CH-, -CF₂O-, -OCF₂-, -CH₂O-, -OCH₂-, -COO-, -OCO-, -C₂F₄-, -CF=CF- oder eine Einfachbindung.

13. Verwendung eines FK-Mediums nach einem oder mehreren der Ansprüche 1 bis 12 in FK-Anzeigen, insbesondere in PSA-VA-, PSA-OCB-, PS-IPS-, PS-FFS- und PS-TN-Anzeigen.

14. FK-Anzeige enthaltend ein FK-Medium nach einem oder mehreren der Ansprüche 1 bis 12.

15. FK-Anzeige nach Anspruch 14, **dadurch gekennzeichnet, dass** sie eine PSA-VA-, PSA-OCB-, PS-IPS-, PS-FFS- oder PS-TN-Anzeige ist.

16. FK-Anzeige nach Anspruch 14 oder 15, enthaltend eine FK-Zelle bestehend aus zwei Substraten, wobei mindestens ein Substrat lichtdurchlässig ist und mindestens ein Substrat eine Elektrodenschicht aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium unter Anlegen einer elektrischen Spannung.

17. Verfahren zur Herstellung eines FK-Mediums nach einem oder mehreren der Ansprüche 1 bis 12, indem man eine oder mehrere niedermolekulare flüssigkristalline Verbindungen mit einer oder mehreren polymerisierbaren Verbindungen wie in einem oder mehreren der Ansprüche 1 bis 12 definiert, und gegebenenfalls mit weiteren flüssigkristallinen Verbindungen und/oder Additiven, mischt.

## Claims

1. Liquid-crystal (LC) medium comprising one or more polymerisable compounds, where all polymerisable compounds present in the LC medium contain exclusively methacrylate groups as polymerisable groups, and one or more low-molecular-weight mesogenic or liquid-crystalline compounds containing one or more alkenyl groups which are stable to a polymerisation reaction under the conditions used for the polymerisation of the methacrylate groups.

2. LC medium according to Claim 1 comprising
a polymerisable component A) comprising one or more polymerisable compounds, where all polymerisable compounds present in the LC medium contain exclusively methacrylate group(s) as polymerisable group(s), and
a liquid-crystalline component B) comprising one or more low-molecular-weight compounds, including at least one mesogenic or liquid-crystalline compound containing one or more alkenyl groups which are stable to a polymerisation reaction under the conditions used for the polymerisation of the methacrylate groups.

3. LC medium according to Claim 1 or 2, **characterised in that** the polymerisable component comprises one or more polymerisable compounds containing one methacrylate group (monoreactive) and one or more polymerisable compounds containing two or more methacrylate groups (di- or multireactive).

4. LC medium according to one or more of Claims 1 to 3, **characterised in that** the polymerisable component comprises exclusively polymerisable compounds containing two methacrylate groups (direactive).

5. LC medium according to one or more of Claims 1 to 4, **characterised in that** the polymerisable compounds are selected from formula I:
R ^{a}-A¹-(Z¹-A²)ₘ₁-R^{b} I
in which the individual radicals have the following meanings:
A¹ and A² each, independently of one another, denote an aro- matic, heteroaromatic, alicyclic or heterocyclic group, preferably having 4 to 25 C atoms, which may also contain fused rings, and which is optionally mono- or polysubstituted by L,
Z¹ on each occurrence, identically or differently, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-. -CH=CH-, -CF=CF-, -C≡C-, -CH=CH-COO-, -OCO-CH=CH-, CR⁰R⁰⁰ or a single bond,
L, R^{a} and R^{b} each, independently of one another, denote H, halo- gen, SF₅, NO₂, a carbon group or hydrocarbon group, where the compounds contain at least one radical L, R^{a} and R^{b} which denotes or contains a group P-Sp-,
R⁰ and R⁰⁰ each, independently of one another, denote H or alkyl hav- ing 1 to 12 C atoms,
P denotes CH₂=C(CH₃)-COO-,
Sp denotes a spacer group or a single bond,
m1 denotes 0, 1, 2, 3 or 4,
n1 denotes 1, 2, 3 or 4.

6. LC medium according to Claim 5, **characterised in that** A¹, A², Z¹, Sp and m1 have the meaning indicated in Claim 5, and
A¹ and A² each, independently of one another, denote 1,4- phenylene, naphthalene-1,4-diyl or naphthalene-2,6- diyl, where, in addition, one or more CH groups in these groups may be replaced by N, cyclohexane-1,4-diyl, in which, in addition, one or more non-adjacent CH₂ groups may be replaced by O and/or S, 1,4-cyclo- hexenylene, bicyclo[1.1.1]pentane-1,3-diyl, bicyclo- [2.2.2]octane-1,4-diyl, spiro[3.3]heptane-2,6-diyl, piperi- dine-1,4-diyl, decahydronaphthalene-2,6-diyl, 1,2,3,4- tetrahydronaphthalene-2,6-diyl, indane-2,5-diyl or octa- hydro-4,7-methanoindane-2,5-diyl, where all these groups may be unsubstituted or mono- or polysubsti- tuted by L,
L denotes P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight- chain or branched alkyl, alkoxy, alkylcarbonyl, alkoxy- carbonyl, alkylcarbonyloxy or alkoxycarbonyloxy having 1 to 25 C atoms, in which, in addition, one or more H atoms may be replaced by F, Cl or P-Sp-,
Y¹ denotes halogen,
R^{x} denotes P-Sp-, H, halogen, straight-chain, branched or cyclic alkyl having 1 to 25 C atoms, in which, in addi- tion, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl or P-Sp-, an optionally substituted aryl or aryloxy group having 6 to 40 C atoms, or an optionally substituted heteroaryl or heteroaryloxy group having 2 to 40 C atoms,
R^{a} and R^{b} each, independently of one another, denote P-Sp-, H, L as defined above, or straight-chain or branched alkyl having 1 to 25 C atoms, in which, in addition, one or more non-adjacent CH₂ groups may each be replaced, independently of one another, by -C(R^{x})=C(R^{x})-, -C≡C-, -N(R^{x})-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN or P-Sp-,
where at least one of the radicals R^{a}, R^{b} and L contains at least one group P-Sp-.

7. LC medium according to Claim 5 or 6, **characterised in that** the polymerisable compounds are selected from the following sub-formulae: 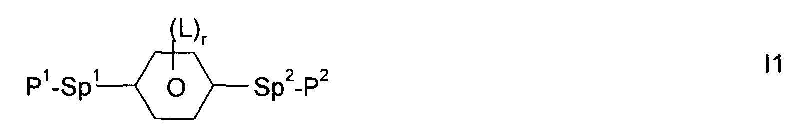 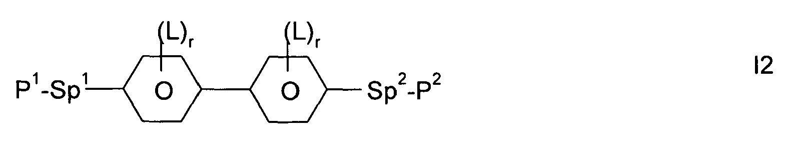 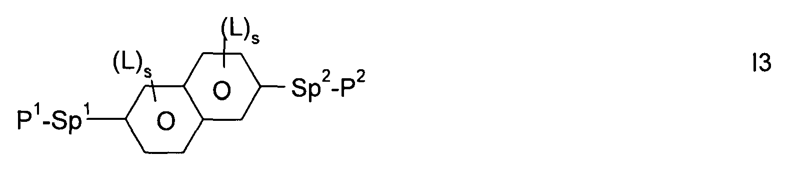 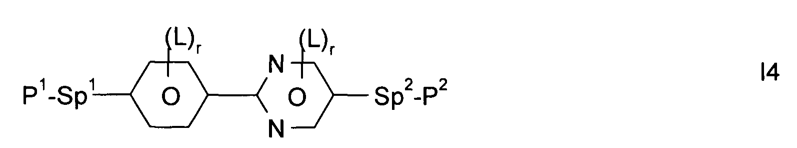 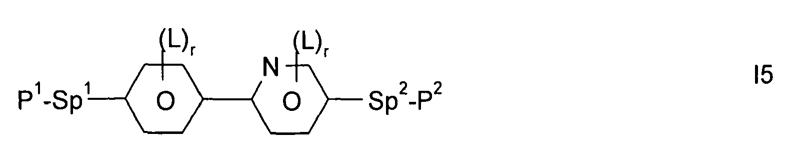 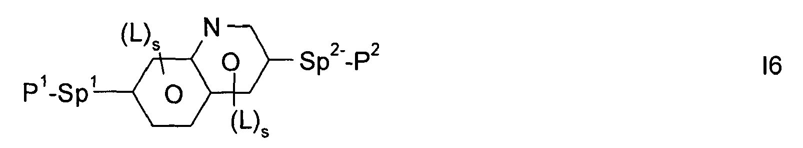 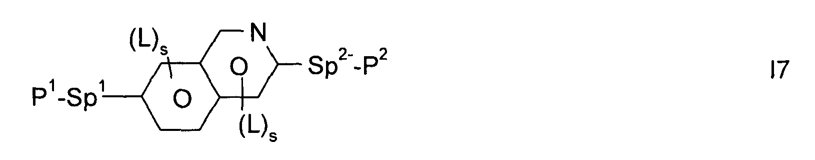 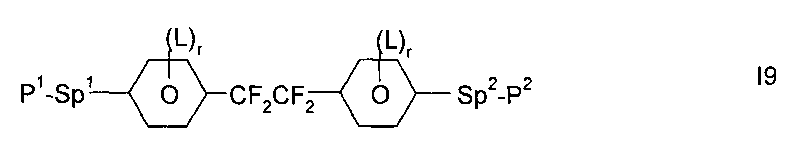 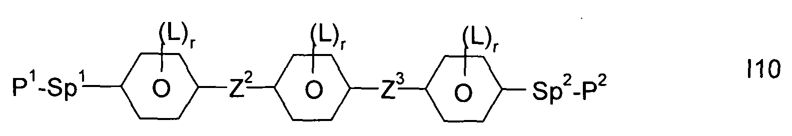 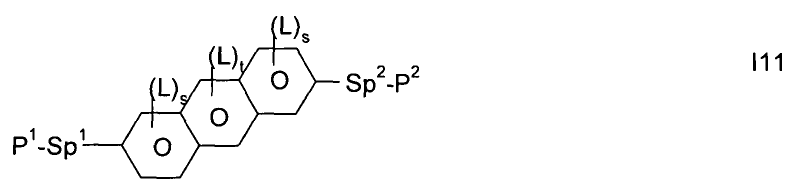 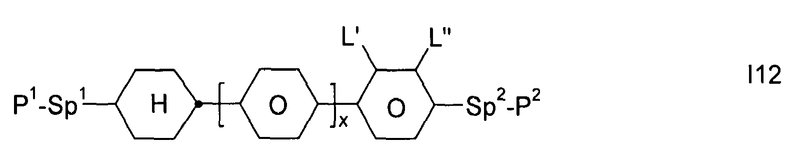 in which
P¹ and P² have the meaning indicated for P,
Sp¹ and Sp² have one of the meanings indicated for Sp or denote a single bond,
Z² and Z³ each, independently of one another, denote -COO- or -OCO-,
L has the meaning indicated in Claim 5,
L' and L" each, independently of one another, denote H, F or Cl,
r denotes 0, 1, 2, 3 or 4,
s denotes 0, 1, 2 or 3,
t denotes 0, 1 or 2,
x denotes 0 or 1, and
R^{y} and R^{z} each, independently of one another, denote H or CH₃.

8. LC medium according to one or more of Claims 1 to 7, **characterised in that** the low-molecular-weight component comprises one or more compounds selected from the following formulae: 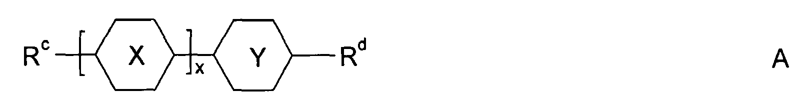 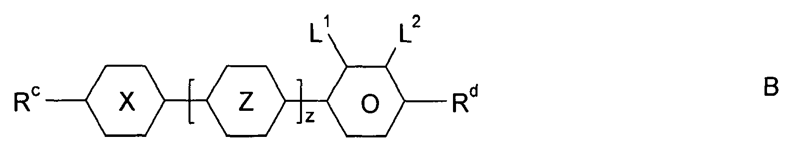 in which the individual radicals, on each occurrence identically or differently, each, independently of one another, have the following meaning: 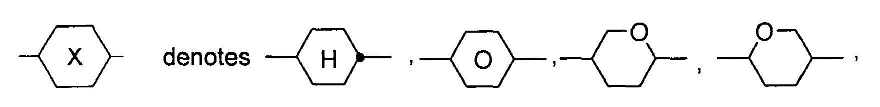 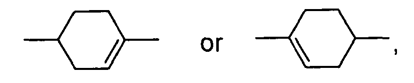 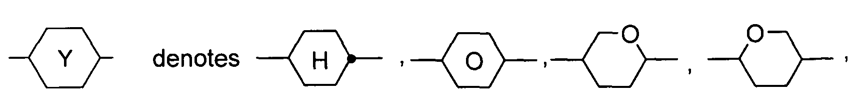 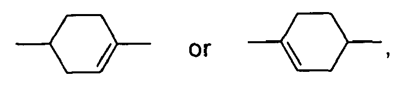 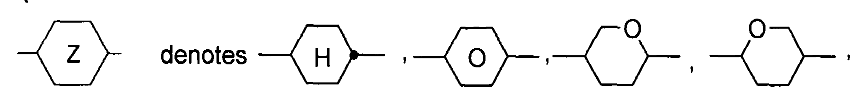 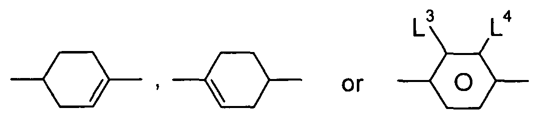
R^{c} denotes alkenyl having 2 to 9 C atoms or, if at least one of the rings X, Y and Z denotes cyclohexenyl, also one of the mean- ings of R^{d},
R^{d} denotes alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
L¹⁻⁴ each, independently of one another, denote H, F, Cl, OCF₃, CF₃, CH₃, CH₂F or CHF₂H,
x denotes 1 or 2,
z denotes 0 or 1.

9. LC medium according to one or more of Claims 1 to 8, **characterised in that** the low-molecular-weight component comprises one or more compounds selected from the following formulae: 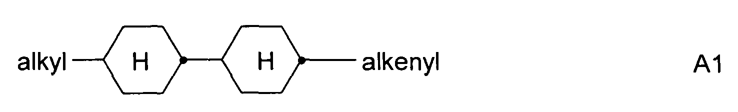 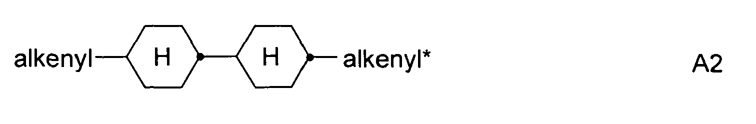 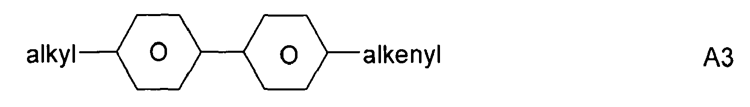 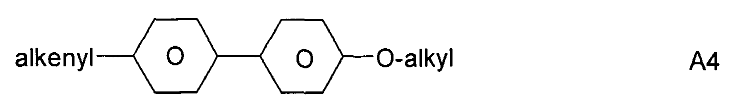 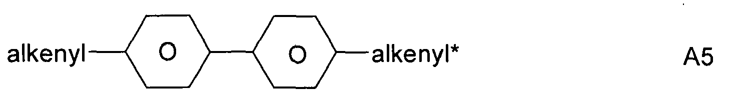 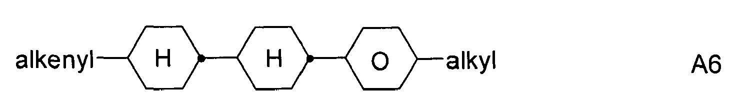 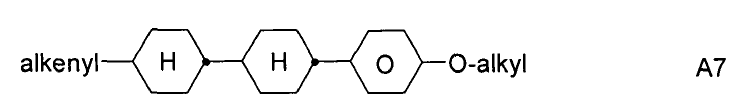 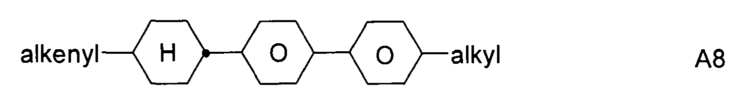 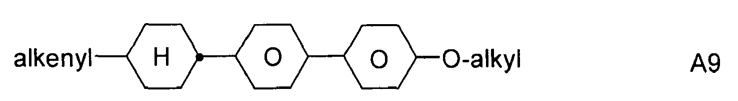 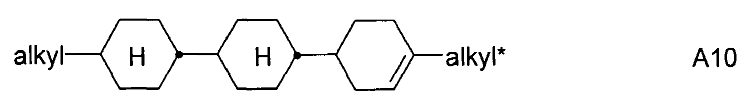 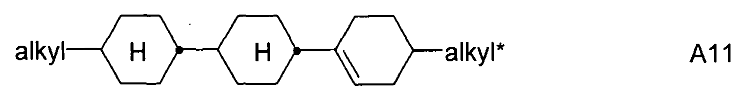 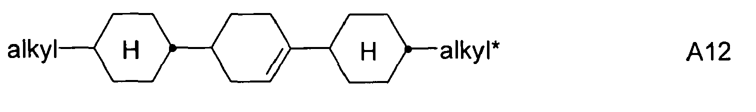 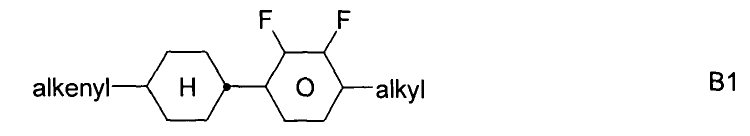 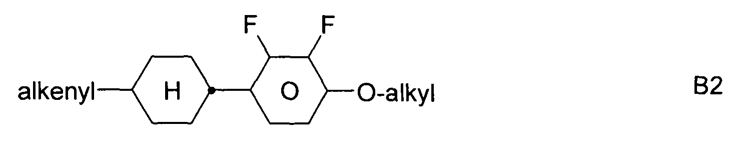 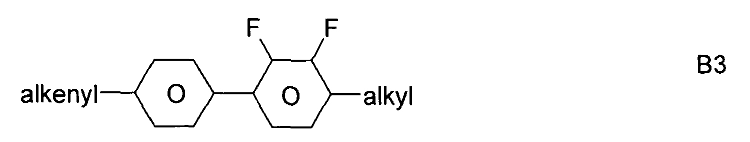 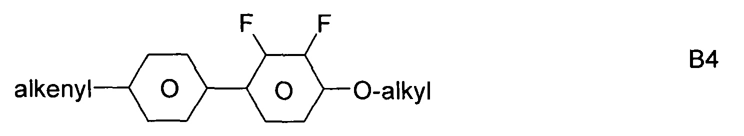 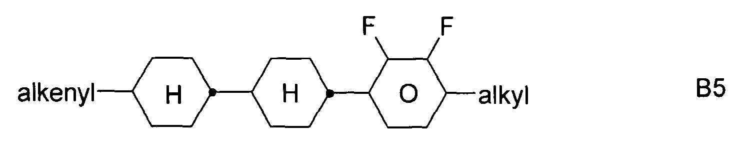 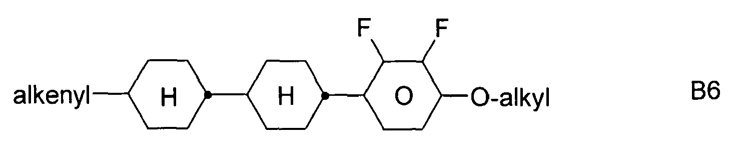 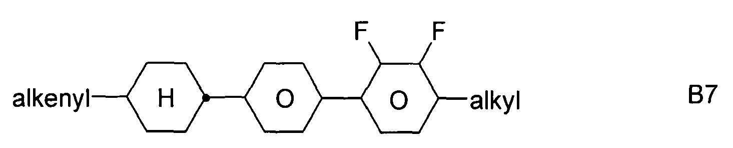 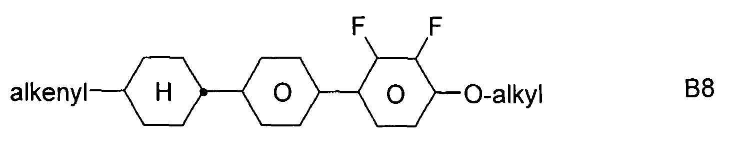 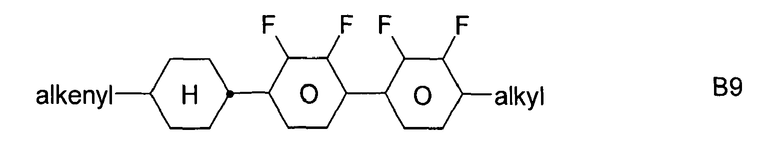 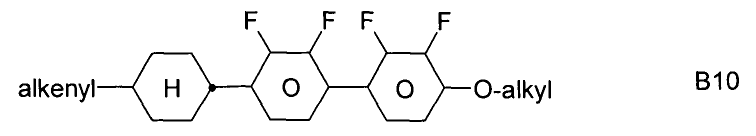 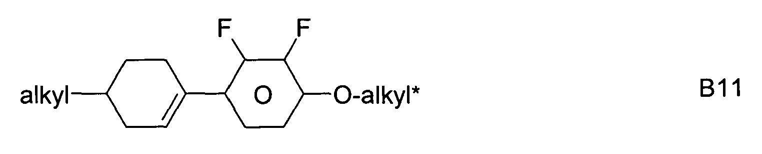 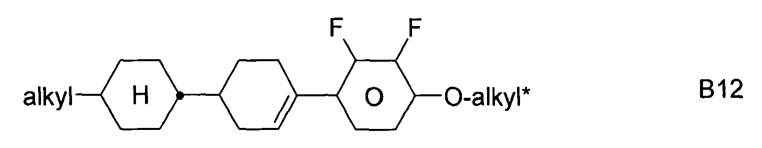 in which alkyl denotes a straight-chain alkyl radical having 1-6 C atoms, and alkenyl and alkenyl* each, independently of one another, denote a straight-chain alkenyl radical having 2-7 C atoms.

10. LC medium according to one or more of Claims 1 to 9, **characterised in that** the low-molecular-weight component comprises one or more compounds selected from the following formulae: 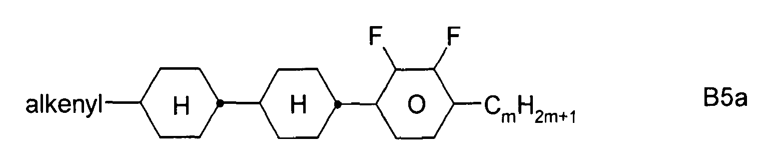 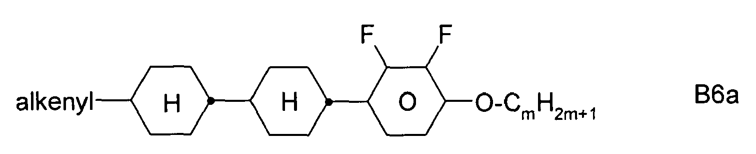 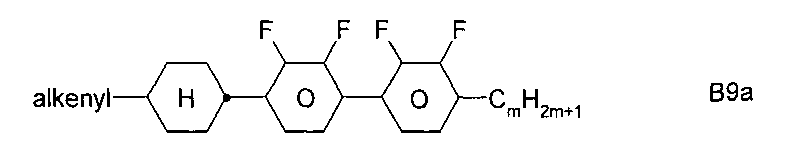 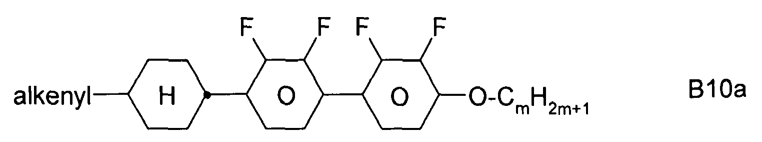 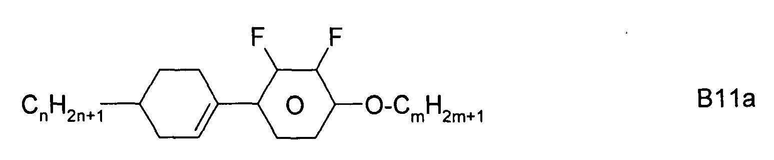 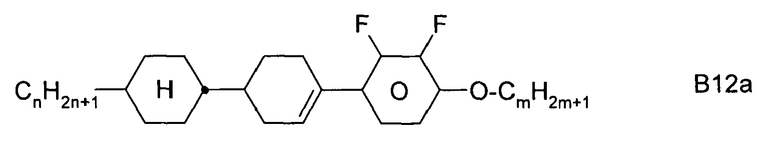 in which m and n each, independently of one another, denote 1, 2, 3, 4, 5 or 6, i denotes 0, 1, 2 or 3, R^{b1} denotes H, CH₃ or C₂H₅, and alkenyl denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

11. LC medium according to one or more of Claims 1 to 10, **characteised in thatr** it additionally comprises one or more compounds selected from the following formulae: 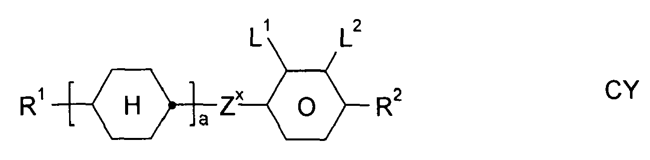 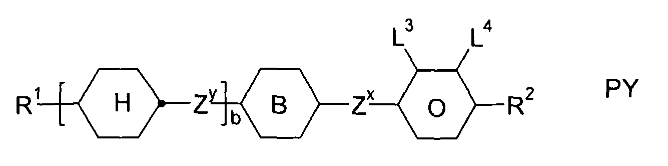 in which the individual radicals have the following meaning:
a denotes 1 or 2,
b denotes 0 or 1, 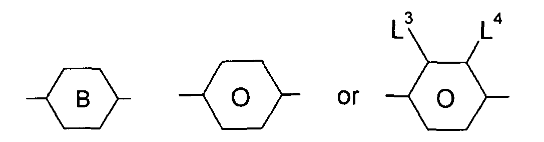
R¹ and R² each, independently of one another, denote alkyl having 1 to 12 C atoms, in which, in addition, one or two non- adjacent CH₂ groups may be replaced by -O-, -CH=CH-, -CO-, -OCO- or -COO- in such a way that O atoms are not linked directly to one another,
Z^{x} and Z^{y} each, independently of one another, denote -CH=CH-, -CH₂O-, -OCH₂-, -CF₂O-, -OCF₂-, -O-, -CH₂-, -CH₂CH₂- or a single bond,
L¹⁻⁴ each, independently of one another, denote F, Cl, OCF₃, CF₃, CH₃, CH₂F, CHF₂.

12. LC medium according to one or more of Claims 1 to 11, **characterised in that** it additionally comprises one or more compounds of the following formula: 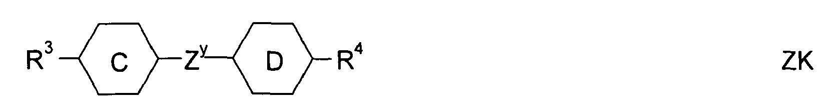 in which the individual radicals have the following meaning: 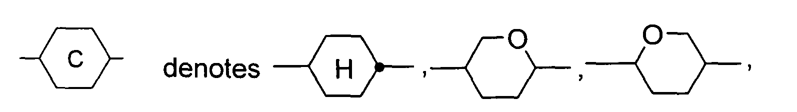 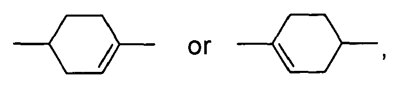 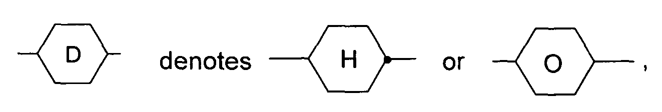
R³ and R⁴, each, independently of one another, denote alkyl having 1 to 12 C atoms, in which, in addition, one or two non- adjacent CH₂ groups may be replaced by -O-, -CH=CH-, -CO-, -OCO- or -COO- in such a way that O atoms are not linked directly to one another,
Z^{y} denotes -CH₂CH₂-, -CH=CH-, -CF₂O-, -OCF₂-, -CH₂O-, -OCH₂-, -COO-, -OCO-, -C₂F₄-, -CF=CF- or a single bond.

13. Use of an LC medium according to one or more of Claims 1 to 12 in LC displays, in particular in PSA-VA, PSA-OCB, PS-IPS, PS-FFS and PS-TN displays.

14. LC display containing an LC medium according to one or more of Claims 1 to 12.

15. LC display according to Claim 14, **characterised in that** it is a PSA-VA, PSA-OCB, PS-IPS, PS-FFS or PS-TN display.

16. LC display according to Claim 14 or 15, containing an LC cell consisting of two substrates, where at least one substrate is transparent to light and at least one substrate has an electrode layer, and a layer of an LC medium comprising a polymerised component and a low-molecular-weight component located between the substrates, where the polymerised component is obtainable by polymerisation of one or more polymerisable compounds between the substrates of the LC cell in the LC medium with application of an electrical voltage.

17. Process for the preparation of an LC medium according to one or more of Claims 1 to 12 by mixing one or more low-molecular-weight liquid-crystalline compounds with one or more polymerisable compounds as defined in one or more of Claims 1 to 12 and optionally with further liquid-crystalline compounds and/or additives.

## Revendications

1. Milieu cristallin liquide (LC) comprenant un ou plusieurs composés polymérisables, dans lequel tous les composés polymérisables présents dans le milieu LC contiennent exclusivement des groupes méthacrylate en tant que groupes polymérisables, et un ou plusieurs composés mésogènes ou cristallins liquides de poids moléculaire faible contenant un ou plusieurs groupes alkényle qui sont stables vis-à-vis d'une réaction de polymérisation sous les conditions utilisées pour la polymérisation des groupes méthacrylate.

2. Milieu LC selon la revendication 1 comprenant un composant polymérisable A) comprenant un ou plusieurs composés polymérisables, dans lequel tous les composés polymérisables présents dans le milieu LC contiennent exclusivement un/des groupe(s) méthacrylate en tant que groupe(s) polymérisable(s), et un composant cristallin liquide B) comprenant un ou plusieurs composés de poids moléculaire faible, incluant au moins un composé mésogène ou cristallin liquide contenant un ou plusieurs groupes alkényle qui sont stables vis-à-vis d'une réaction de polymérisation sous les conditions utilisées pour la polymérisation des groupes méthacrylate.

3. Milieu LC selon la revendication 1 ou 2, **caractérisé en ce que** le composant polymérisable comprend un ou plusieurs composés polymérisables contenant un groupe méthacrylate (monoréactif) et un ou plusieurs composés polymérisables contenant deux ou plusieurs groupe méthacrylate (di- ou multiréactifs).

4. Milieu LC selon une ou plusieurs des revendications 1 à 3, **caractérisé en ce que** le composant polymérisable comprend exclusivement des composés polymérisables contenant deux groupes méthacrylate (diréactifs).

5. Milieu LC selon une ou plusieurs des revendications 1 à 4, **caractérisé en ce que** les composés polymérisables sont sélectionnés parmi la formule I :
R^{a}-A¹-(Z¹-A²)ₘ₁-R^{b} I
dans laquelle les radicaux individuels présentent les significations qui suivent :
A¹ et A² représentent, chacun indépendamment de l'autre, un groupe, aromatique, hétéroaromatique, alicyclique ou hétérocyclique, de préférence comportant de 4 à 25 atomes de C, lequel peut également contenir des cycles fusionnés, et lequel est en option mono- ou polysubstitué par L,
Z¹ représente, pour chaque occurrence, de manière iden- tique ou différente, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
L, R^{a} et R^{b} représentent, chacun indépendamment des autres, H, halogène, SF₅, NO₂, un groupe carbone ou hydro- carbone, où les composés contiennent au moins un radical L, R^{a} et R^{b} qui représente ou contient un groupe P-Sp-,
R⁰ et R⁰⁰ représentent, chacun indépendamment de l'autre, H ou alkyle comportant de 1 à 12 atomes de C,
P représente CH₂=C(CH₃)-COO-,
Sp représente un groupe espaceur ou une liaison simple,
m1 représente 0, 1, 2, 3 ou 4,
n1 représente 1, 2, 3 ou 4.

6. Milieu LC selon la revendication 5, **caractérisé en ce que** A¹ A², Z¹, Sp et m1 présentent la signification indiquée dans la revendication 5, et
A¹ et A² représentent, chacun indépendamment de l'autre, 1,4- phénylène, naphtalène-1,4-diyle ou naphtalène-2,6- diyle, où, en outre, un ou plusieurs groupes CH dans ces groupes peut/peuvent être remplacé(s) par N, cyclohexane-1,4-diyle, où, en outre, un ou plusieurs groupes CH₂ non adjacents peut/peuvent être rem- placé(s) par O et/ou S, 1,4-cyclohexénylène, bicyclo- [1.1.1]pentane-1,3-diyle, bicyclo[2.2.2]octane-1,4-diyle, spiro[3.3]heptane-2,6-diyle, pipéridine-1,4-diyle, déca- hydronaphtalène-2,6-diyle, 1,2,3,4-tétrahydronaphta- lène-2,6-diyle, indane-2,5-diyle ou octahydro-4,7- méthanoindane-2,5-diyle, où tous ces groupes peuvent être non substitués ou mono- ou polysubstitués par L,
L représente P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué comportant de 6 à 20 atomes de C, ou alkyle, alcoxy, alkylcarbonyle, alcoxycarbonyle, alkyl- carbonyloxy ou alcoxycarbonyloxy en chaîne droite ou ramifié comportant de 1 à 25 atomes de C, où, en outre, un ou plusieurs atomes de H peut/peuvent être remplacé(s) par F, Cl ou P-Sp-,
Y¹ représente halogène,
R^{x} représente P-Sp-, H, halogène, alkyle en chaîne droite, ramifié ou cyclique comportant de 1 à 25 atomes de C, où, en outre, un ou plusieurs groupes CH₂ non adja- cents peut/peuvent être remplacé(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atomes de H peut/peuvent être remplacé(s) par F, Cl ou P-Sp-, un groupe aryle ou aryloxy en option substi- tué comportant de 6 à 40 atomes de C, ou un groupe hétéroaryle ou hétéroaryloxy en option substitué com- portant de 2 à 40 atomes de C,
R^{a} et R^{b} représentent, chacun indépendamment de l'autre, P-Sp-, H, L comme défini ci avant, ou alkyle en chaîne droite ou ramifié comportant de 1 à 25 atomes de C, où, en outre, un ou plusieurs groupes CH₂ non adja- cents peut/peuvent chacun être remplacé(s), indépen- damment les uns des autres, par -C(R^{x})=C(R^{x})-, -C≡C-, -N(R^{x})-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atomes de H peut/peuvent être rem- placé(s) par F, Cl, Br, I, CN ou P-Sp-,
où au moins l'un des radicaux R^{a}, R^{b} et L contient au moins un groupe P-Sp-.

7. Milieu LC selon la revendication 5 ou 6, **caractérisé en ce que** les composés polymérisables sont choisis parmi les sous-formules qui suivent : 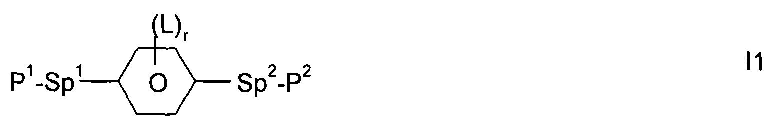 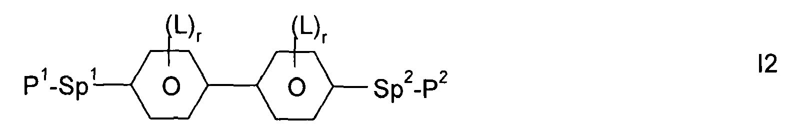 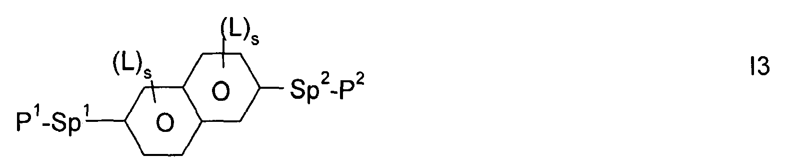 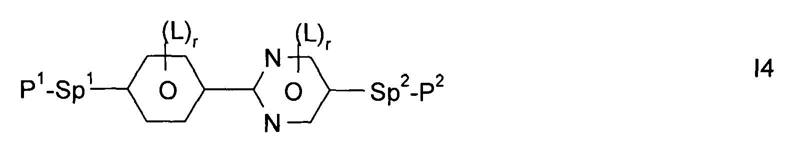 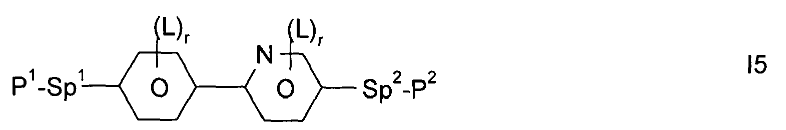 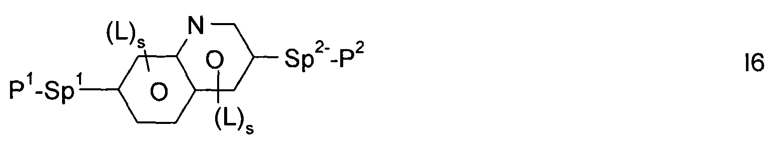 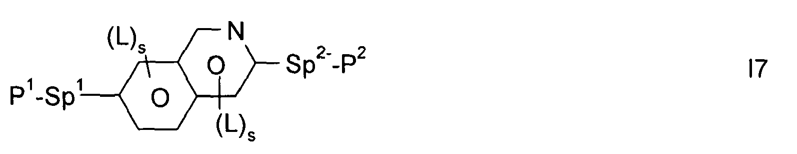 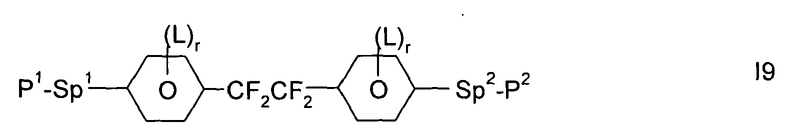 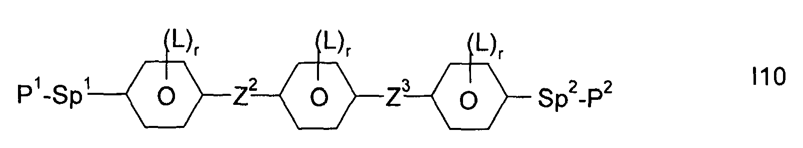 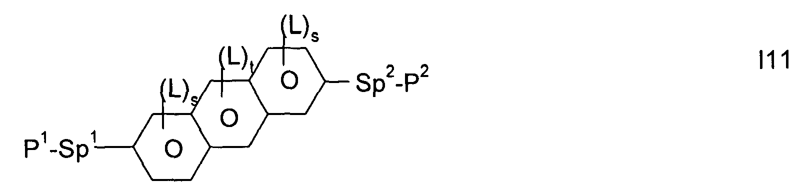 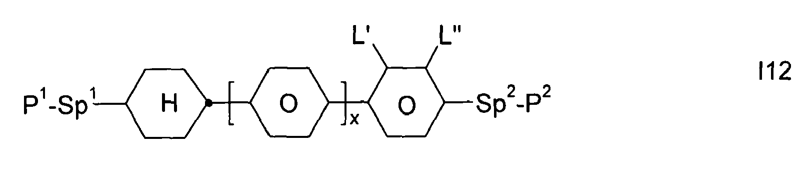 dans lesquelles
P¹ et P² présentent la signification indiquée pour P,
Sp¹ et Sp² présentent l'une des significations indiquées pour Sp ou représente une liaison simple,
Z² et Z³ représentent, chacun indépendamment de l'autre, -COO- ou -OCO-,
L présente la signification indiquée dans la revendication 5,
L' et L" représentent, chacun indépendamment de l'autre, H, F ou Cl,
r représente 0, 1, 2, 3 ou 4,
s représente 0, 1, 2 ou 3,
t représente 0, 1 ou 2,
x représente 0 ou 1, et
R^{y} et R^{z} représentent, chacun indépendamment de l'autre, H ou CH₃.

8. Milieu LC selon une ou plusieurs des revendications 1 to 7, **caractérisé en ce que** le composant de poids moléculaire faible comprend un ou plusieurs composés choisi parmi les formules qui suivent : 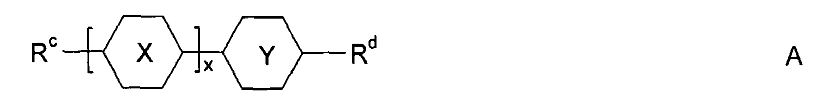 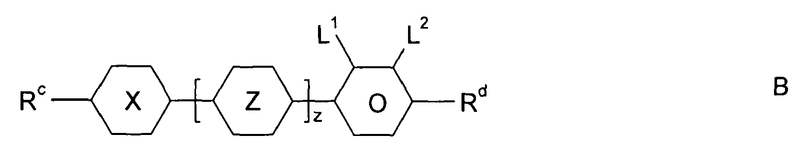 dans lesquelles les radicaux individuels, pour chaque occurrence de manière identique ou différente, chacun indépendamment des autres, présentent la signification qui suit : 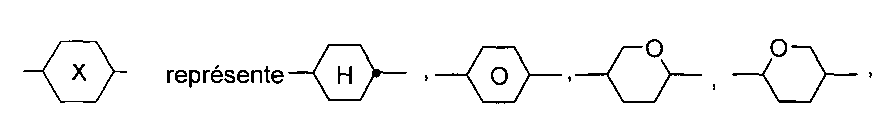 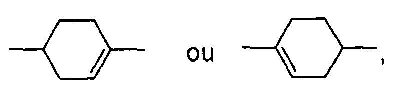 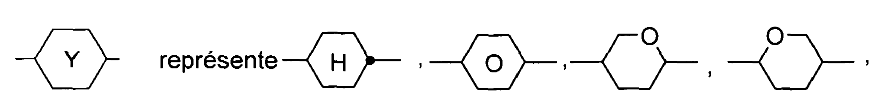 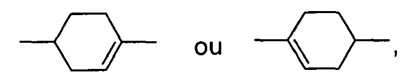 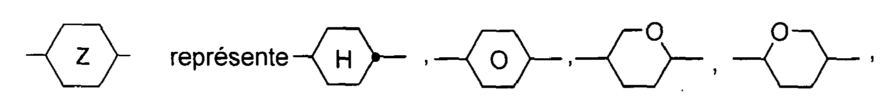 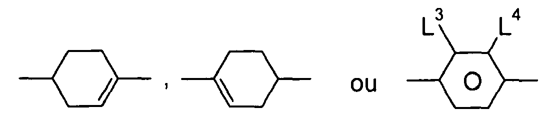
R^{c} représente alkényle comportant de 2 à 9 atomes de C ou, si au moins l'un des cycles X, Y et Z représente cyclohexényle, éga- lement l'une des significations de R^{d},
R^{d} représente alkyle comportant de 1 à 12 atomes de C, où, en outre, un ou deux groupes CH₂ non adjacents peut/peuvent être remplacé(s) par -O-, -CH=CH-, -CO-, -OCO- ou -COO- de telle sorte que des atomes de O ne soient pas liés directement les uns aux autres,
L¹⁻⁴ représentent, chacun indépendamment des autres, H, F, Cl, OCF₃, CF₃, CH₃, CH₂F ou CHF₂H,
x représente 1 ou 2,
z représente 0 ou 1.

9. Milieu LC selon une ou plusieurs des revendications 1 à 8, **caractérisé en ce que** le composant de poids moléculaire faible comprend un ou plusieurs composés choisi parmi les formules qui suivent : 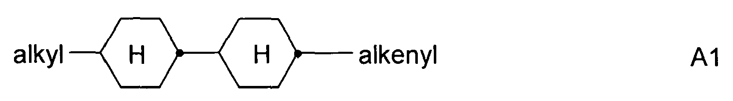 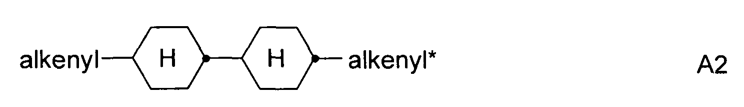 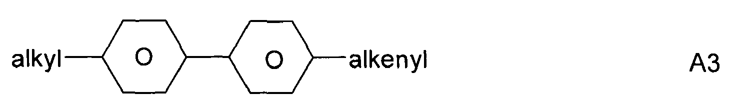 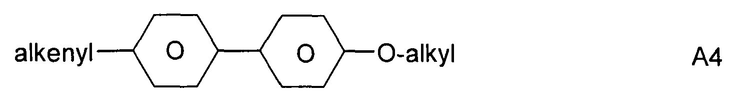 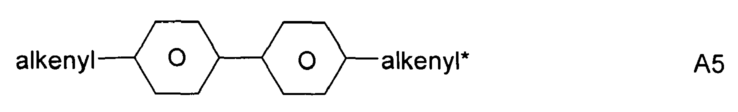 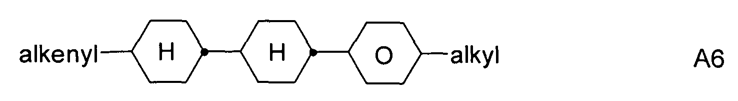 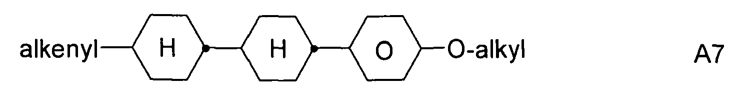 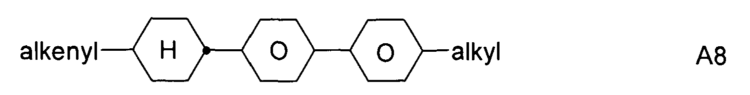 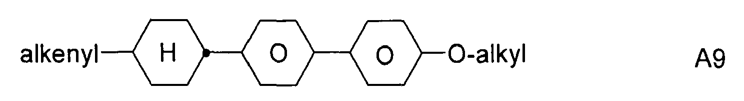 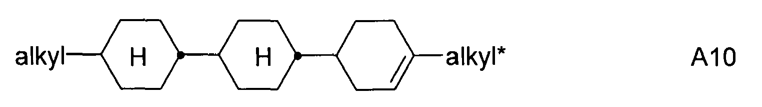 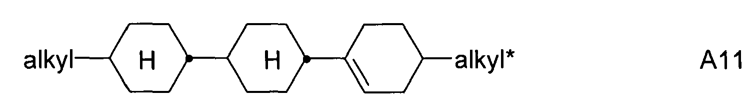 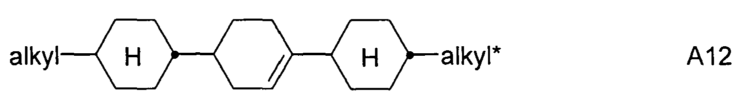 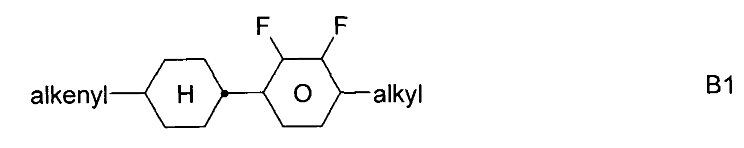 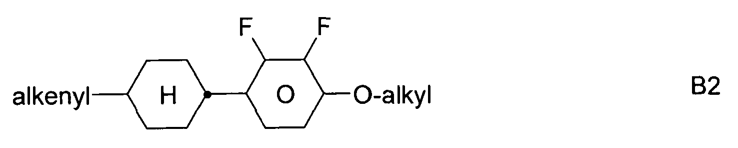 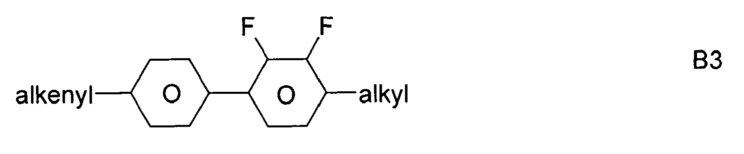 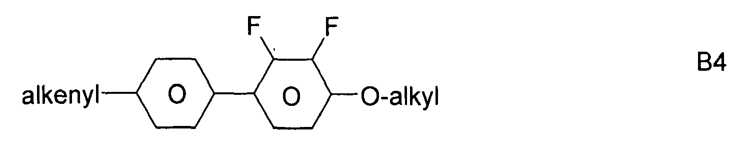 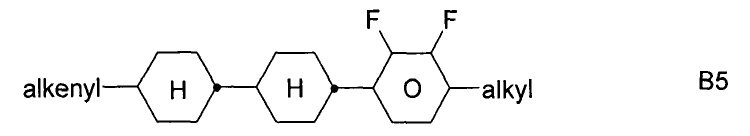 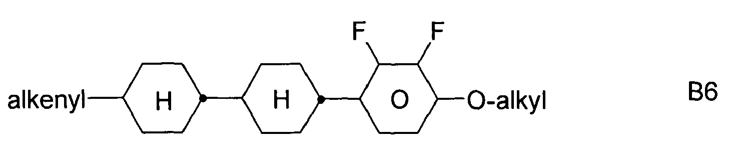 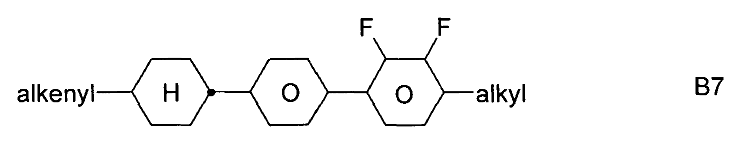 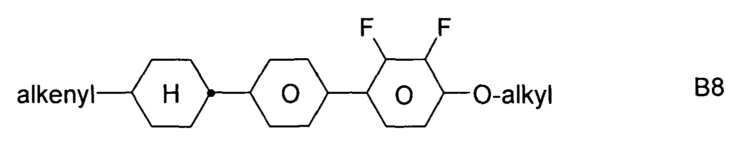 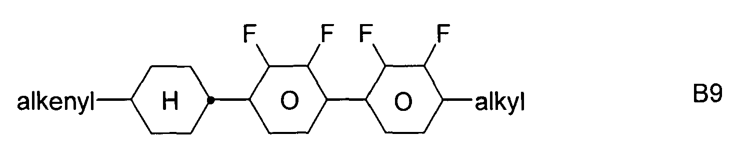 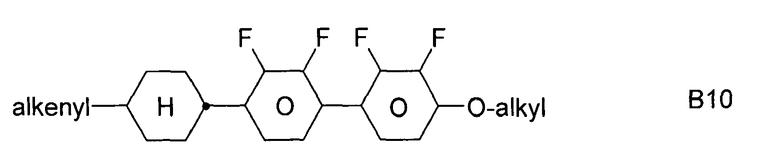 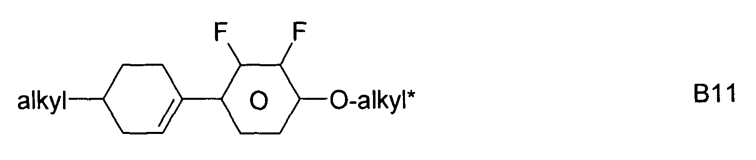 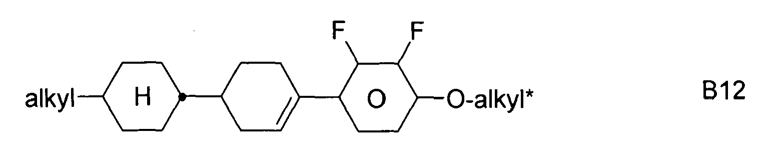 dans lesquelles alkyl représente un radical alkyle en chaîne droite comportant 1-6 atomes de C, et alkenyl et alkenyl* représentent, chacun indépendamment de l'autre, un radical alkényle en chaîne droite comportant 2-7 atomes de C.

10. Milieu LC selon une ou plusieurs des revendications 1 à 9, **caractérisé en ce que** le composant de poids moléculaire faible comprend un ou plusieurs composés choisi parmi les formules qui suivent : 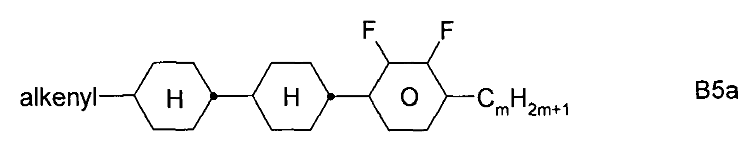 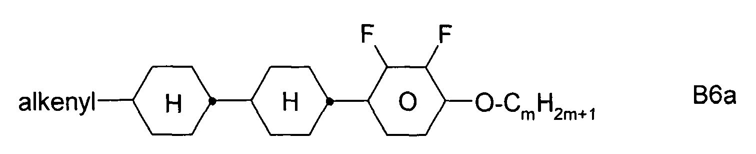 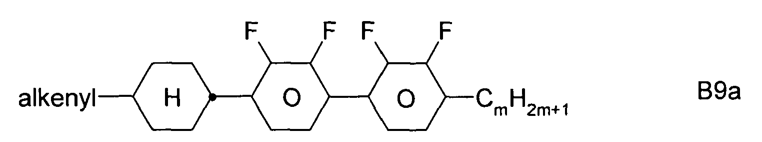 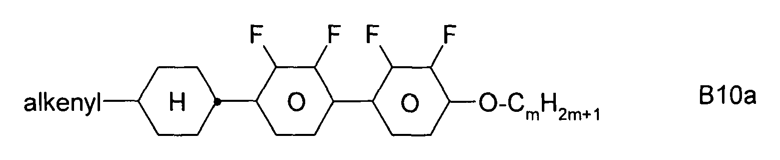 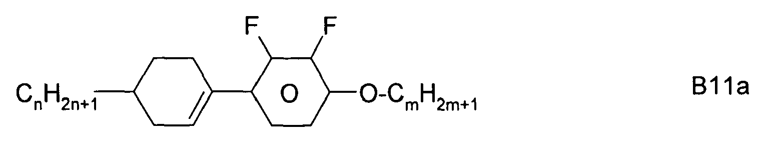 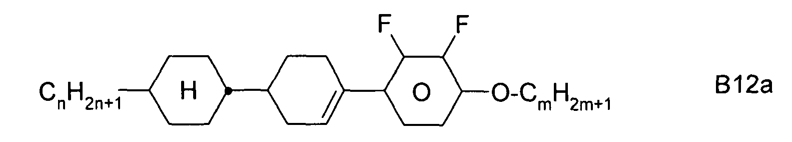 dans lesquelles m et n représentent, chacun indépendamment de l'autre, 1, 2, 3, 4, 5 ou 6, i représente 0, 1, 2 ou 3, R^{b1} représente H, CH₃ ou C₂H₅, et alkenyl représente CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- ou CH₃-CH=CH-(CH₂)₂-.

11. Milieu LC selon une ou plusieurs des revendications 1 à 10, **caractérisé en ce qu'**il comprend additionnellement un ou plusieurs composés choisi parmi les formules qui suivent : 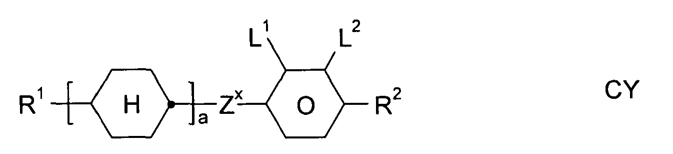 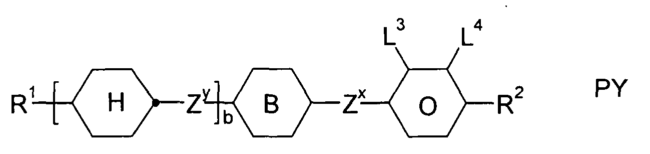 dans lesquelles les radicaux individuels présentent la signification qui suit :
a représente 1 ou 2,
b représente 0 ou 1, 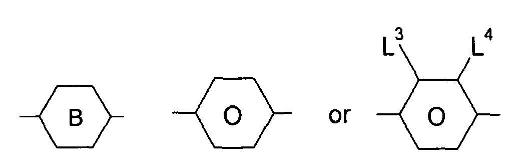
R¹ et R² représentent, chacun indépendamment de l'autre, alkyle comportant de 1 à 12 atomes de C, où, en outre, un ou deux groupes CH₂ non adjacents peut/peuvent être rem- placé(s) par -O-, -CH=CH-, -CO-, -OCO- ou -COO- de telle sorte que des atomes de O ne soient pas liés directe- ment les uns aux autres,
Z^{x} et Z^{y} représentent, chacun indépendamment de l'autre, -CH=CH-, -CH₂O-, -OCH₂-, -CF₂O-, -OCF₂-, -O-, -CH₂-, -CH₂CH₂- ou une liaison simple,
L¹⁻⁴ représentent, chacun indépendamment des autres, F, Cl, OCF₃, CF₃, CH₃, CH₂F, CHF₂.

12. Milieu LC selon une ou plusieurs des revendications 1 à 11, **caractérisé en ce qu'**il comprend additionnellement un ou plusieurs composés de la formule qui suit : 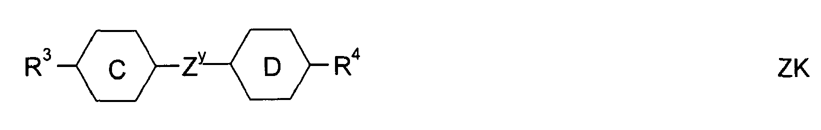 dans laquelle les radicaux individuels présentent la signification qui suit : 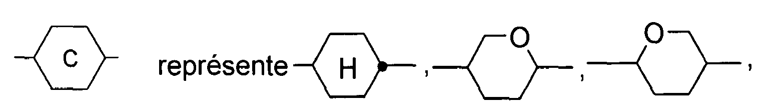 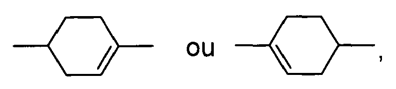 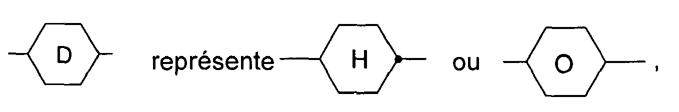
R³ et R⁴ représentent, chacun indépendamment de l'autre, alkyle comportant de 1 à 12 atomes de C, où, en outre, un ou deux groupes CH₂ non adjacents peut/peuvent être rem- placé(s) par -O-, -CH=CH-, -CO-, -OCO- ou -COO- de telle sorte que des atomes de O ne soient pas liés directe- ment les uns aux autres,
Z^{y} représente -CH₂CH₂-, -CH=CH-, -CF₂O-, -OCF₂-, -CH₂O-, -OCH₂-, -COO-, -OCO-, -C₂F₄-, -CF=CF- ou une liaison simple.

13. Utilisation d'un milieu LC selon une ou plusieurs des revendications 1 à 12 dans des affichages LC, en particulier dans des affichages PSA-VA, PSA-OCB, PS-IPS, PS-FFS et PS-TN.

14. Affichage LC contenant un milieu LC selon une ou plusieurs des revendications 1 à 12.

15. Affichage LC selon la revendication 14, **caractérisé en ce qu'**il s'agit d'un affichage PSA-VA, PSA-OCB, PS-IPS, PS-FFS ou PS-TN.

16. Affichage LC selon la revendication 14 ou 15, contenant une cellule LC constituée par deux substrats, où au moins un substrat est transparent à la lumière et au moins un substrat comporte une couche d'électrode, et une couche en un milieu LC comprenant un composant polymérisé et un composant de poids moléculaire faible, située entre les substrats, où le composant polymérisé peut être obtenu par polymérisation d'un ou de plusieurs composés polymérisables entre les substrats de la cellule LC dans le milieu LC à l'aide de l'application d'une tension électrique.

17. Procédé pour la préparation d'un milieu LC selon une ou plusieurs des revendications 1 à 12 en mélangeant un ou plusieurs composés cristallins liquides de poids moléculaire faible avec un ou plusieurs composés polymérisables comme définis dans une ou plusieurs des revendications 1 à 12 et en option, avec d'autres composés cristallins liquides et/ou additifs.
